# EUROPEAN PATENT APPLICATION

(11) **EP 2 993 914 A1**
(43) Date of publication of application: **09.03.2016**
(21) Application number: 13885095.3
(22) Date of filing: 18.10.2013
(51) Int. Cl.: H04Q 11/00

(54) **DATA TRANSMISSION METHOD, DEVICE AND SYSTEM**

(30) Priority: 24.05.2013 CN 201310196378
(71) Applicant: Huawei Technologies Co., Ltd., Longgang District Shenzhen, Guangdong 518129 (CN)
(72) Inventor: MA, Huixiao, Shenzhen Guangdong 518129 (CN); YANG, Xiaoling, Shenzhen Guangdong 518129 (CN); GENG, Dongyu, Shenzhen Guangdong 518129 (CN)
(74) Representative: Gill Jennings & Every LLP
(86) International application number: PCT/CN2013/085503
(87) International publication number: WO 2014/187070

(57) **Abstract**

A data transmission method, apparatus, and system can implement stable and reliable data transmission between Ethernet devices by using an optical switching device. The method includes: acquiring, by a transmit end device, first data; performing first scrambling processing on the first data by using a scrambler, so as to generate second data; generating, according to the second data, an optical data packet that includes an optical data frame, where the optical data frame includes a field of a first preamble; and sending an optical signal that carries the optical data packet to a optical switching device, so that the optical switching device performs switching processing on the optical signal, so as to send the optical data frame to a second Ethernet device. By adding a preamble in front of second data, an optical switching device and a receive end device can complete, by using the preamble, restoration and adjustment on a burst signal before the second data arrives, which can avoid a receiving error of an Ethernet device that can recognize only continuous signals.

## Description

This application claims priority to Chinese Patent Application No. 201310196378.9, filed with the Chinese Patent Office on May 24, 2013 and entitled "DATA TRANSMISSION METHOD, APPARATUS, AND SYSTEM", which is incorporated herein by reference in its entirety.

### TECHNICAL FIELD

The present invention relates to the communications field, and more specifically, to a data transmission method, apparatus, and system.

### BACKGROUND

Ethernet (Ethernet) is a networking technology of a computer local area network. An existing Ethernet technical standard specifies content that includes a connection line at a physical layer, an electrical signal, and a Media Access Control layer (MAC, Medium Access Control) protocol. Currently, Ethernet has been developed to support a transmission rate of 100GE, and is a most commonly applied local area network technology. An Ethernet adapter may work in two modes: half-duplex and full-duplex modes. In the half-duplex transmission mode, carrier sense multiple access with collision detection is implemented in Ethernet. A conventional shared local area network (LAN, Local Area Network) works in the half-duplex mode, and can transmit data only in a single direction at a same time. When data is transmitted in two directions at the same time, a collision is generated; therefore, working efficiency is quite low in the half-duplex transmission mode. In full-duplex transmission, a point-to-point connection is adopted, and no collision occurs in this arrangement because two independent lines can be used by them. In the full-duplex mode, for each full-duplex connection, only one port is used for point-to-point connection. The working efficiency is relatively low in the half-duplex transmission mode; therefore, a standard for a transmission rate over 10GE in an Ethernet protocol does not specify this working mode, and specifies only a point-to-point duplex working manner.

In order to implement the foregoing point-to-point communication, in the prior art, processing by an electrical switching device (also referred to as an electrical switch) is required in data transmission between Ethernet devices (also referred to as Ethernet clients), that is, Ethernet data packets from transmit end Ethernet clients 1, 2, and N need to be respectively switched to receive end Ethernet client M through the electrical switch at different moments. Receiving processing is first performed on these medium signals by a receiver module on an input side of the switch, and a to-be-switched MAC frame is obtained after the receiving processing. An electrical switching unit sends, according to a destination address of the MAC frame, the MAC frame to a corresponding output port for sending processing by a transmitter on the output port. MAC frames from different ports are sent by a same transmitter, thereby ensuring continuity of amplitude, phases, and frequencies of these packets. In addition, a sending process performed by an Ethernet transmitter is a continuous process. Therefore, it may be considered that communication between a receive end Ethernet client and an electrical switch is a communication in a point-to-point continuous mode.

With increasing demands for of bandwidth-hungry services, a switching network imposes an increasingly high requirement on a switching capacity. However, because of technology limitations of energy consumption, a backplane capacity, and the like, an electrical exchange cannot meet a requirement of an ever-increasing switching capacity.

Characterized by low energy consumption, a large capacity, and the like, an optical switching device (also referred to as an optical switch) draws increasing attention. Optical switching is one of key technologies for an all-optical network. In a modern communications network, an all-optical network is a development direction of a future broadband communications network.

It may be considered to replace an electrical switch with an optical switch. However, an optical switching technology is a multipoint-to-multipoint communication manner, that is, no processing is performed when signals from different transmit end Ethernet clients are being switched by an optical switch; therefore, signals that arrive at a receive end Ethernet client are sent by different transmitters, and these signals no longer remain continuous in time, frequency, amplitude, or phase, and are referred to as burst signals. A receive end of a standard medium signal receives signals in a continuous mode; therefore, a burst signal output after switching is incorrectly received by a conventional Ethernet client.

### SUMMARY

Embodiments of the present invention provide a data transmission method, apparatus, and system, which can implement stable and reliable data transmission between Ethernet devices by using an optical switching device.

According to a first aspect, a data transmission method is provided, and the method includes: acquiring, by a transmit end device, first data, where the first data is data to be sent by a first Ethernet device to a second Ethernet device; performing first scrambling processing on the first data by using a scrambler, so as to generate second data; generating, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and sending an optical signal that carries the optical data packet to an optical switching device, so that the optical switching device performs switching processing on the optical signal, so as to send the optical data frame to the second Ethernet device.

With reference to the first aspect, in a first implementation manner of the first aspect, the transmit end device is the first Ethernet device.

With reference to the first aspect and the foregoing implementation manner of the first aspect, in a second implementation manner of the first aspect, the transmit end device is a first preprocessing device corresponding to the first Ethernet device; and the acquiring, by a transmit end device, first data includes: receiving, by the first preprocessing device, a first Ethernet data packet to be sent by the first Ethernet device to the second Ethernet device, and acquiring the first data from the first Ethernet data packet.

With reference to the first aspect and the foregoing implementation manners of the first aspect, in a third implementation manner of the first aspect, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

With reference to the first aspect and the foregoing implementation manners of the first aspect, in a fourth implementation manner of the first aspect, the generating, according to the second data, an optical data packet that includes an optical data frame includes: generating, according to the second data and a destination address of the first data, an optical data packet that includes a tagged frame and an optical data frame, where the tagged frame is located before the optical data frame, the tagged frame includes a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

With reference to the first aspect and the foregoing implementation manner of the first aspect, in a fifth implementation manner of the first aspect, the first preset value is determined according to a first time, and the first time is a time required for performing restoration and adjustment on a burst signal by the second Ethernet device or a first post-processing device corresponding to the second Ethernet device; and the second preset value is determined according to a second time, and the second time is a time required for performing restoration and adjustment on a burst signal by the optical switching device.

With reference to the first aspect and the foregoing implementation manner of the first aspect, in a sixth implementation manner of the first aspect, the restoration and adjustment on a burst signal include at least one of the following adjustments: enabling of a laser, restoration of a transimpedance amplifier, restoration of a limiting amplifier, and recovery of a burst-mode clock.

With reference to the first aspect and the foregoing implementation manner of the first aspect, in a seventh implementation manner of the first aspect, the generating, according to the second data and the destination address of the first data, an optical data packet that includes a tagged frame and an optical data frame includes: generating, according to the second data and the destination address of the first data, the optical data packet that includes the tagged frame and the optical data frame, where an interval or an idle field exists between the optical data frame and the tagged frame, and a length of the interval or the idle field is greater than or equal to a third preset value.

With reference to the first aspect and the foregoing implementation manner of the first aspect, in an eighth implementation manner of the first aspect, the third preset value is determined according to a third time, and the third time is a time required for determining a switching policy by the optical switching device according to the tagged frame.

According to a second aspect, a data transmission method is provided, and the method includes: receiving, by an optical switching device, an optical signal that is sent by a transmit end device and carries an optical data packet, where the optical data packet is generated according to second data, the second data is generated after the transmit end device performs first scrambling processing on first data by using a scrambler, the first data is data to be sent by a first Ethernet device to a second Ethernet device, the optical data packet includes an optical data frame, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; performing beam splitting processing on the optical signal, so as to acquire a first optical signal and a second optical signal; determining a switching policy according to the optical data packet carried in the first optical signal; and performing switching processing on the second optical signal according to the switching policy, so as to send the optical data frame in the second optical signal to the second Ethernet device.

With reference to the second aspect, in a first implementation manner of the second aspect, the determining a switching policy according to the optical data packet carried in the first optical signal includes: after restoration and adjustment are performed on a burst signal according to the first preamble carried in the first optical signal, acquiring the second data from the first optical signal according to the data start character and the data end character; performing first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; determining an output port of the second optical signal according to a destination address of the first data, where the output port is corresponding to the second Ethernet device; determining an availability time period of a path between an input port and the output port of the second optical signal according to a length of the first data, where the input port is corresponding to the transmit end device; and determining the switching policy according to the output port and the availability time period.

With reference to the second aspect and the foregoing implementation manner of the first aspect, in a second implementation manner of the second aspect, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

With reference to the second aspect and the foregoing implementation manner of the second aspect, in a third implementation manner of the second aspect, the optical data packet further includes a tagged frame, the tagged frame is located before the optical data frame and includes a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate a destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame; and the determining a switching policy according to the optical data packet carried in the first optical signal includes: after restoration and adjustment are performed on a burst signal according to the second preamble carried in the first optical signal, acquiring the destination address indicator and the data frame length indicator from the first optical signal according to the destination address start character; determining an output port of the second optical signal according to the destination address indicator, where the output port is corresponding to the second Ethernet device; determining an availability time period of a path between an input port and the output port of the second optical signal according to the data frame length indicator, where the input port is corresponding to the transmit end device; and determining the switching policy according to the output port and the availability time period.

With reference to the second aspect and the foregoing implementation manner of the second aspect, in a fourth implementation manner of the second aspect, an interval or an idle field exists between the optical data frame and the tagged frame, and a length of the interval or the idle field is greater than or equal to a third preset value.

With reference to the second aspect and the foregoing implementation manner of the second aspect, in a fifth implementation manner of the second aspect, the third preset value is determined according to a third time, and the third time is a time required for determining the switching policy by the optical switching device according to the tagged frame.

With reference to the second aspect and the foregoing implementation manners of the second aspect, in a sixth implementation manner of the second aspect, the first preset value is determined according to a first time, and the first time is a time required for performing restoration and adjustment on a burst signal by the second Ethernet device or a first post-processing device corresponding to the second Ethernet device; and the second preset value is determined according to a second time, and the second time is a time required for performing restoration and adjustment on a burst signal by the optical switching device.

With reference to the second aspect and the foregoing implementation manners of the second aspect, in a seventh implementation manner of the second aspect, the restoration and adjustment on a burst signal include at least one of the following adjustments: enabling of a laser, restoration of a transimpedance amplifier, restoration of a limiting amplifier, and recovery of a burst-mode clock.

According to a third aspect, a data transmission method is provided, and the method includes: receiving, by a receive end device, an optical data frame sent by an optical switching device, where the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; after restoration and adjustment are performed on a burst signal according to the first preamble, acquiring the second data according to the data start character and the data end character; and performing first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

With reference to the third aspect, in a first implementation manner of the third aspect, the receive end device is the second Ethernet device.

With reference to the third aspect and the foregoing implementation manner of the third aspect, in a second implementation manner of the third aspect, the receive end device is a first post-processing device corresponding to the second Ethernet device; and the method further includes: generating a second Ethernet data packet according to the first data; and sending the second Ethernet data packet to the second Ethernet device.

With reference to the third aspect and the foregoing implementation manners of the third aspect, in a third implementation manner of the third aspect, the first preset value is determined according to a first time, and the first time is a time required for performing restoration and adjustment on a burst signal by the second Ethernet device or the first post-processing device corresponding to the second Ethernet device; or the first preset value is determined according to the first time and a second time, and the second time is a time required for performing restoration and adjustment on a burst signal by the optical switching device.

With reference to the third aspect and the foregoing implementation manners of the third aspect, in a fourth implementation manner of the third aspect, the restoration and adjustment on a burst signal include at least one of the following adjustments: enabling of a laser, restoration of a transimpedance amplifier, restoration of a limiting amplifier, and recovery of a burst-mode clock.

According to a fourth aspect, a data transmission method is provided, and the method includes: receiving, by an optical switching device, a first Ethernet data packet to be sent by a first Ethernet device to a second Ethernet device, and acquiring first data from the first Ethernet data packet, where the first data includes a Media Access Control layer MAC data frame or an Internet Protocol IP data packet; performing first scrambling processing on the first data by using a scrambler, so as to generate second data; generating an optical data frame according to the second data, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; determining an output port of the optical data frame according to a destination address of the first data, where the output port is corresponding to the second Ethernet device; determining an availability time period of a path between an input port and the output port of the optical data frame according to a length of the optical data frame, where the input port is corresponding to the first Ethernet device; determining a switching policy according to the output port and the availability time period; performing switching processing on the optical data frame according to the switching policy; after restoration and adjustment are performed on a burst signal according to the first preamble of the optical data frame obtained after the switching processing, acquiring, according to the data start character and the data end character of the optical data frame obtained after the switching processing, the second data from the optical data frame obtained after the switching processing; performing first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generating a second Ethernet data packet according to the first data; and sending the second Ethernet data packet to the second Ethernet device.

With reference to the fourth aspect, in a first implementation manner of the fourth aspect, the first preset value is determined according to a time required for performing restoration and adjustment on a burst signal by the optical switching device.

With reference to the fourth aspect and the foregoing implementation manner of the fourth aspect, in a second implementation manner of the fourth aspect, the restoration and adjustment on a burst signal include at least one of the following adjustments: enabling of a laser, restoration of a transimpedance amplifier, restoration of a limiting amplifier, and recovery of a burst-mode clock.

According to a fifth aspect, a data transmission apparatus is provided, and the apparatus includes: an acquiring unit, configured to acquire first data, where the first data is data to be sent by a first Ethernet device to a second Ethernet device; a scrambling unit, configured to perform first scrambling processing on the first data by using a scrambler, so as to generate second data; a generating unit, configured to generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and a sending unit, configured to send an optical signal that carries the optical data packet to an optical switching device, so that the optical switching device performs switching processing on the optical signal, so as to send the optical data frame to the second Ethernet device.

With reference to the fifth aspect, in a first implementation manner of the fifth aspect, the data transmission apparatus is the first Ethernet device.

With reference to the fifth aspect and the foregoing implementation manner of the fifth aspect, in a second implementation manner of the fifth aspect, the apparatus further includes: a receiving unit, configured to receive a first Ethernet data packet that the first Ethernet device needs to send to the second Ethernet device; where the acquiring unit is specifically configured to acquire the first data from the first Ethernet data packet.

With reference to the fifth aspect and the foregoing implementation manners of the fifth aspect, in a third implementation manner of the fifth aspect, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

With reference to the fifth aspect and the foregoing implementation manners of the fifth aspect, in a fourth implementation manner of the fifth aspect, the generating unit is further configured to generate, according to the second data and a destination address of the first data, an optical data packet that includes a tagged frame and an optical data frame, where the tagged frame is located before the optical data frame, the tagged frame includes a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

With reference to the fifth aspect and the foregoing implementation manner of the fifth aspect, in a fifth implementation manner of the fifth aspect, the first preset value is determined according to a first time, and the first time is a time required for performing restoration and adjustment on a burst signal by the second Ethernet device or a first post-processing device corresponding to the second Ethernet device; and the second preset value is determined according to a second time, and the second time is a time required for performing restoration and adjustment on a burst signal by the optical switching device.

With reference to the fifth aspect and the foregoing implementation manner of the fifth aspect, in a sixth implementation manner of the fifth aspect, the restoration and adjustment on a burst signal include at least one of the following adjustments: enabling of a laser, restoration of a transimpedance amplifier, restoration of a limiting amplifier, and recovery of a burst-mode clock.

With reference to the fifth aspect and the foregoing implementation manner of the fifth aspect, in a seventh implementation manner of the fifth aspect, the generating unit is specifically configured to generate, according to the second data, the optical data packet that includes the optical data frame and the tagged frame, where an interval or an idle field exists between the optical data frame and the tagged frame, and a length of the interval or the idle field is greater than or equal to a third preset value.

With reference to the fifth aspect and the foregoing implementation manner of the fifth aspect, in an eighth implementation manner of the fifth aspect, the third preset value is determined according to a third time, and the third time is a time required for determining a switching policy by the optical switching device according to the tagged frame.

According to a sixth aspect, a data transmission apparatus is provided, and the apparatus includes: a receiving unit, configured to receive an optical signal that is sent by a transmit end device and carries an optical data packet, where the optical data packet is generated according to second data, the second data is generated after the transmit end device performs first scrambling processing on first data by using a scrambler, the first data is data to be sent by a first Ethernet device to a second Ethernet device, the optical data packet includes an optical data frame, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; a beam splitting unit, configured to perform beam splitting processing on the optical signal, so as to acquire a first optical signal and a second optical signal; a control unit, configured to determine a switching policy according to the optical data packet carried in the first optical signal; and a switching unit, configured to perform switching processing on the second optical signal according to the switching policy, so as to send the optical data frame in the second optical signal to the second Ethernet device by using a sending unit.

With reference to a sixth aspect, in a first implementation manner of the sixth aspect, the control unit is specifically configured to: after restoration and adjustment are performed on a burst signal according to the first preamble carried in the first optical signal, acquire the second data from the first optical signal according to the data start character and the data end character; configured to perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; configured to determine an output port of the second optical signal according to a destination address of the first data, where the output port is corresponding to the second Ethernet device; configured to determine an availability time period of a path between an input port and the output port of the second optical signal according to a length of the first data, where the input port is corresponding to the transmit end device; and configured to determine the switching policy according to the output port and the availability time period.

With reference to the sixth aspect and the foregoing implementation manner of the sixth aspect, in a second implementation manner of the sixth aspect, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

With reference to the sixth aspect and the foregoing implementation manner of the sixth aspect, in a third implementation manner of the sixth aspect, the optical data packet further includes a tagged frame, the tagged frame is located before the optical data frame and includes a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate a destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame; and the control unit is specifically configured to: after restoration and adjustment are performed on a burst signal according to the second preamble carried in the first optical signal, acquire the destination address indicator and the data frame length indicator from the first optical signal according to the destination address start character; configured to determine an output port of the second optical signal according to the destination address indicator, where the output port is corresponding to the second Ethernet device; configured to determine an availability time period of a path between an input port and the output port of the second optical signal according to the data frame length indicator, where the input port is corresponding to the transmit end device; and configured to determine the switching policy according to the output port and the availability time period.

With reference to the sixth aspect and the foregoing implementation manner of the sixth aspect, in a fourth implementation manner of the sixth aspect, an interval or an idle field exists between the optical data frame and the tagged frame, and a length of the interval or the idle field is greater than or equal to a third preset value.

With reference to the sixth aspect and the foregoing implementation manner of the sixth aspect, in a fifth implementation manner of the sixth aspect, the third preset value is determined according to a third time, and the third time is a time required for determining the switching policy by the optical switching device according to the tagged frame.

With reference to the sixth aspect and the foregoing implementation manners of the sixth aspect, in a sixth implementation manner of the sixth aspect, the first preset value is determined according to a first time, and the first time is a time required for performing restoration and adjustment on a burst signal by the second Ethernet device or a first post-processing device corresponding to the second Ethernet device; and the second preset value is determined according to a second time, and the second time is a time required for performing restoration and adjustment on a burst signal by the optical switching device.

With reference to the sixth aspect and the foregoing implementation manners of the sixth aspect, in a seventh implementation manner of the sixth aspect, the restoration and adjustment on a burst signal include at least one of the following adjustments: enabling of a laser, restoration of a transimpedance amplifier, restoration of a limiting amplifier, and recovery of a burst-mode clock.

According to a seventh aspect, a data transmission apparatus is provided, and the apparatus includes: a receiving unit, configured to receive an optical data frame sent by an optical switching device, where the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; an acquiring unit, configured to: after restoration and adjustment are performed on a burst signal according to the first preamble, acquire the second data according to the data start character and the data end character; and a descrambling unit, configured to perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

With reference to the seventh aspect, in a first implementation manner of the seventh aspect, the receive end device is the second Ethernet device.

With reference to the seventh aspect and the foregoing implementation manner of the seventh aspect, in a second implementation manner of the seventh aspect, the apparatus further includes: a generating unit, configured to generate a second Ethernet data packet according to the first data; and a sending unit, configured to send the second Ethernet data packet to the second Ethernet device.

With reference to the seventh aspect and the foregoing implementation manners of the seventh aspect, in a third implementation manner of the seventh aspect, the first preset value is determined according to a first time, and the first time is a time required for performing restoration and adjustment on a burst signal by the second Ethernet device or a first post-processing device corresponding to the second Ethernet device; or the first preset value is determined according to the first time and a second time, and the second time is a time required for performing restoration and adjustment on a burst signal by the optical switching device.

With reference to the seventh aspect and the foregoing implementation manners of the seventh aspect, in a fourth implementation manner of the seventh aspect, the restoration and adjustment on a burst signal include at least one of the following adjustments: enabling of a laser, restoration of a transimpedance amplifier, restoration of a limiting amplifier, and recovery of a burst-mode clock.

According to an eighth aspect, a data transmission apparatus is provided, and the apparatus includes: a receiving unit, configured to: receive a first Ethernet data packet to be sent by a first Ethernet device to a second Ethernet device, and acquire first data from the first Ethernet data packet, where the first data includes a Media Access Control layer MAC data frame or an Internet Protocol IP data packet; a scrambling unit, configured to perform first scrambling processing on the first data by using a scrambler, so as to generate second data; a first generating unit, configured to generate an optical data frame according to the second data, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; a control unit, configured to determine an output port of the optical data frame according to a destination address of the first data, where the output port is corresponding to the second Ethernet device; configured to determine an availability time period of a path between an input port and the output port of the optical data frame according to a length of the optical data frame, where the input port is corresponding to the first Ethernet device; configured to determine a switching policy according to the output port and the availability time period; and configured to perform switching processing on the optical data frame according to the switching policy; an acquiring unit, configured to: after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing; a descrambling unit, configured to perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; a second generating unit, configured to generate a second Ethernet data packet according to the first data; and a sending unit, configured to send the second Ethernet data packet to the second Ethernet device.

With reference to the eighth aspect, in a first implementation manner of the eighth aspect, the first preset value is determined according to a time required for performing restoration and adjustment on a burst signal by the optical switching device.

With reference to the eighth aspect and the foregoing implementation manner of the eighth aspect, in a second implementation manner of the eighth aspect, the restoration and adjustment on a burst signal include at least one of the following adjustments: enabling of a laser, restoration of a transimpedance amplifier, restoration of a limiting amplifier, and recovery of a burst-mode clock.

According to a ninth aspect, a data transmission system is provided, and the system includes: at least two Ethernet devices; at least one first preprocessing device corresponding to a first Ethernet device, where the preprocessing device is configured to: acquire first data, where the first data is data to be sent by the first Ethernet device to a second Ethernet device; perform first scrambling processing on the first data by using a scrambler, so as to generate second data; generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and send an optical signal that carries the optical data packet to an optical switching device; the optical switching device, configured to: receive the optical signal sent by the first preprocessing device; perform beam splitting processing on the optical signal, so as to acquire a first optical signal and a second optical signal; determine a switching policy according to the optical data packet carried in the first optical signal; and perform switching processing on the second optical signal according to the switching policy, so as to send the optical data frame in the second optical signal to the second Ethernet device; and at least one first post-processing device corresponding to the second Ethernet device, where the first post-processing device is configured to: receive the optical data frame sent by the optical switching device; after restoration and adjustment are performed on a burst signal according to the first preamble, acquire the second data according to the data start character and the data end character; perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generate a second Ethernet data packet according to the first data; and send the second Ethernet data packet to the second Ethernet device.

According to a tenth aspect, a data transmission system is provided, and the system includes at least two Ethernet devices and an optical switching device; where a first Ethernet device is configured to: determine first data that is to be sent to a second Ethernet device, where the first data includes a Media Access Control layer MAC data frame or an Internet Protocol IP data packet; perform first scrambling processing on the first data by using a scrambler, so as to generate second data; generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and send an optical signal that carries the optical data packet to the optical switching device; the optical switching device is configured to: receive the optical signal sent by the first Ethernet device; perform beam splitting processing on the optical signal, so as to acquire a first optical signal and a second optical signal; determine a switching policy according to the optical data packet carried in the first optical signal; and perform switching processing on the second optical signal according to the switching policy, so as to send the optical data frame in the second optical signal to the second Ethernet device; and the second Ethernet device is configured to: receive the optical data frame sent by the optical switching device; after restoration and adjustment are performed on a burst signal according to the first preamble, acquire the second data according to the data start character and the data end character; and perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

According to an eleventh aspect, a data transmission system is provided, and the system includes at least two Ethernet devices and an optical switching device; where the optical switching device is configured to: receive a first Ethernet data packet to be sent by a first Ethernet device to a second Ethernet device; acquire first data from the first Ethernet data packet, where the first data includes a Media Access Control layer MAC data frame or an Internet Protocol IP data packet; perform first scrambling processing on the first data by using a scrambler, so as to generate second data; generate an optical data frame according to the second data, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; determine an output port of the optical data frame according to a destination address of the first data, where the output port is corresponding to the second Ethernet device; determine an availability time period of a path between an input port and the output port of the optical data frame according to a length of the optical data frame, where the input port is corresponding to the first Ethernet device; determine a switching policy according to the output port and the availability time period; perform switching processing on the optical data frame according to the switching policy; after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing; perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generate a second Ethernet data packet according to the first data; and send the second Ethernet data packet to the second Ethernet device.

According to the data transmission method, apparatus, and system in the embodiments of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

### BRIEF DESCRIPTION OF DRAWINGS

FIG. 1 is a schematic flowchart of a data transmission method according to an embodiment of the present invention;
FIG. 2 is an interaction diagram of a data transmission method according to an embodiment of the present invention;
FIG. 3 is a schematic diagram of scrambling processing according to an embodiment of the present invention;
FIG. 4 is a schematic diagram of a structure of an optical data frame according to an embodiment of the present invention;
FIG. 5 is a schematic structural diagram of an optical switching device according to an embodiment of the present invention;
FIG. 6 is a schematic diagram of a structure of a tagged frame according to an embodiment of the present invention;
FIG. 7 is a schematic diagram of a structure of an optical data packet according to an embodiment of the present invention;
FIG. 8 is another interaction diagram of a data transmission method according to an embodiment of the present invention;
FIG. 9 is a schematic flowchart of a data transmission method according to another embodiment of the present invention;
FIG. 10 is a schematic flowchart of a data transmission method according to still another embodiment of the present invention;
FIG. 11 is a schematic flowchart of a data transmission method according to yet another embodiment of the present invention;
FIG. 12 is a schematic structural diagram of a data transmission apparatus according to an embodiment of the present invention;
FIG. 13 is a schematic structural diagram of a data transmission apparatus according to another embodiment of the present invention;
FIG. 14 is a schematic structural diagram of a data transmission apparatus according to still another embodiment of the present invention;
FIG. 15 is a schematic structural diagram of a data transmission apparatus according to yet another embodiment of the present invention;
FIG. 16 is a schematic structural diagram of a data transmission device according to an embodiment of the present invention;
FIG. 17 is a schematic structural diagram of a data transmission device according to another embodiment of the present invention;
FIG. 18 is a schematic structural diagram of a data transmission device according to still another embodiment of the present invention;
FIG. 19 is a schematic structural diagram of a data transmission device according to yet another embodiment of the present invention;
FIG. 20 is a schematic structural diagram of a data transmission system according to an embodiment of the present invention;
FIG. 21 is a schematic structural diagram of a data transmission system according to another embodiment of the present invention; and
FIG. 22 is a schematic structural diagram of a data transmission system according to still another embodiment of the present invention.

### DESCRIPTION OF EMBODIMENTS

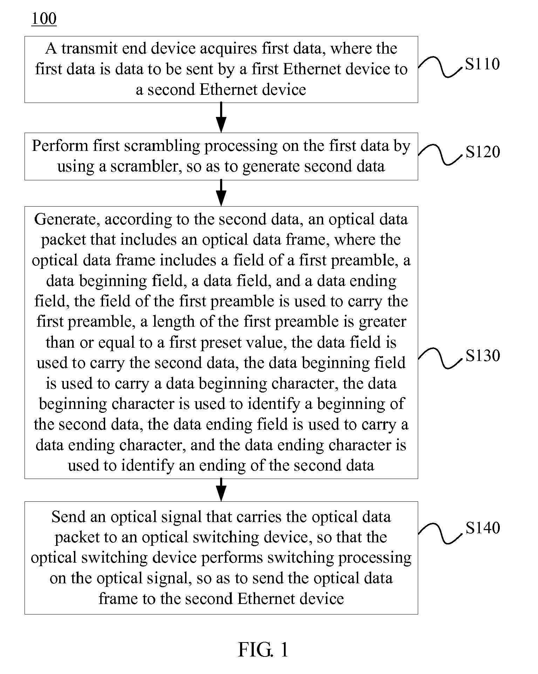

FIG. 1 shows a schematic flowchart of a data transmission method 100 described from a perspective of a transmit end device according to an embodiment of the present invention. As shown in FIG. 1, the method 100 includes:
S110. The transmit end device acquires first data, where the first data is data to be sent by a first Ethernet device to a second Ethernet device.

During implementation, the first data may include a Media Access Control layer MAC data frame or an Internet Protocol IP data packet.

S120. Perform first scrambling processing on the first data by using a scrambler, so as to generate second data, where the scrambler is in a preset first initial state before starting the first scrambling processing and after completing the first scrambling processing.

S130. Generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data.

S140. Send an optical signal that carries the optical data packet to an optical switching device, so that the optical switching device performs switching processing on the optical signal, so as to send the optical data frame to the second Ethernet device.

Technical solutions in the present invention may be applied to an Ethernet communications system. In addition, in the Ethernet system, point-to-point communication between Ethernet devices (or Ethernet client devices) is implemented by using an optical switching device. Specifically, in the existing Ethernet communications system, data exchange between the Ethernet client devices is performed by using an Ethernet data packet carried in an optical signal or an electrical signal. As described in the background, when optical switching processing is being performed on the Ethernet data packet by using the existing optical switching device, a data loss may occur. Therefore, in this embodiment of the present invention, before the foregoing optical switching processing is performed, format conversion processing (the process is subsequently described in detail) is performed on the data (including a MAC data frame or an Internet Protocol (IP, Internet Protocol) data packet in the Ethernet data packet) that needs to be exchanged and is carried in the foregoing Ethernet data packet, so as to avoid data loss. A signal (an optical signal or an electrical signal used to carry the foregoing data) obtained after the foregoing optical switching processing is a burst signal, and an existing Ethernet client device cannot accurately receive the burst signal; therefore, in this embodiment of the present invention, after the foregoing optical switching processing is performed, format restoration processing needs to be performed on the foregoing data obtained after the format conversion processing, so as to restore the data to a signal that can be accurately received by the existing Ethernet client device, that is, a signal that complies with an existing Ethernet standard (the IEEE 802.3 standard formulated by IEEE) (the process is subsequently described in detail).

In this embodiment of the present invention, a device that performs the foregoing format conversion processing may be an independent device, which is located between a transmit end Ethernet client device and the optical switching device in a data transmission path of the Ethernet communications system, and likewise, a device that performs the foregoing format restoration processing may also be an independent device, which is located between the optical switching device and a receive end Ethernet client device in the data transmission path of the Ethernet communications system (that is, situation 1). Alternatively, a device that performs the foregoing format conversion processing may be a transmit end Ethernet client device, and likewise, a device that performs the foregoing format restoration processing may be a receive end Ethernet client device (that is, situation 2). The following separately describes the foregoing situation 1 and situation 2.

### Situation 1

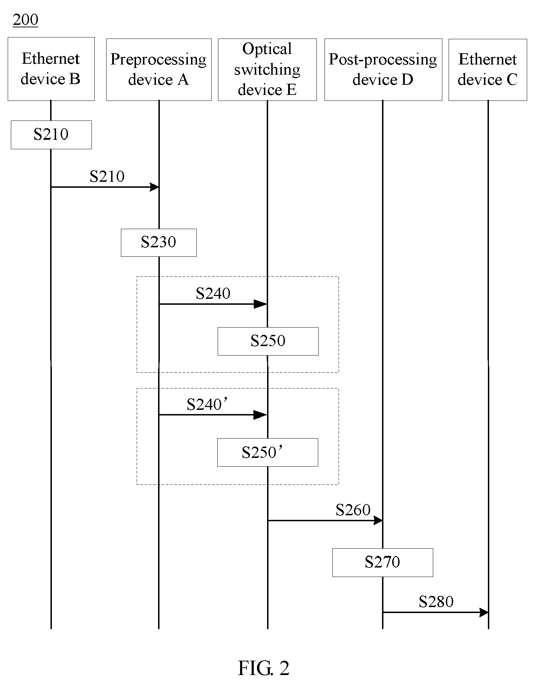

FIG. 2 shows an interaction diagram of a data transmission method according to an embodiment of the present invention.

Herein, it should be noted that point-to-point communication means that there is a dedicated communication link between two devices, where the communication link includes a transmit end, a receive end, a transmission link, and the like. For example, one transmitter sends a signal only to one receiver. However, in multipoint-to-multipoint communication, there are N transmitters and N receivers, and all the transmitters can send information to the other N receivers. Therefore, one receiver can receive information from N transmitting sources. In this embodiment of the present invention, in order to implement point-to-point communication between Ethernet devices (or Ethernet client devices), in a case in which there are multiple transmit end Ethernet devices, a corresponding (same, for example) quantity of preprocessing devices need to be configured, and each transmit end Ethernet device is corresponding to each preprocessing device. For example, a preprocessing device is configured to perform format conversion processing only on data (a MAC data frame or an IP data packet) that is in an Ethernet format and from a corresponding transmit end Ethernet device. Likewise, in a case in which there are multiple receive end Ethernet devices, a same quantity of post-processing devices need to be configured, and each receive end Ethernet device is corresponding to each post-processing device, that is, a post-processing device is configured to perform format restoration processing on an optical data frame (a MAC data frame or an IP data packet obtained after the foregoing format conversion processing) that needs to be sent to a corresponding receive end Ethernet device.

It should be understood that the foregoing illustrated correspondence manners are merely exemplary, and the present invention is not limited thereto. Another correspondence manner that can implement point-to-point communication falls within the protection scope of the present invention.

Preprocessing device A in FIG. 2 is equivalent to an implementation body of the foregoing method 100, that is, a first preprocessing device, and is configured to perform format conversion processing on data (a MAC data frame or an IP data packet) from Ethernet device B (a first Ethernet device) in FIG. 2. Ethernet device B is a data sending party, and Ethernet device C (a second Ethernet device) is a data receiving party. In addition, in the embodiment shown in FIG. 2, post-processing device D (a first post-processing device) performs format restoration processing on an optical data frame (a MAC data frame or an IP data packet obtained after format conversion processing) that needs to be sent to Ethernet device C.

Optionally, in this embodiment of the present invention, the transmit end device is the first preprocessing device corresponding to the first Ethernet device; and
that the transmit end device acquires first data includes that:
the first preprocessing device receives a first Ethernet data packet to be sent by the first Ethernet device to the second Ethernet device, and acquires the first data from the first Ethernet data packet.

Specifically, as shown in FIG. 2, in S210, when Ethernet device B needs to send data to Ethernet device C, Ethernet device B may perform encapsulation and packaging processing on the data to generate an Ethernet data packet (a first Ethernet data packet) that includes target data (first data, that is, a MAC data frame or an IP data packet), and send the first Ethernet data packet to preprocessing device A by using a medium signal (electrical signal or optical signal). It should be noted that in this embodiment of the present invention, the foregoing process and method of generating and sending an Ethernet data packet and a medium signal may be similar to those in the prior art. Herein, descriptions of the process and the method are omitted to avoid repetition.

In S220, preprocessing device A may acquire the first Ethernet data packet from the medium signal (electrical signal or optical signal) sent by Ethernet device B, and parse out the foregoing first data from the first Ethernet data packet. In this embodiment of the present invention, the process and the method of acquiring an Ethernet data packet from a medium signal and parsing out first data from the Ethernet data packet may be similar to those in the prior art. For example, if the medium signal sent by Ethernet device B is an optical signal, first, optical-to-electrical conversion processing needs to be performed to convert the optical signal into an electrical signal, and the first data is acquired by using some functions at a physical layer specified in an Ethernet standard, such as block synchronization, 64/66B decoding, and descrambling. Herein, descriptions of the process and the method are omitted to avoid repetition.

In S230, preprocessing device A may perform format conversion processing on the first data, so as to generate an optical data frame that complies with an optical switching or optical receiving requirement (which is specifically a requirement that a data loss caused by performing restoration and adjustment on a burst signal can be avoided).

Specifically, first, in order to ensure balance between 0s and 1s in a bit stream, scrambling needs to be performed on the first data. A signal that is received by a receive end (an optical switching device or a receive end device) and carries the optical data frame is a burst signal; therefore, if a conventional scrambling manner is used, the receive end cannot perform accurate descrambling, thereby causing a data transmission error. In view of this, in this embodiment of the present invention, manners of separate scrambling and independent descrambling are used. Herein, the "separate scrambling" means that a scrambler (or a device or a module that performs scrambling processing) is in a preset initial state (a first initial state) before the scrambling, and is restored to the preset first initial state after the scrambling processing, so as to wait for next scrambling processing. Likewise, the "separate descrambling" means that a descrambler (or a device or a module that performs descrambling processing) is in a preset initial state (a second initial state) before the descrambling, and is restored to the preset second initial state after the descrambling processing, so as to wait for next descrambling processing.

In addition, a method for enabling a scrambler to be in an initial state before scrambling processing may be, for example, enabling the scrambler when a MAC frame starts, and a method for enabling the scrambler to be restored to the initial state after the scrambling processing may be, for example, disabling the scrambler after the MAC frame ends. Likewise, a descrambler may be enabled when a MAC frame starts, and the descrambler may be disabled after the MAC frame ends.

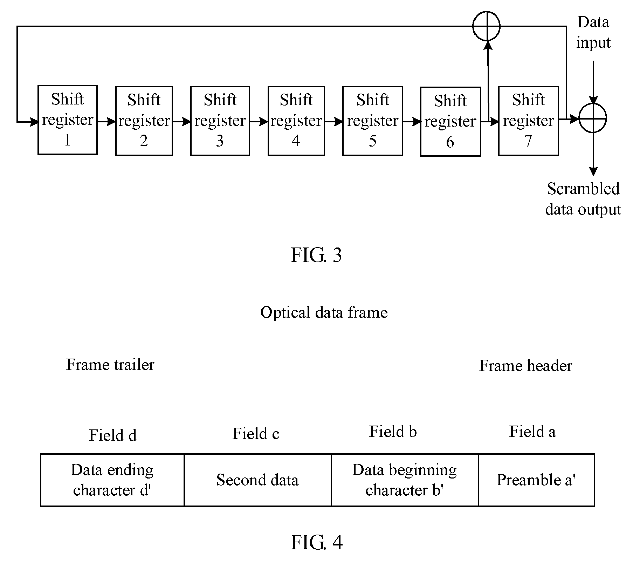

FIG. 3 shows a schematic diagram of scrambling processing according to an embodiment of the present invention. As shown in FIG. 3, a process of the scrambling processing is performing a bitwise exclusive-OR operation on first data (a MAC data frame or an IP data packet) and a pseudo-random sequence. The pseudo-random sequence is generated by an M-sequence generating apparatus. FIG. 3 shows a PN7 generator used as the M-sequence generating apparatus. Shift registers (shift register 1 to shift register 7 in FIG. 3) in a scrambler are in a preset initial state. That is, in this embodiment of the present invention, an M-sequence is a periodic sequence; by keeping an initial state of a shift register unchanged (being in a first initial state), a location at which a corresponding periodic sequence starts is kept unchanged, and after scrambling processing is completed, the scrambler needs to be reset to the initial state to wait for a next data frame.

Herein, it should be noted that in order to implement accurate data transmission of data, a first initial state needs to be corresponding to a second initial state. For example, initial states of shift registers of a scrambler and a descrambler are the same, so that locations at which corresponding periodic sequences start are the same.

It should be understood that the embodiment of the foregoing illustrated manner of a correspondence between the first initial state and the second initial state is merely exemplary, and the present invention is not limited thereto. Another solution that can implement accurate data transmission falls within the protection scope of the present invention.

According to the data transmission method in this embodiment of the present invention, after separate scrambling is performed on first data, when corresponding separate descrambling is being performed, descrambling can be accurately performed on an optical data frame that is used as a burst signal and generated after format conversion processing.

After second data (that is, a MAC data frame or an IP data packet obtained after the scrambling processing) is generated by performing scrambling processing on the foregoing first data as described in the foregoing, an optical data frame may be generated according to the second data. FIG. 4 shows a structure (or a format) of an optical data frame according to an embodiment of the present invention. As shown in FIG. 4, the optical data frame may include preamble field a (a field of a first preamble) located at a frame header, data start field b located after preamble field a in a transmission order, data field c located after data start field b in the transmission order, and data end field d located after data field c in the transmission order.

Preamble field a is used to carry preamble a' (a first preamble). In this embodiment of the present invention, preamble a' is used in restoration and adjustment performed by a module (such as a burst receiver or a burst signal receiver) that is in post-processing device D or optical switching device E and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

Before completing the foregoing restoration and adjustment, a burst receiver cannot accurately receive a signal, for example, cannot correctly identify, from a received burst signal, whether a sent bit is 1 or 0; therefore, in the prior art, after optical switching processing is performed on a medium signal in the prior art by using an optical switch, the medium signal is converted into a burst signal, and after the burst signal arrives at a receive end device, the receive end device needs to perform restoration and adjustment. However, when the restoration and adjustment are completed, a part of the burst signal has been transmitted (or lost), so that data carried in the lost part of the signal is also lost. In addition, in the prior art, when the optical switch performs switching processing on the medium signal used as a burst signal, the optical switch needs to perform parsing on the medium signal, so as to determine a destination address of data carried in the signal, and perform optical switching processing according to the destination address. Therefore, after the medium signal arrives at an optical switching device, the optical switching device (which is specifically a burst receiver in a control module of the optical switching device) needs to perform restoration and adjustment. However, when the restoration and adjustment are completed, a part of the medium signal has been transmitted (or lost), so that data carried in the lost part of the signal is also lost, and the optical switching device may not perform switching processing because the optical switching device cannot acquire an accurate destination address.

Correspondingly, in this embodiment of the present invention, preamble field a that carries the foregoing preamble a' is set at the frame header of the optical data frame, and after receiving the optical data frame, the burst receiver performs the foregoing restoration and adjustment. By setting a length of preamble a', each transmitted (or lost) part is preamble a' when the burst receiver performs the restoration and adjustment. Therefore, after the burst receiver can accurately acquire data, data start field b, data field c, and data end field d arrive, so that a loss of data that needs to be transmitted between two Ethernet devices can be avoided.

In this embodiment of the present invention, the length of preamble a' may be greater than a preset value (a first preset value), and a size of the first preset value may be determined by collecting statistics or experimenting. For example, statistics on a parameter of a burst receiver (which may include burst receivers in post-processing device D and optical switching device E) used in a system may be collected, so as to determine a longest restoration and adjustment time, calculate, according to a signal transmission rate, a length corresponding to the restoration and adjustment time, and use the length as the first preset value.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Specifically, in this embodiment of the present invention, preprocessing device A may determine the foregoing restoration and adjustment times of post-processing device D and optical switching device E (which are specifically the burst receivers in post-processing device D and optical switching device E) in advance, and set the length of preamble a' (or preamble field a), so that transmission of preamble a' is completed after post-processing device D and optical switching device E complete the foregoing restoration and adjustment, or data start field b, data field c, and data end field d arrive at post-processing device D and optical switching device E after post-processing device D and optical switching device E complete the foregoing restoration and adjustment.

Data start field b is used to carry data start character b', and data start character b' is used to identify a start of the data (second data).

Data field c is used to carry the foregoing second data.

Data end field d is used to carry data end character d', and data end character d' is used to identify an end of the data (second data).

It should be understood that the foregoing illustrated structure and configuration method of an optical data frame are merely exemplary, and the present invention is not limited thereto. For example, an interval or an idle field may also be set between preamble field a and data start field b.

Afterward, preprocessing device A may generate an optical data packet according to the foregoing generated optical data frame. In this embodiment of the present invention, the optical data packet may include only the optical data frame (that is, situation 1a), or may include the optical data frame and a tagged frame (that is, situation 1b). The following separately describes subsequent procedures in the foregoing two situations.

### Situation 1a

In S240, preprocessing device A may perform encapsulation processing on the optical data packet that includes the foregoing optical data frame, to generate an optical signal, and send the optical data packet to optical switching device E by using the foregoing optical signal. Alternatively, after performing encapsulation processing on the optical data frame, preprocessing device A may modulate the optical data packet to an optical carrier and send the optical data packet to optical switching device E. The foregoing process and method may be similar to those in the prior art. Herein, descriptions of the process and the method are omitted to avoid repetition.

In S250, optical switching device E may perform optical switching processing on the optical signal, so as to send the optical data frame in the optical data packet to Ethernet device C (or post-processing device D).

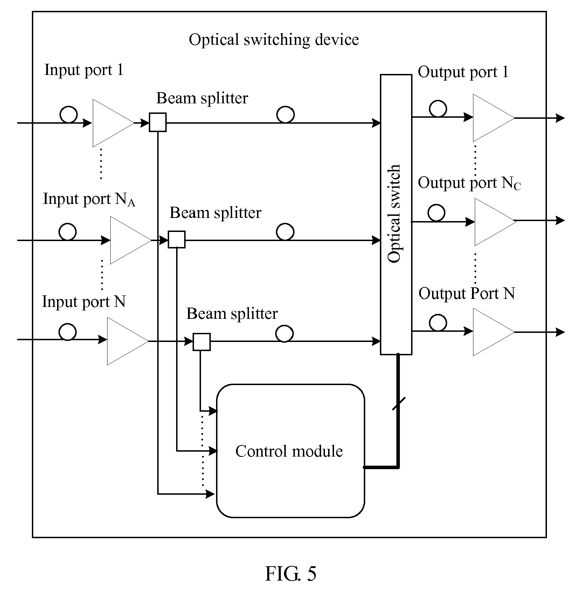

FIG. 5 shows a structure of an optical switching device according to an embodiment of the present invention. As shown in FIG. 5, in this embodiment of the present invention, the optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device E may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device E (which is specifically a control module) may perform parsing on one of the signals (that is, a first signal, which is described by using optical signal X as an example in the following), so as to acquire the foregoing second data.

Herein, it should be noted that in this embodiment of the present invention, energy of the two optical signals generated by means of beam splitting by the beam splitter may not be completely the same. For example, a ratio may be approximately 10:90, that is, 10% of the optical signal is used as optical signal X. A description of a same or similar situation is omitted in the following.

Specifically, after receiving, by using a burst receiver for example, optical signal X used as a burst signal, the control module needs to perform restoration and adjustment. In this case, because of existence of preamble a' (or preamble field a), the foregoing second data arrives at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

After the foregoing first data is restored, the control module may acquire a destination address of the first data, so that an Ethernet device (which is Ethernet device C herein) or a post-processing device, corresponding to the Ethernet device, (which is post-processing device D herein) to which optical signal Y (which is specifically the optical data frame in optical signal Y) needs to be sent can be determined according to the destination address of the first data, and then an output port of optical signal Y or a path between an input port and an output port of optical signal Y can be determined. In addition, an availability time of the path or a holding time of an optical switch can be determined according to a length of the optical data frame.

Specifically, after receiving optical signal X (or the original optical signal before the beam splitter of optical signal X) sent by preprocessing device A, the control module may determine input port N_{A} corresponding to preprocessing device A, determine, according to the destination address of the first data, that the optical data frame in optical signal Y needs to be sent to Ethernet device C, and then determine output port N_{C} corresponding to Ethernet device C, so that input port N_{A} can be connected to output port N_{C} by controlling the optical switch, so as to form a transmission path, and the holding time of the optical switch can be determined according to the length of the optical data frame, so as to send the optical data frame only in optical signal Y.

It should be noted that a specific time (including a time required for resolving problems concerning a throughput, a collision, and the like, and a reaction time of the optical switch) is required by optical switching device E (which is specifically the control module) from receiving optical signal X to determining the foregoing transmission path and connection time period. Therefore, processing of delay such as a fiber delay may be performed on optical signal Y in a path from the beam splitter to input port N_{A}.

### Situation 1b

Optionally, in this embodiment of the present invention, that generate, according to the second data, an optical data packet that includes an optical data frame includes:
generating, according to the second data and a destination address of the first data, an optical data packet that includes a tagged frame and an optical data frame, where the tagged frame is located before the optical data frame, the tagged frame includes a field of a second preamble and a destination address start field, a destination address field, and an optical data frame length field that are located after the field of the second preamble, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

Specifically, in S240', preprocessing device A may acquire a destination address of the first data, and generate, according to the destination address, the tagged frame corresponding to the foregoing optical data frame.

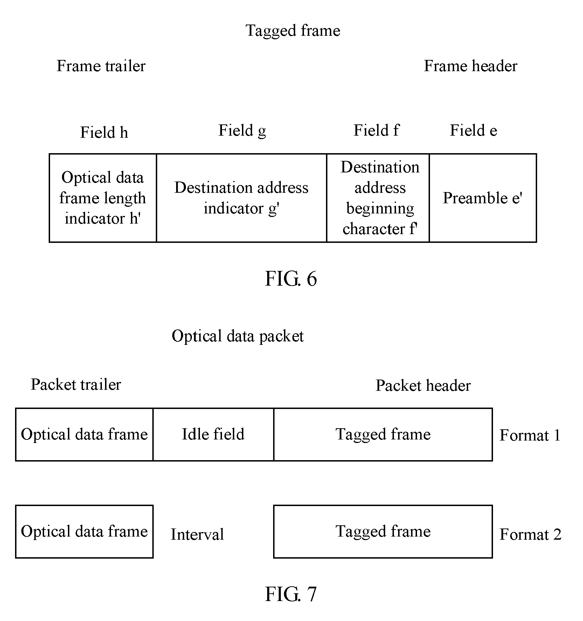

FIG. 6 shows a structure (or a format) of a tagged frame according to an embodiment of the present invention. As shown in FIG. 6, the tagged frame may include preamble field e (a field of a second preamble) located at a frame header, destination address start field f located after preamble field e in a transmission order, destination address field g located after destination address start field f in the transmission order, and optical data frame length field h located after destination address field g in the transmission order.

Preamble field e is used to carry preamble e' (a second preamble). In this embodiment of the present invention, preamble e' is used in restoration and adjustment performed by a module (such as a burst receiver or a burst signal receiver) that is in optical switching device E and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

In this embodiment of the present invention, preamble field e that carries the foregoing preamble e' is set at the frame header of the tagged frame, and after receiving the tagged frame, the burst receiver performs the foregoing restoration and adjustment. By setting a length of preamble e', each transmitted (or lost) part is preamble e' when the burst receiver performs the restoration and adjustment. Therefore, after the burst receiver can accurately acquire data, the subsequent destination address and data frame length indicator arrive, so that a loss of the destination address and the data frame length indicator can be avoided, and accurate optical switching processing can be implemented.

In this embodiment of the present invention, the length of preamble e' may be greater than a preset value (a second preset value), and a size of the second preset value may be determined by collecting statistics or experimenting. For example, statistics on a parameter of a burst receiver (including the burst receiver in optical switching device E) used in a system may be collected, so as to determine a longest restoration and adjustment time, calculate, according to a signal transmission rate, a length corresponding to the restoration and adjustment time, and use the length as the second preset value.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Specifically, in this embodiment of the present invention, the tagged frame is independently set; therefore, optical switching device E does not need to perform parsing on the optical data frame to acquire the destination address of the first data, and preprocessing device A may determine the foregoing restoration and adjustment time of post-processing device D (which is specifically a burst receiver in post-processing device D) in advance, and set the length of preamble a' (or preamble field a), so that transmission of preamble a' is completed after post-processing device D completes the foregoing restoration and adjustment, or data start field b, data field c, and data end field d arrive at post-processing device D after post-processing device D completes the foregoing restoration and adjustment.

In addition, preprocessing device A may determine the foregoing restoration and adjustment time of optical switching device E (which is specifically the burst receiver in optical switching device E) in advance, and set the length of preamble e' (or preamble field e), so that transmission of preamble e' is completed after optical switching device E completes the foregoing restoration and adjustment, or destination address start field f, destination address field g, and optical data frame length field h arrive at optical switching device E after optical switching device E completes the foregoing restoration and adjustment.

Destination address start field f is used to carry destination address start character f, and the destination address start character f is used to identify a start of the destination address.

Destination address field g is used to carry destination address indicator g', where destination address indicator g' is used to indicate an Ethernet device or a post-processing device to which the optical data frame needs to be sent. For example, format conversion may be performed on the destination address (of the first data) in an Ethernet data format, so as to convert the destination address into a destination address in an optical data format, and use the destination address in the optical data format as destination address indicator g'.

Optical data frame length field h is used to carry optical data frame length indicator h', and optical data frame length indicator h' is used to indicate a length of the optical data frame.

It should be understood that the foregoing illustrated structure and configuration method of a tagged frame are merely exemplary, and the present invention is not limited thereto. For example, an interval or an idle field may also be set between preamble field e and data start field b.

Afterward, preprocessing device A may generate the optical data packet according to the foregoing generated tagged frame and optical data frame.

Optionally, in this embodiment of the present invention, the generating, according to the second data and a destination address of the first data, an optical data packet that includes a tagged frame and an optical data frame includes:
generating, according to the second data and the destination address of the first data, the optical data packet that includes the tagged frame and the optical data frame, where an interval or an idle field exists between the optical data frame and the tagged frame, and a length of the interval or the idle field is greater than or equal to a third preset value.

Specifically, preprocessing device A may generate the optical data packet by combining the tagged frame with the optical data frame. Multiple policies may be used to combine the tagged frame with the optical data frame. For example, a serial bit stream manner may be used, that is, the tagged frame and the optical data frame are sent in a serial manner. For another example, a multi-wavelength policy may be used, that is, the tagged frame and the optical data frame are respectively transmitted by using signals with different wavelengths.

FIG. 7 shows a structure (or a format) of an optical data packet according to an embodiment of the present invention. As shown in FIG. 7, in this embodiment of the present invention, a tagged frame is located before an optical data frame at a time interval of T.

That is, in this embodiment of the present invention, after acquiring the tagged frame from the signal, optical switching device E needs to determine a switching policy for the optical data frame according to the tagged frame (the process is subsequently described in a similar manner). A specific time (including a time required for resolving problems concerning a throughput, a collision, and the like, and a reaction time of an optical switch) is required for the determining process. Therefore, the optical data frame is required to arrive at the optical switch after optical switching device E completes the foregoing determining process. Otherwise, a data loss may occur in the optical data frame. In this embodiment of the present invention, an interval (time interval) or an idle field may be set between the tagged frame and the optical data frame, so that the optical data frame arrives at the optical switch after optical switching device E completes the foregoing calculation processing.

In this embodiment of the present invention, a length of the interval or the idle field may be greater than a preset value (third preset value), and a size of the third preset value may be determined by collecting statistics or experimenting. For example, statistics on parameters of optical switching devices (which may include optical switching device E) used in a system may be collected, so as to determine a longest calculation time, calculate, according to a signal transmission rate, a length corresponding to the calculation, and use the length as the third preset value.

Optionally, the third preset value is determined according to a third time, and the third time is a time required for determining the switching policy by the optical switching device according to the tagged frame.

Specifically, in this embodiment of the present invention, preprocessing device A may determine the foregoing calculation time of optical switching device E in advance, and set the length of the foregoing interval or idle field, so that the optical data frame arrives at the optical switch after optical switching device E completes the foregoing calculation process.

According to the data transmission method in this embodiment of the present invention, by setting an idle field or an interval between a tagged frame and an optical data frame, a fiber delay line does not need to be performed, which facilitates miniaturization and integration of an optical switch. In addition, by setting the idle field between the tagged frame and the optical data frame, sent bit streams can be in a continuous mode, and use of a sending apparatus in a burst mode and an amplifying apparatus in the burst mode can be avoided. In addition, optical switching device E does not need to use a receiver in the burst mode to acquire the foregoing destination address, so that a length of the tagged frame is reduced, and complexity and a delay that are generated in a tagged frame reading process and control and scheduling information are reduced. For example, optical switching device E does not need to use an amplifying apparatus and reduces use of a receiving apparatus in the burst mode, which significantly reduces a cost of the switching architecture.

In S250', optical switching device E may perform optical switching processing on the optical signal (which is specifically the optical data frame in the optical data packet).

As shown in FIG. 5, in this embodiment of the present invention, an optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device E may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device E (which is specifically a control module) may perform parsing on the tagged frame in one of the signals (that is, a first signal, which is described by using optical signal X as an example in the following), so as to determine destination address indicator g' and optical data frame length indicator h'.

Specifically, after receiving optical signal X used as a burst signal, a module (such as a burst receiver) that is in optical switching device E and is used to perform the foregoing parsing needs to perform restoration and adjustment. In this case, because of existence of preamble e' (or preamble field e), the foregoing destination address start field, destination address field, and optical data frame length field arrive at the burst receiver only after the restoration and adjustment are completed, so that it can be ensured that no data loss occurs in the acquired destination address indicator and optical data frame length indicator.

After the tagged frame is acquired, a switching policy may be determined for optical signal Y (which is specifically the optical data frame in optical signal Y) according to the tagged frame (which is specifically destination address indicator g' and optical data frame length indicator h'), that is, the control module may determine the destination address of the first data according to destination address indicator g', so that an Ethernet device (which is Ethernet device C herein) or a post-processing device, corresponding to the Ethernet device, (which is post-processing device D herein) to which optical signal Y needs to be sent can be determined, and then an output port of optical signal Y or a path between an input port and an output port of optical signal Y can be determined. In addition, an availability time of the path or a holding time of an optical switch can be determined according to the length of the optical data frame.

Specifically, after receiving optical signal X (or the original optical signal before the beam splitter of optical signal X) sent by preprocessing device A, the control module may determine input port N_{A} corresponding to preprocessing device A, determine, according to the destination address of the first data, that the optical data frame in optical signal Y needs to be sent to Ethernet device C, and then determine output port N_{C} corresponding to Ethernet device C, so that input port N_{A} can be connected to output port N_{C} by controlling the optical switch, so as to form a transmission path, and the holding time of the optical switch can be determined according to the length of the optical data frame, so as to send the optical data frame only in optical signal Y.

As described in the foregoing, a specific time (including a time required for resolving problems concerning a throughput, a collision, and the like, and a reaction time of the optical switch) is required by optical switching device E (which is specifically the control module) from receiving optical signal X to determining the foregoing transmission path and connection time period. Therefore, preprocessing device A may determine the foregoing calculation time of optical switching device E in advance, and set the length of the foregoing interval or idle field, so that the optical data frame arrives at the optical switch after optical switching device E completes the foregoing calculation process.

Therefore, in this embodiment of the present invention, the optical data frame carried in optical signal Y can arrive at the optical switch after optical switching device E determines that the optical data frame can be sent to Ethernet device C or post-processing device D by using the optical switch, so that a loss of sending data of the optical data frame can be avoided.

It should be understood that the foregoing illustrated embodiment in which an idle field or an interval is set between a tagged frame and an optical data frame to avoid a data loss in the optical data frame is merely exemplary, and the present invention is not limited thereto. For example, processing of delay such as a fiber delay may be performed on optical signal Y in a path from a beam splitter to an output port.

In S260, optical switching device E may send the optical data frame to post-processing device D.

In S270, post-processing device D may receive the optical data frame, and parse out the second data from the optical data frame (which is specifically data field c). Specifically, after receiving the optical signal (that carries the optical data frame) used as a burst signal, a module (such as a burst receiver) that is in optical switching device E and is used to perform the foregoing parsing needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

In addition, post-processing device D may perform encapsulation processing on the first data to encapsulate the first data as a standard medium signal (that carries a second Ethernet data packet). For example, the foregoing encapsulation process may be completed according to a method and a procedure that are specified in the IEEE802.3 protocol.

In S280, post-processing device D may send the second Ethernet data packet to Ethernet device C.

Therefore, a process of transmitting the first data is completed.

### Situation 2

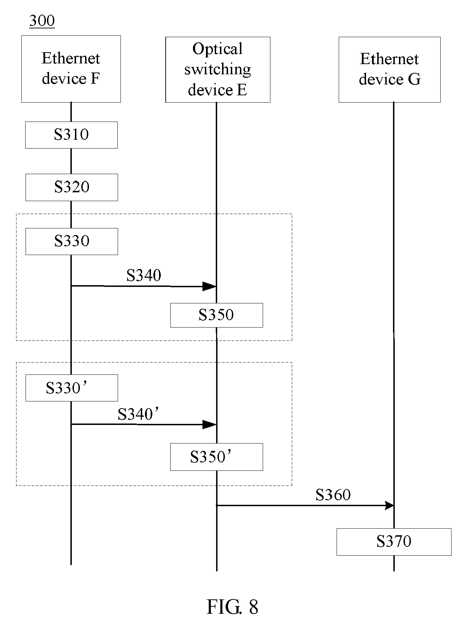

FIG. 8 shows an interaction diagram of a data transmission method according to an embodiment of the present invention. Ethernet device F in FIG. 8 is equivalent to an implementation body of the foregoing method 100, that is, a first Ethernet device, and is a data sending party, and Ethernet device F performs the foregoing format conversion processing; Ethernet device G (a second Ethernet device) is a data receiving party, and Ethernet device G performs the foregoing format restoration processing.

Specifically, as shown in FIG. 8, in S310, when Ethernet device F needs to send data to Ethernet device G, Ethernet device F may generate target data (first data, that is, a MAC data frame or an IP data packet). In this embodiment of the present invention, the foregoing process and method may be similar to those in the prior art. Herein, descriptions of the process and the method are omitted to avoid repetition.

In S320, Ethernet device F may perform format conversion processing on the first data, so as to generate an optical data frame that complies with an optical switching or optical receiving requirement (which is specifically a requirement that a data loss caused by performing restoration and adjustment on a burst signal can be avoided).

Specifically, first, in order to ensure balance between 0s and 1s in a bit stream, scrambling needs to be performed on the first data. A signal that is received by a receive end (an optical switching device or a receive end device) and carries the optical data frame is a burst signal; therefore, if a conventional scrambling manner is used, the receive end cannot perform accurate descrambling, thereby causing a data transmission error. In view of this, in this embodiment of the present invention, manners of separate scrambling and independent descrambling are used. Herein, the "separate scrambling" means that a scrambler (or a device or a module that performs scrambling processing) is in a preset initial state (a first initial state) before the scrambling, and is restored to the preset first initial state after the scrambling processing, so as to wait for next scrambling processing. Likewise, the "separate descrambling" means that a descrambler (or a device or a module that performs descrambling processing) is in a preset initial state (a second initial state) before the descrambling, and is restored to the preset second initial state after the descrambling processing, so as to wait for next descrambling processing.

In addition, a method for enabling a scrambler to be in an initial state before scrambling processing may be, for example, enabling the scrambler when a MAC frame starts, and a method for enabling the scrambler to be restored to the initial state after the scrambling processing may be, for example, disabling the scrambler after the MAC frame ends. Likewise, a descrambler may be enabled when a MAC frame starts, and the descrambler may be disabled after the MAC frame ends.

As shown in FIG. 3, a process of the scrambling processing is performing a bitwise exclusive-OR operation on data and a pseudo-random sequence. The pseudo-random sequence is generated by an M-sequence generating apparatus. FIG. 3 shows a PN7 generator used as the M-sequence generating apparatus. Shift registers (shift register 1 to shift register 7 in FIG. 3) in a scrambler are in a preset initial state. That is, in this embodiment of the present invention, an M-sequence is a periodic sequence; by keeping an initial state of a shift register unchanged (being in a first initial state), a location at which a corresponding periodic sequence starts is kept unchanged, and after scrambling processing is completed, the scrambler needs to be reset to the initial state to wait for a next data frame.

Herein, it should be noted that in order to implement accurate data transmission of data, a first initial state needs to be corresponding to a second initial state. For example, initial states of shift registers of a scrambler and a descrambler are the same, so that locations at which corresponding periodic sequences start are the same.

It should be understood that the embodiment of the foregoing illustrated manner of a correspondence between the first initial state and the second initial state is merely exemplary, and the present invention is not limited thereto. Another solution that can implement accurate data transmission falls within the protection scope of the present invention.

According to the data transmission method in this embodiment of the present invention, after separate scrambling is performed on first data, when corresponding separate descrambling is being performed, descrambling can be accurately performed on an optical data frame that is used as a burst signal and generated after format conversion processing.

After second data (that is, a MAC data frame or an IP data packet obtained after the scrambling processing) is generated by performing scrambling processing on the foregoing first data as described in the foregoing, an optical data frame may be generated according to the second data. FIG. 4 shows a structure (or a format) of an optical data frame according to an embodiment of the present invention. As shown in FIG. 4, the optical data frame may include preamble field a (a field of a first preamble) located at a frame header, data start field b located after preamble field a in a transmission order, data field c located after data start field b in the transmission order, and data end field d located after data field c in the transmission order.

Preamble field a is used to carry preamble a' (a first preamble). In this embodiment of the present invention, preamble a' is used in restoration and adjustment performed by a module (such as a burst receiver or a burst signal receiver) that is in Ethernet device G or optical switching device H and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

Before completing the foregoing restoration and adjustment, a burst receiver cannot accurately receive a signal, for example, cannot correctly identify, from a received burst signal, whether a sent bit is 1 or 0; therefore, in the prior art, after optical switching processing is performed on a medium signal in the prior art by using an optical switch, the medium signal is converted into a burst signal, and after the burst signal arrives at a receive end device, the receive end device needs to perform restoration and adjustment. However, when the restoration and adjustment are completed, a part of the burst signal has been transmitted (or lost), so that data carried in the lost part of the signal is also lost. In addition, in the prior art, when the optical switch performs switching processing on the medium signal used as a burst signal, the optical switch needs to perform parsing on the medium signal, so as to determine a destination address of data carried in the signal, and perform optical switching processing according to the destination address. Therefore, after the medium signal arrives at an optical switching device, the optical switching device (which is specifically a burst receiver in a control module of the optical switching device) needs to perform restoration and adjustment. However, when the restoration and adjustment are completed, a part of the medium signal has been transmitted (or lost), so that data carried in the lost part of the signal is also lost, and the optical switching device may not perform switching processing because the optical switching device cannot acquire an accurate destination address.

Correspondingly, in this embodiment of the present invention, preamble field a that carries the foregoing preamble a' is set at the frame header of the optical data frame, and after receiving the optical data frame, the burst receiver performs the foregoing restoration and adjustment. By setting a length of preamble a', each transmitted (or lost) part is preamble a' when the burst receiver performs the restoration and adjustment, and after the burst receiver can accurately acquire data, data start field b, data field c, and data end field d arrive, so that a loss of data that needs to be transmitted between two Ethernet devices can be avoided.

In this embodiment of the present invention, the length of preamble a' may be greater than a preset value (a first preset value), and a size of the first preset value may be determined by collecting statistics or experimenting. For example, statistics on a parameter of a burst receiver (which may include burst receivers in Ethernet device G and optical switching device H) used in a system may be collected, so as to determine a longest restoration and adjustment time, calculate, according to a signal transmission rate, a length corresponding to the restoration and adjustment time, and use the length as the first preset value.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Specifically, in this embodiment of the present invention, Ethernet device F may determine the foregoing restoration and adjustment times of Ethernet device G and optical switching device H (which are specifically the burst receivers in Ethernet device G and optical switching device H) in advance, and set the length of preamble a' (or preamble field a), so that transmission of preamble a' is completed after Ethernet device G and optical switching device H complete the foregoing restoration and adjustment, or data start field b, data field c, and data end field d arrive at Ethernet device G and optical switching device H after Ethernet device G and optical switching device H complete the foregoing restoration and adjustment.

Data start field b is used to carry data start character b', and data start character b' is used to identify a start of the data (second data).

Data field c is used to carry the foregoing second data.

Data end field d is used to carry data end character d', and data end character d' is used to identify an end of the data (second data).

It should be understood that the foregoing illustrated structure and configuration method of an optical data frame are merely exemplary, and the present invention is not limited thereto. For example, an interval or an idle field may also be set between preamble field a and data start field b.

Afterward, Ethernet device F may generate an optical data packet according to the foregoing generated optical data frame. In this embodiment of the present invention, the optical data packet may include only the optical data frame (that is, situation 2a), or may include the optical data frame and a tagged frame (that is, situation 2b). The following separately describes subsequent procedures in the foregoing two situations.

### Situation 2a

In S330, Ethernet device F may perform encapsulation processing on the optical data packet that includes the foregoing optical data frame, to generate an optical signal.

In S340, Ethernet device F may send the optical data packet to optical switching device H by using the foregoing optical signal. Alternatively, after performing encapsulation processing on the optical data frame, Ethernet device F may modulate the optical data packet to an optical carrier and send the optical data packet to optical switching device H. The foregoing process and method may be similar to those in the prior art. Herein, descriptions of the process and the method are omitted to avoid repetition.

In S350, optical switching device H may perform optical switching processing on the optical signal, so as to send the optical data frame in the optical data packet to Ethernet device C (or Ethernet device G).

FIG. 5 shows a structure of an optical switching device according to an embodiment of the present invention. As shown in FIG. 5, in this embodiment of the present invention, the optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device H may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device H (which is specifically a control module) may perform parsing on one of the signals (that is, a first signal, which is described by using optical signal X as an example in the following), so as to acquire the foregoing second data.

Specifically, after receiving, by using a burst receiver for example, optical signal X used as a burst signal, the control module needs to perform restoration and adjustment. In this case, because of existence of preamble a' (or preamble field a), the foregoing second data arrives at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

After the foregoing first data is restored, the control module may acquire a destination address of the first data, so that an Ethernet device (which is Ethernet device C herein) or a post-processing device, corresponding to the Ethernet device, (which is Ethernet device G herein) to which optical signal Y (which is specifically the optical data frame in optical signal Y) needs to be sent can be determined according to the destination address of the first data, and then an output port of optical signal Y or a path between an input port and an output port of optical signal Y can be determined. In addition, an availability time of the path or a holding time of an optical switch can be determined according to a length of the optical data frame.

Specifically, after receiving optical signal X (or the original optical signal before the beam splitter of optical signal X) sent by Ethernet device F, the control module may determine input port N_{A} corresponding to Ethernet device F, determine, according to the destination address of the first data, that the optical data frame in optical signal Y needs to be sent to Ethernet device C, and then determine output port N_{C} corresponding to Ethernet device C, so that input port N_{A} can be connected to output port N_{C} by controlling the optical switch, so as to form a transmission path, and the holding time of the optical switch can be determined according to the length of the optical data frame, so as to send the optical data frame only in optical signal Y.

It should be noted that a specific time (including a time required for resolving problems concerning a throughput, a collision, and the like, and a reaction time of the optical switch) is required by optical switching device H (which is specifically the control module) from receiving optical signal X to determining the foregoing transmission path and connection time period. Therefore, processing of delay such as a fiber delay may be performed on optical signal Y in a path from the beam splitter to input port N_{A}.

### Situation 2b

Optionally, in this embodiment of the present invention, that generate, according to the second data, an optical data packet that includes an optical data frame includes:
generating, according to the second data and a destination address of the first data, an optical data packet that includes a tagged frame and an optical data frame, where the tagged frame is located before the optical data frame, the tagged frame includes a field of a second preamble and a destination address start field, a destination address field, and an optical data frame length field that are located after the field of the second preamble, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

Specifically, in S330', Ethernet device F may acquire a destination address of the first data, and generate, according to the destination address, the tagged frame corresponding to the foregoing optical data frame.

FIG. 6 shows a structure (or a format) of a tagged frame according to an embodiment of the present invention. As shown in FIG. 6, the tagged frame may include preamble field e (a field of a second preamble) located at a frame header, destination address start field f located after preamble field e in a transmission order, destination address field g located after destination address start field f in the transmission order, and optical data frame length field h located after destination address field g in the transmission order.

Preamble field e is used to carry preamble e' (a second preamble). In this embodiment of the present invention, preamble e' is used in restoration and adjustment performed by a module (such as a burst receiver or a burst signal receiver) that is in optical switching device H and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

In this embodiment of the present invention, preamble field e that carries the foregoing preamble e' is set at the frame header of the tagged frame, and after receiving the tagged frame, the burst receiver performs the foregoing restoration and adjustment. By setting a length of preamble e', each transmitted (or lost) part is preamble e' when the burst receiver performs the restoration and adjustment. Therefore, after the burst receiver can accurately acquire data, destination address start field f, destination address field g, and optical data frame length field h arrive, so that a data loss can be avoided, and accurate optical switching processing can be implemented.

In this embodiment of the present invention, the length of preamble e' may be greater than a preset value (a second preset value), and a size of the second preset value may be determined by collecting statistics or experimenting. For example, statistics on a parameter of a burst receiver (including the burst receiver in optical switching device H) used in a system may be collected, so as to determine a longest restoration and adjustment time, calculate, according to a signal transmission rate, a length corresponding to the restoration and adjustment time, and use the length as the second preset value.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Specifically, in this embodiment of the present invention, the tagged frame is independently set; therefore, optical switching device H does not need to perform parsing on the optical data frame to acquire the destination address of the first data, and Ethernet device F may determine the foregoing restoration and adjustment time of Ethernet device G (which is specifically the burst receiver in Ethernet device G) in advance, and set the length of preamble a' (or preamble field a), so that transmission of preamble a' is completed after Ethernet device G completes the foregoing restoration and adjustment, or data start field b, data field c, and data end field d arrive at Ethernet device G after Ethernet device G completes the foregoing restoration and adjustment.

In addition, Ethernet device F may determine the foregoing restoration and adjustment time of optical switching device H (which is specifically the burst receiver in optical switching device H) in advance, and set the length of preamble e' (or preamble field e), so that transmission of preamble e' is completed after optical switching device H completes the foregoing restoration and adjustment, or destination address start field f, destination address field g, and optical data frame length field h arrive at optical switching device H after optical switching device H completes the foregoing restoration and adjustment.

Destination address start field f is used to carry destination address start character f, and the destination address start character f is used to identify a start of the destination address.

Destination address field g is used to carry destination address indicator g', where destination address indicator g' is used to indicate an Ethernet device or a post-processing device to which the optical data frame needs to be sent. For example, format conversion may be performed on the destination address (of the first data) in an Ethernet data format, so as to convert the destination address into a destination address in an optical data format (which has a smaller quantity of bits compared with the destination address in the Ethernet data format), and use the destination address in the optical data format as destination address indicator g'.

Optical data frame length field h is used to carry optical data frame length indicator h', and optical data frame length indicator h' is used to indicate a length of the optical data frame.

It should be understood that the foregoing illustrated structure and configuration method of a tagged frame are merely exemplary, and the present invention is not limited thereto. For example, an interval or an idle field may also be set between preamble field e and data start field b.

Afterward, Ethernet device F may generate the optical data packet according to the foregoing generated tagged frame and optical data frame.

Optionally, in this embodiment of the present invention, the generating, according to the second data and a destination address of the first data, an optical data packet that includes a tagged frame and an optical data frame includes:
generating, according to the second data and the destination address of the first data, the optical data packet that includes the tagged frame and the optical data frame, where an interval or an idle field exists between the optical data frame and the tagged frame, and a length of the interval or the idle field is greater than or equal to a third preset value.

Specifically, Ethernet device F may generate the optical data packet by combining the tagged frame with the optical data frame. Multiple policies may be used to combine the tagged frame with the optical data frame. For example, a serial bit stream manner may be used, that is, the tagged frame and the optical data frame are sent in a serial manner. For another example, a multi-wavelength policy may be used, that is, the tagged frame and the optical data frame are respectively transmitted by using signals with different wavelengths. FIG. 7 shows a structure (or a format) of an optical data packet according to an embodiment of the present invention. A tagged frame is located before an optical data frame at a time interval of T.

That is, in this embodiment of the present invention, after acquiring the tagged frame from the signal, optical switching device H needs to determine a switching policy for the optical data frame according to the tagged frame (the process is subsequently described in a similar manner). A specific time (including a time required for resolving problems concerning a throughput, a collision, and the like, and a reaction time of an optical switch) is required for the determining process. Therefore, the optical data frame is required to arrive at the optical switch after optical switching device H completes the foregoing determining process. Otherwise, a data loss may occur in the optical data frame. In this embodiment of the present invention, an interval (time interval) or an idle field may be set between the tagged frame and the optical data frame, so that the optical data frame arrives at the optical switch after optical switching device H completes the foregoing calculation processing.

In this embodiment of the present invention, a length of the interval or the idle field may be greater than a preset value (third preset value), and a size of the third preset value may be determined by collecting statistics or experimenting. For example, statistics on parameters of optical switching devices (which may include optical switching device H) used in a system may be collected, so as to determine a longest calculation time, calculate, according to a signal transmission rate, a length corresponding to the calculation, and use the length as the third preset value.

Optionally, the third preset value is determined according to a third time, and the third time is a time required for determining the switching policy by the optical switching device according to the tagged frame.

Specifically, in this embodiment of the present invention, Ethernet device F may determine the foregoing calculation time of optical switching device H in advance, and set the length of the foregoing interval or idle field, so that the optical data frame arrives at the optical switch after optical switching device H completes the foregoing calculation process.

According to the data transmission method in this embodiment of the present invention, by setting an idle field or an interval between a tagged frame and an optical data frame, a fiber delay line does not need to be performed, which facilitates miniaturization and integration of an optical switch. In addition, by setting the idle field between the tagged frame and the optical data frame, sent bit streams can be in a continuous mode, and use of a sending apparatus in a burst mode and an amplifying apparatus in the burst mode can be avoided. In addition, optical switching device H does not need to use a receiver in the burst mode to acquire the foregoing destination address, so that a length of the tagged frame is reduced, and complexity and a delay that are generated in a tagged frame reading process and control and scheduling information are reduced. For example, optical switching device H does not need to use an amplifying apparatus and reduces use of a receiving apparatus in the burst mode, which significantly reduces a cost of the switching architecture.

In S340', Ethernet device F may send the optical data packet to optical switching device H by using the foregoing optical signal. Alternatively, after performing encapsulation processing on the optical data frame, Ethernet device F may modulate the optical data packet to an optical carrier and send the optical data packet to optical switching device H. The foregoing process and method may be similar to those in the prior art. Herein, descriptions of the process and the method are omitted to avoid repetition.

In S350', optical switching device H may perform optical switching processing on the optical signal (which is specifically the optical data frame in the optical data packet).

As shown in FIG. 5, in this embodiment of the present invention, an optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device H may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device H (which is specifically a control module) may perform parsing on the tagged frame in one of the signals (that is, a first signal, which is described by using optical signal X as an example in the following), so as to determine destination address indicator g' and optical data frame length indicator h'.

Specifically, after receiving optical signal X used as a burst signal, a module (such as a burst receiver) that is in optical switching device H and is used to perform the foregoing parsing needs to perform restoration and adjustment. In this case, because of existence of preamble e' (or preamble field e), the foregoing destination address start field f, destination address field g, and optical data frame length field h arrive at the burst receiver only after the restoration and adjustment are completed, so that it can be ensured that no data loss occurs in the acquired destination address of the first data and the acquired length of the optical data frame.

After the tagged frame is acquired, the switching policy may be determined for optical signal Y (which is specifically the optical data frame in optical signal Y) according to the tagged frame (which is specifically destination address indicator g' and optical data frame length indicator h'), that is, the control module may determine the destination address of the first data according to destination address indicator g', so that an Ethernet device (which is Ethernet device G herein) to which optical signal Y needs to be sent can be determined, and then an output port of optical signal Y or a path between an input port and an output port of optical signal Y can be determined. In addition, an availability time of the path or a holding time of an optical switch can be determined according to the length of the optical data frame.

Specifically, after receiving optical signal X (or the original optical signal before the beam splitter of optical signal X) sent by Ethernet device F, the control module may determine input port N_{A} corresponding to Ethernet device F, and determine the destination address of the first data according to destination address indicator g', so that it can be determined that the optical data frame in optical signal Y needs to be sent to Ethernet device G, and then output port N_{C} corresponding to Ethernet device G is determined, so that input port N_{A} can be connected to output port N_{C} by controlling the optical switch, so as to form a transmission path, and the holding time of the optical switch can be determined according to the length of the optical data frame, so as to send the optical data frame only in optical signal Y.

As described in the foregoing, a specific time (including a time required for resolving problems concerning a throughput, a collision, and the like, and a reaction time of the optical switch) is required by optical switching device H (which is specifically the control module) from receiving optical signal X to determining the foregoing transmission path and connection time period. Therefore, Ethernet device F may determine the foregoing calculation time of optical switching device H in advance, and set the length of the foregoing interval or idle field, so that the optical data frame arrives at the optical switch after optical switching device H completes the foregoing calculation process.

Therefore, in this embodiment of the present invention, the optical data frame carried in optical signal Y can arrive at the optical switch after optical switching device H determines that the optical data frame can be sent to Ethernet device G by using the optical switch, so that a loss of sending data of the optical data frame can be avoided.

It should be understood that the foregoing illustrated embodiment in which an idle field or an interval is set between a tagged frame and an optical data frame to avoid a data loss in the optical data frame is merely exemplary, and the present invention is not limited thereto. For example, processing of delay such as a fiber delay may be performed on optical signal Y in a path from a beam splitter to an output port.

In S360, optical switching device H may send the optical data frame to Ethernet device G.

In S370, Ethernet device G may receive the optical data frame, and parse out the second data from the optical data frame (which is specifically data field c). Specifically, after receiving the optical signal (that carries the optical data frame) used as a burst signal, a module (such as a burst receiver) that is in optical switching device H and is used to perform the foregoing parsing needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

Therefore, a process of transmitting the first data is completed.

According to the data transmission method in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

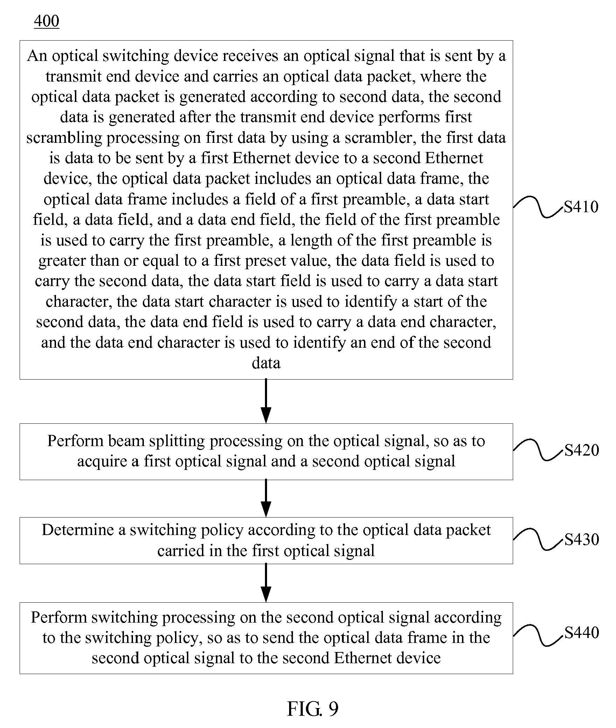

FIG. 9 shows a schematic flowchart of a data transmission method 400 described from a perspective of an optical switching device according to an embodiment of the present invention. As shown in FIG. 9, the method 400 includes:
S410. The optical switching device receives an optical signal that is sent by a transmit end device and carries an optical data packet, where the optical data packet is generated according to second data, the second data is generated after the transmit end device performs first scrambling processing on first data by using a scrambler, the first data is data to be sent by a first Ethernet device to a second Ethernet device, the optical data packet includes an optical data frame, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, the data end character is used to identify an end of the second data, and the scrambler is in a preset first initial state before starting the first scrambling processing and after completing the first scrambling processing.
S420. Perform beam splitting processing on the optical signal, so as to acquire a first optical signal and a second optical signal.
S430. Determine a switching policy according to the optical data packet carried in the first optical signal.
S440. Perform switching processing on the second optical signal according to the switching policy, so as to send the optical data frame in the second optical signal to the second Ethernet device.

During an operation, the first data includes a Media Access Control layer MAC data frame or an Internet Protocol IP data packet.

Technical solutions in the present invention may be applied to an Ethernet communications system. In addition, in the Ethernet system, point-to-point communication between Ethernet devices (or Ethernet client devices) is implemented by using an optical switching device. Specifically, in the existing Ethernet communications system, data exchange between the Ethernet client devices is performed by using an Ethernet data packet carried in an optical signal or an electrical signal. As described in the background, when optical switching processing is being performed on the Ethernet data packet by using the existing optical switching device, a data loss may occur. Therefore, in this embodiment of the present invention, before the foregoing optical switching processing is performed, format conversion processing (the process is subsequently described in detail) is performed on the data (including a MAC data frame or an Internet Protocol (IP, Internet Protocol) data packet in the Ethernet data packet) that needs to be exchanged and is carried in the foregoing Ethernet data packet, so as to avoid the data loss. A signal (an optical signal or an electrical signal used to carry the foregoing data) obtained after the foregoing optical switching processing is a burst signal, and an existing Ethernet client device cannot accurately receive the burst signal; therefore, in this embodiment of the present invention, after the foregoing optical switching processing is performed, format restoration processing needs to be performed on the foregoing data obtained after the format conversion processing, so as to restore the data to a signal that can be accurately received by the existing Ethernet client device, that is, a signal that complies with an existing Ethernet standard (the IEEE 802.3 standard formulated by IEEE) (the process is subsequently described in detail).

In this embodiment of the present invention, a device that performs the foregoing format conversion processing may be an independent device, which is located between a transmit end Ethernet client device and the optical switching device in a data transmission path of the Ethernet communications system, and likewise, a device that performs the foregoing format restoration processing may also be an independent device, which is located between the optical switching device and a receive end Ethernet client device in the data transmission path of the Ethernet communications system. Alternatively, a device that performs the foregoing format conversion processing may be a transmit end Ethernet client device, and likewise, a device that performs the foregoing format restoration processing may be a receive end Ethernet client device.

As described in the foregoing, when the transmit end device needs to send data to a receive end device, the transmit end device may perform encapsulation and packaging processing on the data to generate first data (that is, a MAC data frame or an IP data packet), and may perform format conversion processing on the first data, so as to generate an optical data frame that complies with an optical switching or optical receiving requirement (which is specifically a requirement that a data loss caused by performing restoration and adjustment on a burst signal can be avoided).

Specifically, first, in order to ensure balance between 0s and 1s in a bit stream, the transmit end device needs to perform scrambling on the first data. A signal that is received by a receive end (an optical switching device or a receive end device) and carries the optical data frame is a burst signal; therefore, if a conventional scrambling manner is used, the receive end cannot perform accurate descrambling, thereby causing a data transmission error. In view of this, in this embodiment of the present invention, manners of separate scrambling and independent descrambling are used. Herein, the "separate scrambling" means that a scrambler (or a device or a module that performs scrambling processing) is in a preset initial state (a first initial state) before the scrambling, and is restored to the preset first initial state after the scrambling processing, so as to wait for next scrambling processing. Likewise, the "separate descrambling" means that a descrambler (or a device or a module that performs descrambling processing) is in a preset initial state (a second initial state) before the descrambling, and is restored to the preset second initial state after the descrambling processing, so as to wait for next descrambling processing.

In addition, a method for enabling a scrambler to be in an initial state before scrambling processing may be, for example, enabling the scrambler when a MAC frame starts, and a method for enabling the scrambler to be restored to the initial state after the scrambling processing may be, for example, disabling the scrambler after the MAC frame ends. Likewise, a descrambler may be enabled when a MAC frame starts, and the descrambler may be disabled after the MAC frame ends.

In this embodiment of the present invention, a process of the scrambling processing is performing a bitwise exclusive-OR operation on first data (a MAC data frame or an IP data packet) and a pseudo-random sequence. The pseudo-random sequence is generated by an M-sequence generating apparatus. FIG. 3 shows a PN7 generator used as the M-sequence generating apparatus. Shift registers (shift register 1 to shift register 7 in FIG. 3) in a scrambler are in a preset initial state. That is, in this embodiment of the present invention, an M-sequence is a periodic sequence; by keeping an initial state of a shift register unchanged (being in a first initial state), a location at which a corresponding periodic sequence starts is kept unchanged, and after scrambling processing is completed, the scrambler needs to be reset to the initial state to wait for a next data frame.

Herein, it should be noted that in order to implement accurate data transmission of data, a first initial state needs to be corresponding to a second initial state. For example, initial states of shift registers of a scrambler and a descrambler are the same, so that locations at which corresponding periodic sequences start are the same.

It should be understood that the embodiment of the foregoing illustrated manner of a correspondence between the first initial state and the second initial state is merely exemplary, and the present invention is not limited thereto. Another solution that can implement accurate data transmission falls within the protection scope of the present invention.

According to the data transmission method in this embodiment of the present invention, after separate scrambling is performed on data, when corresponding separate descrambling is being performed, descrambling can be accurately performed on an optical data frame that is used as a burst signal and generated after format conversion processing.

After second data is generated by performing scrambling processing on the foregoing first data as described in the foregoing, the transmit end device may generate an optical data frame according to the second data. FIG. 4 shows a structure (or a format) of an optical data frame according to an embodiment of the present invention. As shown in FIG. 4, the optical data frame may include preamble field a (a field of a first preamble) located at a frame header, data start field b located after preamble field a in a transmission order, data field c located after data start field b in the transmission order, and data end field d located after data field c in the transmission order.

Preamble field a is used to carry preamble a' (a first preamble). In this embodiment of the present invention, preamble a' is used in restoration and adjustment performed by a module (such as a burst receiver or a burst signal receiver) that is in post-processing device D or optical switching device E and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

Before completing the foregoing restoration and adjustment, a burst receiver cannot accurately receive a burst signal, that is, cannot correctly identify, from a received burst signal, whether a sent bit is 1 or 0; therefore, in the prior art, after optical switching processing is performed on a medium signal in the prior art by using an optical switch, the medium signal is converted into a burst signal, and after the burst signal arrives at a receive end device, the receive end device needs to perform restoration and adjustment. However, when the restoration and adjustment are completed, a part of the burst signal has been transmitted (or lost), so that data carried in the lost part of the signal is also lost. In addition, in the prior art, when the optical switch performs switching processing on the medium signal used as a burst signal, the optical switch needs to perform parsing on the medium signal, so as to determine a destination address of data carried in the signal, and perform optical switching processing according to the destination address. Therefore, after the medium signal arrives at an optical switching device, the optical switching device (which is specifically a burst receiver in the optical switching device) needs to perform restoration and adjustment. However, when the restoration and adjustment are completed, a part of the medium signal has been transmitted (or lost), so that data carried in the lost part of the signal is also lost, and the optical switching device may not perform switching processing because the optical switching device cannot acquire an accurate destination address.

Correspondingly, in this embodiment of the present invention, preamble field a that carries the foregoing preamble a' is set at the frame header of the optical data frame, and after receiving the optical data frame, the burst receiver performs the foregoing restoration and adjustment. By setting a length of preamble a', each transmitted (or lost) part is preamble a' when the burst receiver performs the restoration and adjustment. Therefore, after the burst receiver can accurately acquire data, data start field b, data field c, and data end field d arrive, so that a loss of MAC data that needs to be transmitted between two Ethernet devices can be avoided.

In this embodiment of the present invention, the length of preamble a' may be greater than a preset value (a first preset value), and a size of the first preset value may be determined by collecting statistics or experimenting. For example, statistics on a parameter of a burst receiver (which may include burst receivers in post-processing device D and optical switching device E) used in a system may be collected, so as to determine a longest restoration and adjustment time, calculate, according to a signal transmission rate, a length corresponding to the restoration and adjustment time, and use the length as the first preset value.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Specifically, in this embodiment of the present invention, the transmit end device may determine the foregoing restoration and adjustment times of the receive end device and the optical switching device (which are specifically burst receivers in the receive end device and the optical switching device) in advance, and set the length of preamble a' (or preamble field a), so that transmission of preamble a' is completed after the receive end device and the optical switching device complete the foregoing restoration and adjustment, or data start field b, data field c, and data end field d arrive at the receive end device and the optical switching device after the receive end device and the optical switching device complete the foregoing restoration and adjustment.

Data start field b is used to carry data start character b', and data start character b' is used to identify a start of the data (second data).

Data field c is used to carry the foregoing second data.

Data end field d is used to carry data end character d', and data end character d' is used to identify an end of the data (second data).

It should be understood that the foregoing illustrated structure and configuration method of an optical data frame are merely exemplary, and the present invention is not limited thereto. For example, an interval or an idle field may also be set between preamble field a and data start field b, or in a case in which lengths of preambles a' (or preamble fields a) of optical data frames transmitted in a communications system are consistent (for example, restoration and adjustment times of burst receivers in all devices in the communications system are the same), setting of data start field b may be omitted.

Afterward, the transmit end device may generate an optical data packet according to the foregoing generated optical data frame. In this embodiment of the present invention, the optical data packet may include only the optical data frame (that is, situation 3a), or may include the optical data frame and a tagged frame (that is, situation 3b). The following separately describes subsequent procedures in the foregoing two situations.

### Situation 3a

Optionally, in this embodiment of the present invention, that determine a switching policy according to the optical data packet carried in the first optical signal includes:
after restoration and adjustment are performed on a burst signal according to the first preamble carried in the first optical signal, acquiring the second data from the first optical signal according to the data start character and the data end character;
performing first descrambling processing on the second data by using a descrambler, so as to acquire the first data, where the scrambler is in the preset first initial state before starting the first scrambling processing and after completing the first scrambling processing, the descrambler is in a preset second initial state before starting the first descrambling processing and after completing the first descrambling processing, and the second initial state is corresponding to the first initial state;
determining an output port of the second optical signal according to a destination address of the first data, where the output port is corresponding to the second Ethernet device;
determining an availability time period of a path between an input port and the output port of the second optical signal according to a length of the first data, where the input port is corresponding to the transmit end device; and
determining the switching policy according to the output port and the availability time period.

Specifically, the transmit end device may perform encapsulation processing on the optical data packet that includes the foregoing optical data frame, to generate an optical signal, and send the optical data packet to the optical switching device by using the foregoing optical signal. Alternatively, after performing encapsulation processing on the optical data frame, the transmit end device may modulate the optical data packet to an optical carrier and send the optical data packet to the optical switching device. The foregoing process and method may be similar to those in the prior art. Herein, descriptions of the process and the method are omitted to avoid repetition.

The optical switching device may perform optical switching processing on the optical signal, so as to send the optical data frame in the optical data packet to the receive end device.

FIG. 5 shows a structure of an optical switching device according to an embodiment of the present invention. As shown in FIG. 5, in this embodiment of the present invention, the optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, the optical switching device may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, the optical switching device (which is specifically the control module) may perform parsing on one of the signals (that is, a first signal, which is described by using optical signal X as an example in the following), so as to acquire the foregoing second data.

Specifically, after receiving, by using a burst receiver for example, optical signal X used as a burst signal, the control module needs to perform restoration and adjustment. In this case, because of existence of preamble a' (or preamble field a), the foregoing second data arrives at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

After the foregoing first data is restored, the control module may acquire a destination address of the first data, so that a receive end device to which optical signal Y (which is the optical data frame in optical signal Y) needs to be sent can be determined according to the destination address of the first data, and then an output port of optical signal Y or a path between an input port and an output port of optical signal Y can be determined. In addition, an availability time of the path or a holding time of the optical switch can be determined according to a length of the optical data frame.

Specifically, after receiving optical signal X (or the original optical signal before the beam splitter of optical signal X) sent by the transmit end device, the control module may determine input port N_{A} corresponding to the transmit end device, determine, according to the destination address of the first data, that the optical data frame in optical signal Y needs to be sent to the receive end device, and then determine output port N_{C} corresponding to the receive end device, so that input port N_{A} can be connected to output port N_{C} by controlling the optical switch, so as to form a transmission path, and the holding time of the optical switch can be determined according to the length of the optical data frame, so as to send the optical data frame only in optical signal Y.

It should be noted that a specific time (including a time required for resolving problems concerning a throughput, a collision, and the like, and a reaction time of the optical switch) is required by the optical switching device (which is specifically the control module) from receiving optical signal X to determining the foregoing transmission path and connection time period. Therefore, processing of delay such as a fiber delay may be performed on optical signal Y in a path from the beam splitter to input port N_{A}.

### Situation 3b

Optionally, in this embodiment of the present invention, the optical data packet further includes the tagged frame, the tagged frame is located before the optical data frame and includes a field of a second preamble and a destination address start field, a destination address field, and an optical data frame length field that are located after the field of the second preamble, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame; and
that determine a switching policy according to the optical data packet carried in the first optical signal includes:
after restoration and adjustment are performed on a burst signal according to the second preamble carried in the first optical signal, acquiring the destination address indicator and the data frame length indicator from the first optical signal according to the destination address start character;
determining an output port of the second optical signal according to the destination address indicator, where the output port is corresponding to the second Ethernet device;
determining an availability time period of a path between an input port and the output port of the second optical signal according to the data frame length indicator, where the input port is corresponding to the transmit end device; and
determining the switching policy according to the output port and the availability time period.

Specifically, the transmit end device may acquire a destination address of the first data, and generate, according to the destination address, the tagged frame corresponding to the foregoing optical data frame.

FIG. 6 shows a structure (or a format) of a tagged frame according to an embodiment of the present invention. As shown in FIG. 6, the tagged frame may include preamble field e (a field of a second preamble) located at a frame header, destination address start field f located after preamble field e in a transmission order, destination address field g located after destination address start field f in the transmission order, and optical data frame length field h located after destination address field g in the transmission order.

Preamble field e is used to carry preamble e' (a second preamble). In this embodiment of the present invention, preamble e' is used in restoration and adjustment performed by a module (such as a burst receiver or a burst signal receiver) that is in the optical switching device and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

In this embodiment of the present invention, preamble field e that carries the foregoing preamble e' is set at the frame header of the tagged frame, and after receiving the tagged frame, the burst receiver performs the foregoing restoration and adjustment. By setting a length of preamble e', each transmitted (or lost) part is preamble e' when the burst receiver performs the restoration and adjustment. Therefore, after the burst receiver can accurately acquire data, destination address start field f, destination address field g, and optical data frame length field h arrive, so that a loss of the destination address and the data frame length indicator can be avoided, and accurate optical switching processing can be implemented.

In this embodiment of the present invention, the length of preamble e' may be greater than a preset value (a second preset value), and a size of the second preset value may be determined by collecting statistics or experimenting. For example, statistics on a parameter of a burst receiver (including the burst receiver in the optical switching device) used in a system may be collected, so as to determine a longest restoration and adjustment time, calculate, according to a signal transmission rate, a length corresponding to the restoration and adjustment time, and use the length as the second preset value.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Specifically, in this embodiment of the present invention, the tagged frame is independently set; therefore, the optical switching device does not need to perform parsing on the optical data frame to acquire the destination address of the first data, and the transmit end device may determine the foregoing restoration and adjustment time of the receive end device (which is specifically the burst receiver in the receive end device) in advance, and set the length of preamble a' (or preamble field a), so that transmission of preamble a' is completed after the receive end device completes the foregoing restoration and adjustment, or data start field b, data field c, and data end field d arrive at the receive end device after the receive end device completes the foregoing restoration and adjustment.

In addition, the transmit end device may determine the foregoing restoration and adjustment time of the optical switching device (which is specifically the burst receiver in the optical switching device) in advance, and set the length of preamble e' (or preamble field e), so that transmission of preamble e' is completed after the optical switching device completes the foregoing restoration and adjustment, or destination address start field f, destination address field g, and optical data frame length field h arrive at the optical switching device after the optical switching device completes the foregoing restoration and adjustment.

Destination address start field f is used to carry destination address start character f, and the destination address start character f is used to identify a start of the destination address.

Destination address field g is used to carry destination address indicator g', where destination address indicator g' is used to indicate an Ethernet device or a post-processing device to which the optical data frame needs to be sent. For example, format conversion may be performed on the destination address (of the first data) in an Ethernet data format, so as to convert the destination address into a destination address in an optical data format, and use the destination address in the optical data format as destination address indicator g'.

Optical data frame length field h is used to carry optical data frame length indicator h', and optical data frame length indicator h' is used to indicate a length of the optical data frame.

It should be understood that the foregoing illustrated structure and configuration method of a tagged frame are merely exemplary, and the present invention is not limited thereto. For example, an interval or an idle field may also be set between preamble field e and data start field b.

Afterward, the transmit end device may generate the optical data packet according to the foregoing generated tagged frame and optical data frame.

Optionally, in this embodiment of the present invention, an interval or an idle field exists between the optical data frame and the tagged frame, and a length of the interval or the idle field is greater than or equal to a third preset value.

Specifically, the transmit end device may generate the optical data packet by combining the tagged frame with the optical data frame. Multiple policies may be used to combine the tagged frame with the optical data frame. For example, a serial bit stream manner may be used, that is, the tagged frame and the optical data frame are sent in a serial manner. For another example, a multi-wavelength policy may be used, that is, the tagged frame and the optical data frame are respectively transmitted by using signals with different wavelengths.

FIG. 7 shows a structure (or a format) of an optical data packet according to an embodiment of the present invention. As shown in FIG. 7, in this embodiment of the present invention, a tagged frame is located before an optical data frame at a time interval of T.

That is, in this embodiment of the present invention, after acquiring the tagged frame from the signal, the optical switching device needs to determine a switching policy for the optical data frame according to the tagged frame (the process is subsequently described in a similar manner). A specific time (including a time required for resolving problems concerning a throughput, a collision, and the like, and a reaction time of an optical switch) is required for the determining process. Therefore, the optical data frame is required to arrive at the optical switch after the optical switching device completes the foregoing determining process. Otherwise, a data loss may occur in the optical data frame. In this embodiment of the present invention, an interval (time interval, that is, format 2) or an idle field (that is, format 1) may be set between the tagged frame and the optical data frame, so that the optical data frame arrives at the optical switch after the optical switching device completes the foregoing calculation processing.

In this embodiment of the present invention, a length of the interval or the idle field may be greater than a preset value (third preset value), and a size of the third preset value may be determined by collecting statistics or experimenting. For example, statistics on parameters of optical switching devices (which may include the optical switching device) used in a system may be collected, so as to determine a longest calculation time, calculate, according to a signal transmission rate, a length corresponding to the calculation, and use the length as the third preset value.

Optionally, the third preset value is determined according to a third time, and the third time is a time required for determining the switching policy by the optical switching device according to the tagged frame.

Specifically, in this embodiment of the present invention, the transmit end device may determine the foregoing calculation time of the optical switching device in advance, and set the length of the foregoing interval or idle field, so that the optical data frame arrives at the optical switch after the optical switching device completes the foregoing calculation process.

According to the data transmission method in this embodiment of the present invention, by setting an idle field or an interval between a tagged frame and an optical data frame, a fiber delay line does not need to be performed, which facilitates miniaturization and integration of an optical switch. In addition, by setting the idle field between the tagged frame and the optical data frame, sent bit streams can be in a continuous mode, and use of a sending apparatus in a burst mode and an amplifying apparatus in the burst mode can be avoided. In addition, an optical switching device does not need to use a receiver in the burst mode to acquire the foregoing destination address, so that a length of the tagged frame is reduced, and complexity and a delay that are generated in a tagged frame reading process and control and scheduling information are reduced. For example, the optical switching device does not need to use the amplifying apparatus in the burst mode and reduces use of a receiving apparatus in the burst mode, which significantly reduces a cost of the switching architecture.

The optical switching device may perform optical switching processing on the optical signal (which is specifically the optical data frame in the optical data packet).

As shown in FIG. 5, in this embodiment of the present invention, an optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, the optical switching device may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device E (which is specifically a control module) may perform parsing on the tagged frame in one of the signals (that is, a first signal, which is described by using optical signal X as an example in the following), so as to determine destination address indicator g' and optical data frame length indicator h'.

Specifically, after receiving optical signal X used as a burst signal, a module (such as a burst receiver) that is in optical switching device E and is used to perform the foregoing parsing needs to perform restoration and adjustment. In this case, because of existence of preamble e' (or preamble field e), the foregoing destination address start field, destination address field, and optical data frame length field arrive at the burst receiver only after the restoration and adjustment are completed, so that it can be ensured that no data loss occurs in the acquired destination address indicator and optical data frame length indicator.

After the tagged frame is acquired, the switching policy may be determined for optical signal Y (which is specifically the optical data frame in optical signal Y) according to the tagged frame (which is specifically destination address indicator g' and optical data frame length indicator h'), that is, the control module may determine the destination address of the first data according to destination address indicator g', so that an Ethernet device or a post-processing device, corresponding to the Ethernet device, to which optical signal Y needs to be sent can be determined, and then an output port of optical signal Y or a path between an input port and an output port of optical signal Y can be determined. In addition, an availability time of the path or a holding time of an optical switch can be determined according to the length of the optical data frame.

Specifically, after receiving optical signal X (or the original optical signal before the beam splitter of optical signal X) sent by the transmit end device, the control module may determine input port N_{A} corresponding to the transmit end device, and determine the destination address of the first data according to destination address indicator g', so that it can be determined that the optical data frame in optical signal Y needs to be sent to the receive end device, and then output port N_{C} corresponding to the receive end device can be determined, so that input port N_{A} can be connected to output port N_{C} by controlling the optical switch, so as to form a transmission path, and the holding time of the optical switch can be determined according to the length of the optical data frame, so as to send the optical data frame only in optical signal Y.

As described in the foregoing, a specific time (including a time required for resolving problems concerning a throughput, a collision, and the like, and a reaction time of an optical switch) is required by the optical switching device (which is specifically the control module) from receiving optical signal X to determining the foregoing transmission path and connection time period. Therefore, the transmit end device may determine the foregoing calculation time of the optical switching device in advance, and set the length of the foregoing interval or idle field, so that the optical data frame arrives at the optical switch after the optical switching device completes the foregoing calculation process.

Therefore, in this embodiment of the present invention, the optical data frame carried in optical signal Y can arrive at the optical switch after the optical switching device determines that the optical data frame can be sent to the receive end device by using the optical switch, so that a loss of sending data of the optical data frame can be avoided.

It should be understood that the foregoing illustrated embodiment in which an idle field or an interval is set between a tagged frame and an optical data frame to avoid a data loss in the optical data frame is merely exemplary, and the present invention is not limited thereto. For example, processing of delay such as a fiber delay may be performed on optical signal Y in a path from a beam splitter to an output port.

The optical switching device may send the optical data frame to the receive end device.

The receive end device may receive the optical data frame, and parse out the second data from the optical data frame (which is specifically data field c). Specifically, after receiving the optical signal (that carries the optical data frame) used as a burst signal, a module (such as a burst receiver) that is in the optical switching device and is used to perform the foregoing parsing needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

Therefore, a process of transmitting the first data is completed.

According to the data transmission method in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

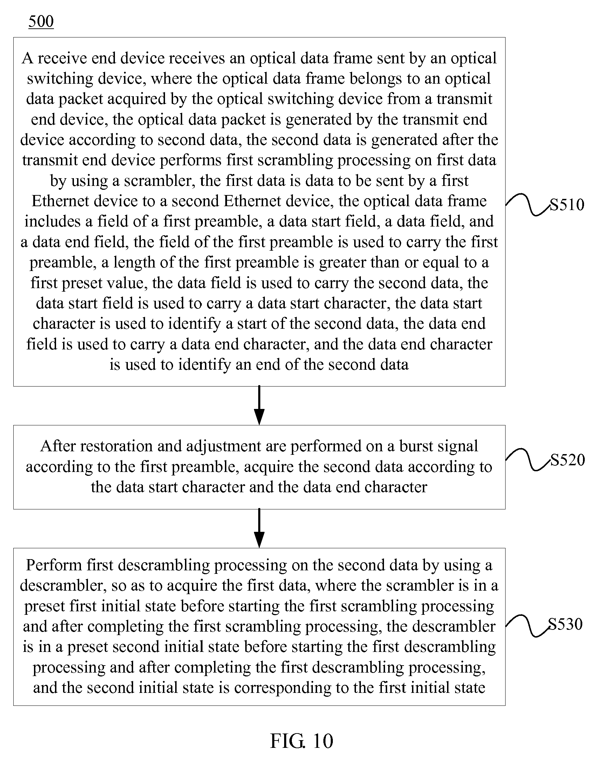

FIG. 10 shows a schematic flowchart of a data transmission method 500 described from a perspective of a receive end device according to an embodiment of the present invention. As shown in FIG. 10, the method 500 includes:
S510. The receive end device receives an optical data frame sent by an optical switching device, where the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data.
S520. After restoration and adjustment are performed on a burst signal according to the first preamble, acquire the second data according to the data start character and the data end character.
S530. Perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

During an operation, in addition, the first data includes a Media Access Control layer MAC data frame or an Internet Protocol IP data packet.

Technical solutions in the present invention may be applied to an Ethernet communications system. In addition, in the Ethernet system, point-to-point communication between Ethernet devices (or Ethernet client devices) is implemented by using an optical switching device. Specifically, in the existing Ethernet communications system, data exchange between the Ethernet client devices is performed by using an Ethernet data packet carried in an optical signal or an electrical signal. As described in the background, when optical switching processing is being performed on the Ethernet data packet by using the existing optical switching device, a data loss may occur. Therefore, in this embodiment of the present invention, before the foregoing optical switching processing is performed, format conversion processing (the process is subsequently described in detail) is performed on the data (including a MAC data frame or an Internet Protocol (IP, Internet Protocol) data packet in the Ethernet data packet) that needs to be exchanged and is carried in the foregoing Ethernet data packet, so as to avoid the data loss. A signal (an optical signal or an electrical signal used to carry the foregoing data) obtained after the foregoing optical switching processing is a burst signal, and an existing Ethernet client device cannot accurately receive the burst signal; therefore, in this embodiment of the present invention, after the foregoing optical switching processing is performed, format restoration processing needs to be performed on the foregoing data obtained after the format conversion processing, so as to restore the data to a signal that can be accurately received by the existing Ethernet client device, that is, a signal that complies with an existing Ethernet standard (the IEEE 802.3 standard formulated by IEEE) (the process is subsequently described in detail).

In this embodiment of the present invention, a device that performs the foregoing format conversion processing may be an independent device, which is located between a transmit end Ethernet client device and the optical switching device in a data transmission path of the Ethernet communications system, and likewise, a device that performs the foregoing format restoration processing may also be an independent device, which is located between the optical switching device and a receive end Ethernet client device in the data transmission path of the Ethernet communications system (that is, situation 4). Alternatively, a device that performs the foregoing format conversion processing may be a transmit end Ethernet client device, and likewise, a device that performs the foregoing format restoration processing may be a receive end Ethernet client device (that is, situation 5). The following separately describes the foregoing situation 4 and situation 5.

### Situation 4

FIG. 2 shows an interaction diagram of a data transmission method according to an embodiment of the present invention.

Herein, it should be noted that point-to-point communication means that there is a dedicated communication link between two devices, where the communication link includes a transmit end, a receive end, a transmission link, and the like. For example, one transmitter sends a signal only to one receiver. However, in multipoint-to-multipoint communication, there are N transmitters and N receivers, and all the transmitters can send information to the other N receivers. Therefore, one receiver can receive information from N transmitting sources. In this embodiment of the present invention, in order to implement point-to-point communication between Ethernet devices (or Ethernet client devices), in a case in which there are multiple transmit end Ethernet devices, a corresponding (same, for example) quantity of preprocessing devices need to be configured, and each transmit end Ethernet device is corresponding to each preprocessing device. For example, a preprocessing device is configured to perform format conversion processing only on data (a MAC data frame or an IP data packet) that is in an Ethernet format and from a corresponding transmit end Ethernet device. Likewise, in a case in which there are multiple receive end Ethernet devices, a same quantity of post-processing devices need to be configured, and each receive end Ethernet device is corresponding to each post-processing device, that is, a post-processing device is configured to perform format restoration processing on an optical data frame (a MAC data frame or an IP data packet obtained after the foregoing format conversion processing) that needs to be sent to a corresponding receive end Ethernet device.

It should be understood that the foregoing illustrated correspondence manners are merely exemplary, and the present invention is not limited thereto. Another correspondence manner that can implement point-to-point communication falls within the protection scope of the present invention.

Preprocessing device A (a first preprocessing device) in FIG. 2 is configured to perform format conversion processing on a data frame (data) from Ethernet device B (a first Ethernet device) in FIG. 2. Ethernet device B is a data sending party, and Ethernet device C (a second Ethernet device) is a data receiving party. In addition, in the embodiment shown in FIG. 2, post-processing device D (which is equivalent to an implementation body of the foregoing method 500, that is, a first post-processing device) performs format restoration processing on an optical data frame (data obtained after format conversion processing) that needs to be sent to Ethernet device C.

Specifically, as shown in FIG. 2, in S210, when Ethernet device B needs to send data to Ethernet device C, Ethernet device B may perform encapsulation and packaging processing on the data to generate an Ethernet data packet (a first Ethernet data packet) that includes target data (first data, that is, a MAC data frame or an IP data packet), and send the first Ethernet data packet to preprocessing device A by using a medium signal (electrical signal or optical signal). It should be noted that in this embodiment of the present invention, the foregoing process and method of generating and sending an Ethernet data packet and a medium signal may be similar to those in the prior art. Herein, descriptions of the process and the method are omitted to avoid repetition.

In S220, preprocessing device A may acquire the first Ethernet data packet from the medium signal (electrical signal or optical signal) sent by Ethernet device B, and parse out the foregoing first data from the first Ethernet data packet. In this embodiment of the present invention, the process and the method of acquiring an Ethernet data packet from a medium signal and parsing out first data from the Ethernet data packet may be similar to those in the prior art. For example, if the medium signal sent by Ethernet device B is an optical signal, first, optical-to-electrical conversion processing needs to be performed to convert the optical signal into an electrical signal, and the first data is acquired by using some functions at a physical layer specified in an Ethernet standard, such as block synchronization, 64/66B decoding, and descrambling. Herein, descriptions of the process and the method are omitted to avoid repetition.

In S230, preprocessing device A may perform format conversion processing on the first data, so as to generate an optical data frame that complies with an optical switching or optical receiving requirement (which is specifically a requirement that a data loss caused by performing restoration and adjustment on a burst signal can be avoided).

Specifically, first, in order to ensure balance between 0s and 1s in a bit stream, scrambling needs to be performed on the first data. A signal that is received by a receive end (an optical switching device or a receive end device) and carries the optical data frame is a burst signal; therefore, if a conventional scrambling manner is used, the receive end cannot perform accurate descrambling, thereby causing a data transmission error. In view of this, in this embodiment of the present invention, manners of separate scrambling and independent descrambling are used. Herein, the "separate scrambling" means that a scrambler (or a device or a module that performs scrambling processing) is in a preset initial state (a first initial state) before the scrambling, and is restored to the preset first initial state after the scrambling processing, so as to wait for next scrambling processing. Likewise, the "separate descrambling" means that a descrambler (or a device or a module that performs descrambling processing) is in a preset initial state (a second initial state) before the descrambling, and is restored to the preset second initial state after the descrambling processing, so as to wait for next descrambling processing.

In addition, a method for enabling a scrambler to be in an initial state before scrambling processing may be, for example, enabling the scrambler when a MAC frame starts, and a method for enabling the scrambler to be restored to the initial state after the scrambling processing may be, for example, disabling the scrambler after the MAC frame ends. Likewise, a descrambler may be enabled when a MAC frame starts, and the descrambler may be disabled after the MAC frame ends.

FIG. 3 shows a schematic diagram of scrambling processing according to an embodiment of the present invention. As shown in FIG. 3, a process of the scrambling processing is performing a bitwise exclusive-OR operation on first data (a MAC data frame or an IP data packet) and a pseudo-random sequence. The pseudo-random sequence is generated by an M-sequence generating apparatus. FIG. 3 shows a PN7 generator used as the M-sequence generating apparatus. Shift registers (shift register 1 to shift register 7 in FIG. 3) in a scrambler are in a preset initial state. That is, in this embodiment of the present invention, an M-sequence is a periodic sequence; by keeping an initial state of a shift register unchanged (being in a first initial state), a location at which a corresponding periodic sequence starts is kept unchanged, and after scrambling processing is completed, the scrambler needs to be reset to the initial state to wait for a next data frame.

Herein, it should be noted that in order to implement accurate data transmission of data, a first initial state needs to be corresponding to a second initial state. For example, initial states of shift registers of a scrambler and a descrambler are the same, so that locations at which corresponding periodic sequences start are the same.

It should be understood that the embodiment of the foregoing illustrated manner of a correspondence between the first initial state and the second initial state is merely exemplary, and the present invention is not limited thereto. Another solution that can implement accurate data transmission falls within the protection scope of the present invention.

According to the data transmission method in this embodiment of the present invention, after separate scrambling is performed on first data, when corresponding separate descrambling is being performed, descrambling can be accurately performed on an optical data frame that is used as a burst signal and generated after format conversion processing.

After second data (that is, a MAC data frame or an IP data packet obtained after the scrambling processing) is generated by performing scrambling processing on the foregoing first data as described in the foregoing, an optical data frame may be generated according to the second data. FIG. 4 shows a structure (or a format) of an optical data frame according to an embodiment of the present invention. As shown in FIG. 4, the optical data frame may include preamble field a (a field of a first preamble) located at a frame header, data start field b located after preamble field a in a transmission order, data field c located after data start field b in the transmission order, and data end field d located after data field c in the transmission order.

Preamble field a is used to carry preamble a' (a first preamble). In this embodiment of the present invention, preamble a' is used in restoration and adjustment performed by a module (such as a burst receiver or a burst signal receiver) that is in post-processing device D or optical switching device E and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

Before completing the foregoing restoration and adjustment, a burst receiver cannot accurately receive a burst signal, that is, cannot correctly identify, from a received burst signal, whether a sent bit is 1 or 0; therefore, in the prior art, after optical switching processing is performed on a medium signal in the prior art by using an optical switch, the medium signal is converted into a burst signal, and after the burst signal arrives at a receive end device, the receive end device needs to perform restoration and adjustment. However, when the restoration and adjustment are completed, a part of the burst signal has been transmitted (or lost), so that data carried in the lost part of the signal is also lost. In addition, in the prior art, when the optical switch performs switching processing on the medium signal used as a burst signal, the optical switch needs to perform parsing on the medium signal, so as to determine a destination address of data carried in the signal, and perform optical switching processing according to the destination address. Therefore, after the medium signal arrives at an optical switching device, the optical switching device (which is specifically a burst receiver in the optical switching device) needs to perform restoration and adjustment. However, when the restoration and adjustment are completed, a part of the medium signal has been transmitted (or lost), so that data carried in the lost part of the signal is also lost, and the optical switching device may not perform switching processing because the optical switching device cannot acquire an accurate destination address.

Correspondingly, in this embodiment of the present invention, preamble field a that carries the foregoing preamble a' is set at the frame header of the optical data frame, and after receiving the optical data frame, the burst receiver performs the foregoing restoration and adjustment. By setting a length of preamble a', each transmitted (or lost) part is preamble a' when the burst receiver performs the restoration and adjustment. Therefore, after the burst receiver can accurately acquire data, data start field b, data field c, and data end field d arrive, so that a loss of MAC data that needs to be transmitted between two Ethernet devices can be avoided.

In this embodiment of the present invention, the length of preamble a' may be greater than a preset value (a first preset value), and a size of the first preset value may be determined by collecting statistics or experimenting. For example, statistics on a parameter of a burst receiver (which may include burst receivers in post-processing device D and optical switching device E) used in a system may be collected, so as to determine a longest restoration and adjustment time, calculate, according to a signal transmission rate, a length corresponding to the restoration and adjustment time, and use the length as the first preset value.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device. For example, the first preset value may be greater than or equal to a sum or a total length of the first time and the second time.

Specifically, in this embodiment of the present invention, preprocessing device A may determine the foregoing restoration and adjustment times of post-processing device D and optical switching device E (which are specifically the burst receivers in post-processing device D and optical switching device E) in advance, and set the length of preamble a' (or preamble field a), so that transmission of preamble a' is completed after post-processing device D and optical switching device E complete the foregoing restoration and adjustment, or data start field b, data field c, and data end field d arrive at post-processing device D and optical switching device E after post-processing device D and optical switching device E complete the foregoing restoration and adjustment.

Data start field b is used to carry data start character b', and data start character b' is used to identify a start of the data (second data).

Data field c is used to carry the foregoing second data.

Data end field d is used to carry data end character d', and data end character d' is used to identify an end of the data (second data).

It should be understood that the foregoing illustrated structure and configuration method of an optical data frame are merely exemplary, and the present invention is not limited thereto. For example, an interval or an idle field may also be set between preamble field a and data start field b, or in a case in which lengths of preambles a' (or preamble fields a) of optical data frames transmitted in a communications system are consistent (for example, restoration and adjustment times of burst receivers in all devices in the communications system are the same), setting of data start field b may be omitted.

Afterward, preprocessing device A may generate an optical data packet according to the foregoing generated optical data frame. In this embodiment of the present invention, the optical data packet may include only the optical data frame (that is, situation 3a), or may include the optical data frame and a tagged frame (that is, situation 3b). The following separately describes subsequent procedures in the foregoing two situations.

### Situation 3a

In S240, preprocessing device A may perform encapsulation processing on the optical data packet that includes the foregoing optical data frame, to generate an optical signal, and send the optical data packet to optical switching device E by using the foregoing optical signal. Alternatively, after performing encapsulation processing on the optical data frame, preprocessing device A may modulate the optical data packet to an optical carrier and send the optical data packet to optical switching device E. The foregoing process and method may be similar to those in the prior art. Herein, descriptions of the process and the method are omitted to avoid repetition.

In S250, optical switching device E may perform optical switching processing on the optical signal, so as to send the optical data frame in the optical data packet to Ethernet device C (or post-processing device D).

FIG. 5 shows a structure of an optical switching device according to an embodiment of the present invention. As shown in FIG. 5, in this embodiment of the present invention, the optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device E may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device E (which is specifically a control module) may perform parsing on one of the signals (that is, a first signal, which is described by using optical signal X as an example in the following), so as to acquire the foregoing second data.

Specifically, after receiving, by using a burst receiver for example, optical signal X used as a burst signal, the control module needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

After the foregoing first data is restored, the control module may acquire a destination address of the first data, so that an Ethernet device (which is Ethernet device C herein) or a post-processing device, corresponding to the Ethernet device, (which is post-processing device D herein) to which optical signal Y (which is specifically the optical data frame in optical signal Y) needs to be sent can be determined according to the destination address of the first data, and then an output port of optical signal Y or a path between an input port and an output port of optical signal Y can be determined. In addition, an availability time of the path or a holding time of an optical switch can be determined according to a length of the optical data frame.

Specifically, after receiving optical signal X (or the original optical signal before the beam splitter of optical signal X) sent by preprocessing device A, the control module may determine input port N_{A} corresponding to preprocessing device A, determine, according to the destination address of the first data, that the optical data frame in optical signal Y needs to be sent to Ethernet device C, and then determine output port N_{C} corresponding to Ethernet device C, so that input port N_{A} can be connected to output port N_{C} by controlling the optical switch, so as to form a transmission path, and the holding time of the optical switch can be determined according to the length of the optical data frame, so as to send the optical data frame only in optical signal Y.

It should be noted that a specific time (including a time required for resolving problems concerning a throughput, a collision, and the like, and a reaction time of the optical switch) is required by optical switching device E (which is specifically the control module) from receiving optical signal X to determining the foregoing transmission path and connection time period. Therefore, processing of delay such as a fiber delay may be performed on optical signal Y in a path from the beam splitter to input port N_{A}.

### Situation 3b

Specifically, in S240', preprocessing device A may acquire a destination address of the first data, and generate, according to the destination address, the tagged frame corresponding to the foregoing optical data frame.

FIG. 6 shows a structure (or a format) of a tagged frame according to an embodiment of the present invention. As shown in FIG. 6, the tagged frame may include preamble field e (a field of a second preamble) located at a frame header, destination address start field f located after preamble field e in a transmission order, destination address field g located after destination address start field f in the transmission order, and optical data frame length field h located after destination address field g in the transmission order.

Preamble field e is used to carry preamble e' (a second preamble). In this embodiment of the present invention, preamble e' is used in restoration and adjustment performed by a module (such as a burst receiver or a burst signal receiver) that is in optical switching device E and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

In this embodiment of the present invention, preamble field e that carries the foregoing preamble e' is set at the frame header of the tagged frame, and after receiving the tagged frame, the burst receiver performs the foregoing restoration and adjustment. By setting a length of preamble e', each transmitted (or lost) part is preamble e' when the burst receiver performs the restoration and adjustment. Therefore, after the burst receiver can accurately acquire data, destination address start field f, destination address field g, and optical data frame length field h arrive, so that a loss of the destination address and the data frame length indicator can be avoided, and accurate optical switching processing can be implemented.

In this embodiment of the present invention, the length of preamble e' may be greater than a preset value (a second preset value), and a size of the second preset value may be determined by collecting statistics or experimenting. For example, statistics on a parameter of a burst receiver (including the burst receiver in optical switching device E) used in a system may be collected, so as to determine a longest restoration and adjustment time, calculate, according to a signal transmission rate, a length corresponding to the restoration and adjustment time, and use the length as the second preset value.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Specifically, in this embodiment of the present invention, the tagged frame is independently set; therefore, optical switching device E does not need to perform parsing on the optical data frame to acquire the destination address of the data, and preprocessing device A may determine the foregoing restoration and adjustment time of post-processing device D (which is specifically a burst receiver in post-processing device D) in advance, and set the length of preamble a' (or preamble field a), so that transmission of preamble a' is completed after post-processing device D completes the foregoing restoration and adjustment, or data start field b, data field c, and data end field d arrive at post-processing device D after post-processing device D completes the foregoing restoration and adjustment.

In addition, preprocessing device A may determine the foregoing restoration and adjustment time of optical switching device E (which is specifically the burst receiver in optical switching device E) in advance, and set the length of preamble e' (or preamble field e), so that transmission of preamble e' is completed after optical switching device E completes the foregoing restoration and adjustment, or destination address start field f, destination address field g, and optical data frame length field h arrive at optical switching device E after optical switching device E completes the foregoing restoration and adjustment.

Destination address start field f is used to carry destination address start character f, and the destination address start character f is used to identify a start of the destination address.

Destination address field g is used to carry the destination address of the first data.

Optical data frame length field h is used to carry optical data frame length indicator h', and optical data frame length indicator h' is used to indicate a length of the optical data frame.

It should be understood that the foregoing illustrated structure and configuration method of a tagged frame are merely exemplary, and the present invention is not limited thereto. For example, an interval or an idle field may also be set between preamble field e and data start field b.

Afterward, preprocessing device A may generate the optical data packet according to the foregoing generated tagged frame and optical data frame.

Specifically, preprocessing device A may generate the optical data packet by combining the tagged frame with the optical data frame. Multiple policies may be used to combine the tagged frame with the optical data frame. For example, a serial bit stream manner may be used, that is, the tagged frame and the optical data frame are sent in a serial manner. For another example, a multi-wavelength policy may be used, that is, the tagged frame and the optical data frame are respectively transmitted by using signals with different wavelengths.

FIG. 7 shows a structure (or a format) of an optical data packet according to an embodiment of the present invention. As shown in FIG. 7, in this embodiment of the present invention, a tagged frame is located before an optical data frame at a time interval of T.

That is, in this embodiment of the present invention, after acquiring the tagged frame from the signal, optical switching device E needs to determine a switching policy for the optical data frame according to the tagged frame (the process is subsequently described in a similar manner). A specific time (including a time required for resolving problems concerning a throughput, a collision, and the like, and a reaction time of an optical switch) is required for the determining process. Therefore, the optical data frame is required to arrive at the optical switch after optical switching device E completes the foregoing determining process. Otherwise, a data loss may occur in the optical data frame. In this embodiment of the present invention, an interval (time interval) or an idle field may be set between the tagged frame and the optical data frame, so that the optical data frame arrives at the optical switch after optical switching device E completes the foregoing calculation processing.

In this embodiment of the present invention, a length of the interval or the idle field may be greater than a preset value (third preset value), and a size of the third preset value may be determined by collecting statistics or experimenting. For example, statistics on parameters of optical switching devices (which may include optical switching device E) used in a system may be collected, so as to determine a longest calculation time, calculate, according to a signal transmission rate, a length corresponding to the calculation, and use the length as the third preset value.

Specifically, in this embodiment of the present invention, preprocessing device A may determine the foregoing calculation time of optical switching device E in advance, and set the length of the foregoing interval or idle field, so that the optical data frame arrives at the optical switch after optical switching device E completes the foregoing calculation process.

According to the data transmission method in this embodiment of the present invention, by setting an idle field or an interval between a tagged frame and an optical data frame, a fiber delay line does not need to be performed, which facilitates miniaturization and integration of an optical switch. In addition, by setting the idle field between the tagged frame and the optical data frame, sent bit streams can be in a continuous mode, and use of a sending apparatus in a burst mode and an amplifying apparatus in the burst mode can be avoided. In addition, optical switching device E does not need to use a receiver in the burst mode to acquire the foregoing destination address, so that a length of the tagged frame is reduced, and complexity and a delay that are generated in a tagged frame reading process and control and scheduling information are reduced. For example, optical switching device E does not need to use an amplifying apparatus and reduces use of a receiving apparatus in the burst mode, which significantly reduces a cost of the switching architecture.

In S250', optical switching device E may perform optical switching processing on the optical signal (which is specifically the optical data frame in the optical data packet).

As shown in FIG. 5, in this embodiment of the present invention, an optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device E may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device E (which is specifically a control module) may perform parsing on the tagged frame in one of the signals (that is, a first signal, which is described by using optical signal X as an example in the following), so as to determine the destination address of the first data and the length of the optical data frame.

Specifically, after receiving optical signal X used as a burst signal, a module (such as a burst receiver) that is in optical switching device E and is used to perform the foregoing parsing needs to perform restoration and adjustment. In this case, because of existence of preamble e' (or preamble field e), destination address start field f, destination address field g, and optical data frame length field h arrive at the burst receiver only after the restoration and adjustment are completed, so that it can be ensured that no data loss occurs in the acquired destination address of the first data and the acquired length of the optical data frame.

After the tagged frame is acquired, the switching policy may be determined for optical signal Y (which is specifically the optical data frame in optical signal Y) according to the tagged frame (which is specifically the destination address of the first data and the length of the optical data frame), that is, the control module may determine, according to the destination address of the first data, an Ethernet device (which is Ethernet device C herein) or a post-processing device, corresponding to the Ethernet device, (which is post-processing device D herein) to which optical signal Y needs to be sent, and then may determine an output port of optical signal Y or a path between an input port and an output port of optical signal Y. In addition, an availability time of the path or a holding time of an optical switch can be determined according to the length of the optical data frame.

Specifically, after receiving optical signal X (or the original optical signal before the beam splitter of optical signal X) sent by preprocessing device A, the control module may determine input port N_{A} corresponding to preprocessing device A, determine, according to the destination address of the first data, that the optical data frame in optical signal Y needs to be sent to Ethernet device C, and then determine output port N_{C} corresponding to Ethernet device C, so that input port N_{A} can be connected to output port N_{C} by controlling the optical switch, so as to form a transmission path, and the holding time of the optical switch can be determined according to the length of the optical data frame, so as to send the optical data frame only in optical signal Y.

As described in the foregoing, a specific time (including a time required for resolving problems concerning a throughput, a collision, and the like, and a reaction time of the optical switch) is required by optical switching device E (which is specifically the control module) from receiving optical signal X to determining the foregoing transmission path and connection time period. Therefore, preprocessing device A may determine the foregoing calculation time of optical switching device E in advance, and set the length of the foregoing interval or idle field, so that the optical data frame arrives at the optical switch after optical switching device E completes the foregoing calculation process.

Therefore, in this embodiment of the present invention, the optical data frame carried in optical signal Y can arrive at the optical switch after optical switching device E determines that the optical data frame can be sent to Ethernet device C or post-processing device D by using the optical switch, so that a loss of sending data of the optical data frame can be avoided.

It should be understood that the foregoing illustrated embodiment in which an idle field or an interval is set between a tagged frame and an optical data frame to avoid a data loss in the optical data frame is merely exemplary, and the present invention is not limited thereto. For example, processing of delay such as a fiber delay may be performed on optical signal Y in a path from a beam splitter to an output port.

In S260, optical switching device E may send the optical data frame to post-processing device D.

Optionally, in this embodiment of the present invention, the receive end device is the first post-processing device corresponding to the second Ethernet device; and
the method further includes:
generating a second Ethernet data packet according to the first data; and
sending the second Ethernet data packet to the second Ethernet device.

Specifically, in S270, post-processing device D may receive the optical data frame, and parse out the second data from the optical data frame (which is specifically the data field). Specifically, after receiving the optical signal (that carries the optical data frame) used as a burst signal, a module (such as a burst receiver) that is in optical switching device E and is used to perform the foregoing parsing needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

In addition, post-processing device D may perform encapsulation processing on the first data to encapsulate the first data as a standard medium signal (that carries the second Ethernet data packet). For example, the foregoing encapsulation process may be completed according to a method and a procedure that are specified in the IEEE802.3 protocol.

In S280, post-processing device D may send the second Ethernet data packet to Ethernet device C.

Therefore, a process of transmitting the first data is completed.

### Situation 5

FIG. 8 shows an interaction diagram of a data transmission method according to an embodiment of the present invention. Ethernet device F (a first Ethernet device) in FIG. 8 is a data sending party, and Ethernet device F performs the foregoing format conversion processing; Ethernet device G (which is equivalent to an implementation body of the foregoing method 500, that is, a second Ethernet device) is a data receiving party, and Ethernet device G performs the foregoing format restoration processing.

Specifically, as shown in FIG. 8, in S310, when Ethernet device F needs to send data to Ethernet device G, Ethernet device F may generate data (first data) according to the data. In this embodiment of the present invention, the foregoing process and method may be similar to those in the prior art. Herein, descriptions of the process and the method are omitted to avoid repetition.

In S320, Ethernet device F may perform format conversion processing on the first data, so as to generate an optical data frame that complies with an optical switching or optical receiving requirement (which is specifically a requirement that a data loss caused by performing restoration and adjustment on a burst signal can be avoided).

Specifically, first, in order to ensure balance between 0s and 1s in a bit stream, scrambling needs to be performed on the first data. A signal that is received by a receive end (an optical switching device or a receive end device) and carries the optical data frame is a burst signal; therefore, if a conventional scrambling manner is used, the receive end cannot perform accurate descrambling, thereby causing a data transmission error. In view of this, in this embodiment of the present invention, manners of separate scrambling and independent descrambling are used. Herein, the "separate scrambling" means that a scrambler (or a device or a module that performs scrambling processing) is in a preset initial state (a first initial state) before the scrambling, and is restored to the preset first initial state after the scrambling processing, so as to wait for next scrambling processing. Likewise, the "separate descrambling" means that a descrambler (or a device or a module that performs descrambling processing) is in a preset initial state (a second initial state) before the descrambling, and is restored to the preset second initial state after the descrambling processing, so as to wait for next descrambling processing.

In addition, a method for enabling a scrambler to be in an initial state before scrambling processing may be, for example, enabling the scrambler when a MAC frame starts, and a method for enabling the scrambler to be restored to the initial state after the scrambling processing may be, for example, disabling the scrambler after the MAC frame ends. Likewise, a descrambler may be enabled when a MAC frame starts, and the descrambler may be disabled after the MAC frame ends.

As shown in FIG. 3, a process of the scrambling processing is performing a bitwise exclusive-OR operation on data and a pseudo-random sequence. The pseudo-random sequence is generated by an M-sequence generating apparatus. FIG. 3 shows a PN7 generator used as the M-sequence generating apparatus. Shift registers (shift register 1 to shift register 7 in FIG. 3) in a scrambler are in a preset initial state. That is, in this embodiment of the present invention, an M-sequence is a periodic sequence; by keeping an initial state of a shift register unchanged (being in a first initial state), a location at which a corresponding periodic sequence starts is kept unchanged, and after scrambling processing is completed, the scrambler needs to be reset to the initial state to wait for a next data frame.

Herein, it should be noted that in order to implement accurate data transmission of data, a first initial state needs to be corresponding to a second initial state. For example, initial states of shift registers of a scrambler and a descrambler are the same, so that locations at which corresponding periodic sequences start are the same.

It should be understood that the embodiment of the foregoing illustrated manner of a correspondence between the first initial state and the second initial state is merely exemplary, and the present invention is not limited thereto. Another solution that can implement accurate data transmission falls within the protection scope of the present invention.

According to the data transmission method in this embodiment of the present invention, after separate scrambling is performed on data, when corresponding separate descrambling is being performed, descrambling can be accurately performed on an optical data frame that is used as a burst signal and generated after format conversion processing.

After second data is generated by performing scrambling processing on the foregoing first data as described in the foregoing, an optical data frame may be generated according to the second data. FIG. 4 shows a structure (or a format) of an optical data frame according to an embodiment of the present invention. As shown in FIG. 4, the optical data frame may include preamble field a (a field of a first preamble) located at a frame header, data start field b located after preamble field a in a transmission order, data field c located after data start field b in the transmission order, and data end field d located after data field c in the transmission order.

Preamble field a is used to carry preamble a' (a first preamble). In this embodiment of the present invention, preamble a' is used in restoration and adjustment performed by a module (such as a burst receiver or a burst signal receiver) that is in Ethernet device G or optical switching device H and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

Before completing the foregoing restoration and adjustment, a burst receiver cannot accurately receive a burst signal, that is, cannot correctly identify, from a received burst signal, whether a sent bit is 1 or 0; therefore, in the prior art, after optical switching processing is performed on a medium signal in the prior art by using an optical switch, the medium signal is converted into a burst signal, and after the burst signal arrives at a receive end device, the receive end device needs to perform restoration and adjustment. However, when the restoration and adjustment are completed, a part of the burst signal has been transmitted (or lost), so that data carried in the lost part of the signal is also lost. In addition, in the prior art, when the optical switch performs switching processing on the medium signal used as a burst signal, the optical switch needs to perform parsing on the medium signal, so as to determine a destination address of data carried in the signal, and perform optical switching processing according to the destination address. Therefore, after the medium signal arrives at an optical switching device, the optical switching device (which is specifically a burst receiver in the optical switching device) needs to perform restoration and adjustment. However, when the restoration and adjustment are completed, a part of the medium signal has been transmitted (or lost), so that data carried in the lost part of the signal is also lost, and the optical switching device may not perform switching processing because the optical switching device cannot acquire an accurate destination address.

Correspondingly, in this embodiment of the present invention, preamble field a that carries the foregoing preamble a' is set at the frame header of the optical data frame, and after receiving the optical data frame, the burst receiver performs the foregoing restoration and adjustment. By setting a length of preamble a', each transmitted (or lost) part is preamble a' when the burst receiver performs the restoration and adjustment. Therefore, after the burst receiver can accurately acquire data, data start field b, data field c, and data end field d arrive, so that a loss of MAC data that needs to be transmitted between two Ethernet devices can be avoided.

In this embodiment of the present invention, the length of preamble a' may be greater than a preset value (a first preset value), and a size of the first preset value may be determined by collecting statistics or experimenting. For example, statistics on a parameter of a burst receiver (which may include burst receivers in Ethernet device G and optical switching device H) used in a system may be collected, so as to determine a longest restoration and adjustment time, calculate, according to a signal transmission rate, a length corresponding to the restoration and adjustment time, and use the length as the first preset value.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Specifically, in this embodiment of the present invention, Ethernet device F may determine the foregoing restoration and adjustment times of Ethernet device G and optical switching device H (which are specifically the burst receivers in Ethernet device G and optical switching device H) in advance, and set the length of preamble a' (or preamble field a), so that transmission of preamble a' is completed after Ethernet device G and optical switching device H complete the foregoing restoration and adjustment, or data start field b, data field c, and data end field d arrive at Ethernet device G and optical switching device H after Ethernet device G and optical switching device H complete the foregoing restoration and adjustment.

Data start field b is used to carry data start character b', and data start character b' is used to identify a start of the data (second data).

Data field c is used to carry the foregoing second data.

Data end field d is used to carry data end character d', and data end character d' is used to identify an end of the data (second data).

It should be understood that the foregoing illustrated structure and configuration method of an optical data frame are merely exemplary, and the present invention is not limited thereto. For example, an interval or an idle field may also be set between preamble field a and data start field b, or in a case in which lengths of preambles a' (or preamble fields a) of optical data frames transmitted in a communications system are consistent (for example, restoration and adjustment times of burst receivers in all devices in the communications system are the same), setting of data start field b may be omitted.

Afterward, Ethernet device F may generate an optical data packet according to the foregoing generated optical data frame. In this embodiment of the present invention, the optical data packet may include only the optical data frame (that is, situation 5a), or may include the optical data frame and a tagged frame (that is, situation 5b). The following separately describes subsequent procedures in the foregoing two situations.

### Situation 5a

In S330, Ethernet device F may perform encapsulation processing on the optical data packet that includes the foregoing optical data frame, to generate an optical signal.

In S340, Ethernet device F may send the optical data packet to optical switching device H by using the foregoing optical signal. Alternatively, after performing encapsulation processing on the optical data frame, Ethernet device F may modulate the optical data packet to an optical carrier and send the optical data packet to optical switching device H. The foregoing process and method may be similar to those in the prior art. Herein, descriptions of the process and the method are omitted to avoid repetition.

In S350, optical switching device H may perform optical switching processing on the optical signal, so as to send the optical data frame in the optical data packet to Ethernet device C (or Ethernet device G).

FIG. 5 shows a structure of an optical switching device according to an embodiment of the present invention. As shown in FIG. 5, in this embodiment of the present invention, the optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device H may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device H (which is specifically a control module) may perform parsing on one of the signals (that is, a first signal, which is described by using optical signal X as an example in the following), so as to acquire the foregoing second data.

Specifically, after receiving, by using a burst receiver for example, optical signal X used as a burst signal, the control module needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

After the foregoing first data is restored, the control module may acquire a destination address of the first data, so that an Ethernet device (which is Ethernet device C herein) or a post-processing device, corresponding to the Ethernet device, (which is Ethernet device G herein) to which optical signal Y (which is specifically the optical data frame in optical signal Y) needs to be sent can be determined according to the destination address of the first data, and then an output port of optical signal Y or a path between an input port and an output port of optical signal Y can be determined. In addition, an availability time of the path or a holding time of an optical switch can be determined according to a length of the optical data frame.

Specifically, after receiving optical signal X (or the original optical signal before the beam splitter of optical signal X) sent by Ethernet device F, the control module may determine input port N_{A} corresponding to Ethernet device F, determine, according to the destination address of the first data, that the optical data frame in optical signal Y needs to be sent to Ethernet device C, and then determine output port N_{C} corresponding to Ethernet device C, so that input port N_{A} can be connected to output port N_{C} by controlling the optical switch, so as to form a transmission path, and the holding time of the optical switch can be determined according to the length of the optical data frame, so as to send the optical data frame only in optical signal Y.

It should be noted that a specific time (including a time required for resolving problems concerning a throughput, a collision, and the like, and a reaction time of the optical switch) is required by optical switching device H (which is specifically the control module) from receiving optical signal X to determining the foregoing transmission path and connection time period. Therefore, processing of delay such as a fiber delay may be performed on optical signal Y in a path from the beam splitter to input port N_{A}.

### Situation 5b

Specifically, in S330', Ethernet device F may acquire a destination address of the first data, and generate, according to the destination address, the tagged frame corresponding to the foregoing optical data frame.

FIG. 6 shows a structure (or a format) of a tagged frame according to an embodiment of the present invention. As shown in FIG. 6, the tagged frame may include preamble field e (a field of a second preamble) located at a frame header, destination address start field f located after preamble field e in a transmission order, destination address field g located after destination address start field f in the transmission order, and optical data frame length field h located after destination address field g in the transmission order.

Preamble field e is used to carry preamble e' (a second preamble). In this embodiment of the present invention, preamble e' is used in restoration and adjustment performed by a module (such as a burst receiver or a burst signal receiver) that is in optical switching device H and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

In this embodiment of the present invention, preamble field e that carries the foregoing preamble e' is set at the frame header of the tagged frame, and after receiving the tagged frame, the burst receiver performs the foregoing restoration and adjustment. By setting a length of preamble e', each transmitted (or lost) part is preamble e' when the burst receiver performs the restoration and adjustment. Therefore, after the burst receiver can accurately acquire data, subsequent destination address start field f, destination address field g, and optical data frame length field h arrive, so that a loss of the destination address and the data frame length indicator can be avoided, and accurate optical switching processing can be implemented.

In this embodiment of the present invention, the length of preamble e' may be greater than a preset value (a second preset value), and a size of the second preset value may be determined by collecting statistics or experimenting. For example, statistics on a parameter of a burst receiver (including the burst receiver in optical switching device H) used in a system may be collected, so as to determine a longest restoration and adjustment time, calculate, according to a signal transmission rate, a length corresponding to the restoration and adjustment time, and use the length as the second preset value.

Optionally, the first preset value is determined according to a first time, and the first time is a time required for performing restoration and adjustment on a burst signal by the second Ethernet device or the first post-processing device corresponding to the second Ethernet device.

The second preset value is determined according to a second time, and the second time is a time required for performing restoration and adjustment on a burst signal by the optical switching device.

Specifically, in this embodiment of the present invention, the tagged frame is independently set; therefore, optical switching device H does not need to perform parsing on the optical data frame to acquire the destination address of the data, and Ethernet device F may determine the foregoing restoration and adjustment time of Ethernet device G (which is specifically a burst receiver in Ethernet device G) in advance, and set the length of preamble a' (or preamble field a), so that transmission of preamble a' is completed after Ethernet device G completes the foregoing restoration and adjustment, or data start field b, data field c, and data end field d arrive at Ethernet device G after Ethernet device G completes the foregoing restoration and adjustment.

In addition, Ethernet device F may determine the foregoing restoration and adjustment time of optical switching device H (which is specifically the burst receiver in optical switching device H) in advance, and set the length of preamble e' (or preamble field e), so that transmission of preamble e' is completed after optical switching device H completes the foregoing restoration and adjustment, or destination address start field f, destination address field g, and optical data frame length field h arrive at optical switching device H after optical switching device H completes the foregoing restoration and adjustment.

Destination address start field f is used to carry destination address start character f, and the destination address start character f is used to identify a start of the destination address.

Destination address field g is used to carry the destination address of the first data.

Optical data frame length field h is used to carry optical data frame length indicator h', and optical data frame length indicator h' is used to indicate a length of the optical data frame.

It should be understood that the foregoing illustrated structure and configuration method of a tagged frame are merely exemplary, and the present invention is not limited thereto. For example, an interval or an idle field may also be set between preamble field e and data start field b.

Afterward, Ethernet device F may generate the optical data packet according to the foregoing generated tagged frame and optical data frame.

Specifically, Ethernet device F may generate the optical data packet by combining the tagged frame with the optical data frame. Multiple policies may be used to combine the tagged frame with the optical data frame. For example, a serial bit stream manner may be used, that is, the tagged frame and the optical data frame are sent in a serial manner. For another example, a multi-wavelength policy may be used, that is, the tagged frame and the optical data frame are respectively transmitted by using signals with different wavelengths. FIG. 7 shows a structure (or a format) of an optical data packet according to an embodiment of the present invention. A tagged frame is located before an optical data frame at a time interval of T.

That is, in this embodiment of the present invention, after acquiring the tagged frame from the signal, optical switching device H needs to determine a switching policy for the optical data frame according to the tagged frame (the process is subsequently described in a similar manner). A specific time (including a time required for resolving problems concerning a throughput, a collision, and the like, and a reaction time of an optical switch) is required for the determining process. Therefore, the optical data frame is required to arrive at the optical switch after optical switching device H completes the foregoing determining process. Otherwise, a data loss may occur in the optical data frame. In this embodiment of the present invention, an interval (time interval) or an idle field may be set between the tagged frame and the optical data frame, so that the optical data frame arrives at the optical switch after optical switching device H completes the foregoing calculation processing.

In this embodiment of the present invention, a length of the interval or the idle field may be greater than a preset value (third preset value), and a size of the third preset value may be determined by collecting statistics or experimenting. For example, statistics on parameters of optical switching devices (which may include optical switching device H) used in a system may be collected, so as to determine a longest calculation time, calculate, according to a signal transmission rate, a length corresponding to the calculation, and use the length as the third preset value.

Optionally, the third preset value is determined according to a third time, and the third time is a time required for determining the switching policy by the optical switching device according to the tagged frame.

Specifically, in this embodiment of the present invention, Ethernet device F may determine the foregoing calculation time of optical switching device H in advance, and set the length of the foregoing interval or idle field, so that the optical data frame arrives at the optical switch after optical switching device H completes the foregoing calculation process.

According to the data transmission method in this embodiment of the present invention, by setting an idle field or an interval between a tagged frame and an optical data frame, a fiber delay line does not need to be performed, which facilitates miniaturization and integration of an optical switch. In addition, by setting the idle field between the tagged frame and the optical data frame, sent bit streams can be in a continuous mode, and use of a sending apparatus in a burst mode and an amplifying apparatus in the burst mode can be avoided. In addition, optical switching device H does not need to use a receiver in the burst mode to acquire the foregoing destination address, so that a length of the tagged frame is reduced, and complexity and a delay that are generated in a tagged frame reading process and control and scheduling information are reduced. For example, optical switching device H does not need to use an amplifying apparatus and reduces use of a receiving apparatus in the burst mode, which significantly reduces a cost of the switching architecture.

In S340', Ethernet device F may send the optical data packet (that includes the optical data frame and the tagged frame) to optical switching device H by using the foregoing optical signal. Alternatively, after performing encapsulation processing on the optical data frame, Ethernet device F may modulate the optical data packet to an optical carrier and send the optical data packet to optical switching device H. The foregoing process and method may be similar to those in the prior art. Herein, descriptions of the process and the method are omitted to avoid repetition.

In S350', optical switching device H may perform optical switching processing on the optical signal (which is specifically the optical data frame in the optical data packet).

As shown in FIG. 5, in this embodiment of the present invention, an optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

After receiving the optical signal, optical switching device H may split the optical signal into two signals, that is, optical signal X and optical signal Y, by using a beam splitter for example. It should be noted that in this embodiment of the present invention, data carried in optical signal X and optical signal Y may be the same as data carried in the original signal before beam splitting.

Afterward, optical switching device H (which is specifically a control module) may perform parsing on the tagged frame in one of the signals (that is, a first signal, which is described by using optical signal X as an example in the following), so as to determine the destination address of the first data and the length of the optical data frame.

Specifically, after receiving optical signal X used as a burst signal, a module (such as a burst receiver) that is in optical switching device H and is used to perform the foregoing parsing needs to perform restoration and adjustment. In this case, because of existence of preamble e' (or preamble field e), the foregoing destination address start field f, destination address field g, and optical data frame length field h arrive at the burst receiver only after the restoration and adjustment are completed, so that it can be ensured that no data loss occurs in the acquired destination address of the first data and the acquired length of the optical data frame.

After the tagged frame is acquired, the switching policy may be determined for optical signal Y (which is specifically the optical data frame in optical signal Y) according to the tagged frame (which is specifically the destination address of the first data and the length of the optical data frame), that is, the control module may determine, according to the destination address of the first data, an Ethernet device (which is Ethernet device G herein) to which optical signal Y needs to be sent, and then may determine an output port of optical signal Y or a path between an input port and an output port of optical signal Y. In addition, an availability time of the path or a holding time of an optical switch can be determined according to the length of the optical data frame.

Specifically, after receiving optical signal X (or the original optical signal before the beam splitter of optical signal X) sent by Ethernet device F, the control module may determine input port N_{A} corresponding to Ethernet device F, determine, according to the destination address of the first data, that the optical data frame in optical signal Y needs to be sent to Ethernet device G, and then determine output port N_{C} corresponding to Ethernet device G, so that input port N_{A} can be connected to output port N_{C} by controlling the optical switch, so as to form a transmission path, and the holding time of the optical switch can be determined according to the length of the optical data frame, so as to send the optical data frame only in optical signal Y.

As described in the foregoing, a specific time (including a time required for resolving problems concerning a throughput, a collision, and the like, and a reaction time of the optical switch) is required by optical switching device H (which is specifically the control module) from receiving optical signal X to determining the foregoing transmission path and connection time period. Therefore, Ethernet device F may determine the foregoing calculation time of optical switching device H in advance, and set the length of the foregoing interval or idle field, so that the optical data frame arrives at the optical switch after optical switching device H completes the foregoing calculation process.

Therefore, in this embodiment of the present invention, the optical data frame carried in optical signal Y can arrive at the optical switch after optical switching device H determines that the optical data frame can be sent to Ethernet device G by using the optical switch, so that a loss of sending data of the optical data frame can be avoided.

It should be understood that the foregoing illustrated embodiment in which an idle field or an interval is set between a tagged frame and an optical data frame to avoid a data loss in the optical data frame is merely exemplary, and the present invention is not limited thereto. For example, processing of delay such as a fiber delay may be performed on optical signal Y in a path from a beam splitter to an output port.

In S360, optical switching device H may send the optical data frame to Ethernet device G.

In S370, Ethernet device G may receive the optical data frame, and parse out the second data from the optical data frame (which is specifically the data field). Specifically, after receiving the optical signal (that carries the optical data frame) used as a burst signal, a module (such as a burst receiver) that is in optical switching device H and is used to perform the foregoing parsing needs to perform restoration and adjustment. In this case, because of existence of preamble a' (or preamble field a), the foregoing data start field b, data field c, and data end field d arrive at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

Therefore, a process of transmitting the first data is completed.

According to the data transmission method in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

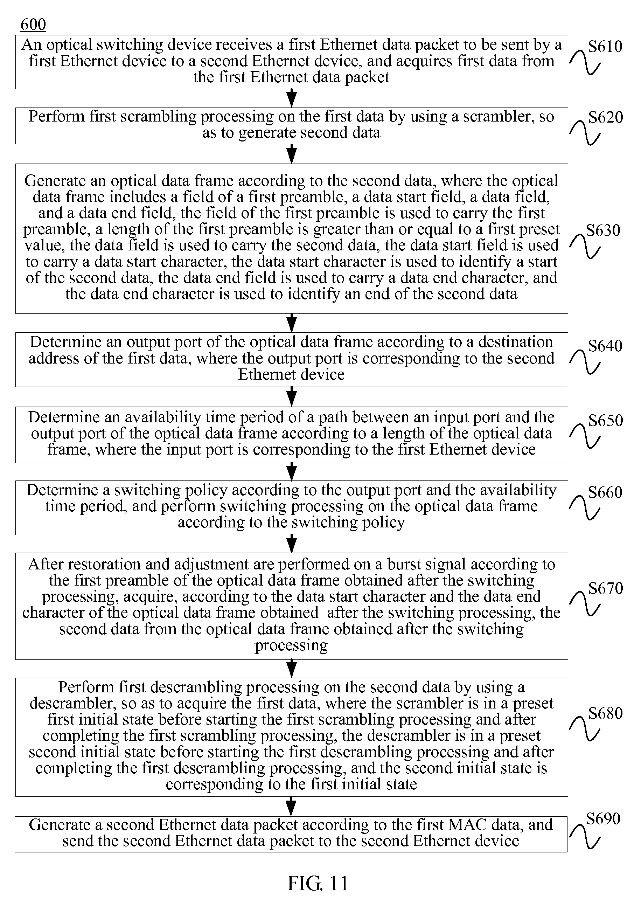

FIG. 11 shows a schematic flowchart of a data transmission method 600 described from a perspective of an optical switching device according to an embodiment of the present invention. As shown in FIG. 11, the method 600 includes:
S610. The optical switching device receives a first Ethernet data packet that a first Ethernet device needs to send to a second Ethernet device, and acquires first Media Access Control layer data from the first Ethernet data packet.
S620. Perform first scrambling processing on the first data by using a scrambler, so as to generate second data, where the scrambler is in a preset first initial state before starting the first scrambling processing and after completing the first scrambling processing.
S630. Generate an optical data frame according to the second data, where the optical data frame includes a field of a first preamble and a data start field, a data field, and a data end field that are located after the field of the first preamble, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data.
S640. Determine an output port of the optical data frame according to a destination address of the first data, where the output port is corresponding to the second Ethernet device.
S650. Determine an availability time period of a path between an input port and the output port of the optical data frame according to a length of the optical data frame, where the input port is corresponding to the first Ethernet device.
S660. Determine a switching policy according to the output port and the availability time period, and perform switching processing on the optical data frame according to the switching policy.
S670. After restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing.
S680. Perform first descrambling processing on the second data by using a descrambler, so as to acquire the first data, where the descrambler is in a preset second initial state before starting the first descrambling processing and after completing the first descrambling processing, and the second initial state is corresponding to the first initial state.
S690. Generate a second Ethernet data packet according to the first data, and send the second Ethernet data packet to the second Ethernet device.

Technical solutions in the present invention may be applied to an Ethernet communications system. In addition, in the Ethernet system, point-to-point communication between Ethernet devices (or Ethernet client devices) is implemented by using an optical switching device. Specifically, in the existing Ethernet communications system, data exchange between the Ethernet client devices is performed by using an Ethernet data packet (which is specifically a MAC data frame or an Internet protocol (IP, Internet Protocol) data packet in the Ethernet data packet) that is carried in an optical signal or an electrical signal. As described in the background, when optical switching processing is being performed on the Ethernet data packet by using the existing optical switching device, a data loss may occur. Therefore, in this embodiment of the present invention, before the foregoing optical switching processing is performed, format conversion processing (the process is subsequently described in detail) is performed on the foregoing data, so as to avoid the data loss. A signal (an optical signal or an electrical signal used to carry the foregoing data) obtained after the foregoing optical switching processing is a burst signal, and an existing Ethernet client device cannot accurately receive the burst signal; therefore, in this embodiment of the present invention, after the foregoing optical switching processing is performed, format restoration processing needs to be performed on the foregoing data obtained after the format conversion processing, so as to restore the data to a signal that can be accurately received by the existing Ethernet client device, that is, a signal that complies with an existing Ethernet standard (the IEEE 802.3 standard formulated by IEEE) (the process is subsequently described in detail). In this embodiment of the present invention, the optical switching device performs the foregoing format conversion and format restoration processing.

Herein, it should be noted that point-to-point communication means that there is a dedicated communication link between two devices, where the communication link includes a transmit end, a receive end, a transmission link, and the like. For example, one transmitter sends a signal only to one receiver. However, in multipoint-to-multipoint communication, there are N transmitters and N receivers, and all the transmitters can send information to the other N receivers. Therefore, one receiver can receive information from N transmitting sources. In this embodiment of the present invention, in order to implement point-to-point communication between Ethernet devices (or Ethernet client devices), in a case in which there are multiple transmit end Ethernet devices, a corresponding (same, for example) quantity of preprocessing modules (function of the module is subsequently described in detail) need to be configured in the optical switching device, and each transmit end Ethernet device is corresponding to each preprocessing module. For example, a preprocessing module is used to perform format conversion processing only on data (first data) that is in an Ethernet format and from a corresponding transmit end Ethernet device. Likewise, in a case in which there are multiple receive end Ethernet devices, a same quantity of post-processing modules (function of the module is subsequently described in detail) need to be configured, and each receive end Ethernet device is corresponding to each post-processing device, that is, a post-processing module is used to perform format restoration processing on an optical data frame (data obtained after the foregoing format conversion processing) that needs to be sent to a corresponding receive end Ethernet device.

It should be understood that the foregoing illustrated correspondence manners are merely exemplary, and the present invention is not limited thereto. Another correspondence manner that can implement point-to-point communication falls within the protection scope of the present invention. For example, multiple preprocessing modules may also be corresponding to one transmit end Ethernet device. In this case, one preprocessing module may be selected from the multiple preprocessing devices to serve the transmit end Ethernet device.

Specifically, when the first Ethernet device needs to send data to the second Ethernet device, the first Ethernet device may perform encapsulation and packaging processing on the data to generate an Ethernet data packet (a first Ethernet data packet) that includes the data (first data) that needs to be sent, and send the first Ethernet data packet to the optical switching device by using a medium signal (electrical signal or optical signal). It should be noted that in this embodiment of the present invention, the foregoing process and method of generating and sending an Ethernet data packet and a medium signal may be similar to those in the prior art. Herein, descriptions of the process and the method are omitted to avoid repetition.

Preprocessing module W that is in the optical switching device and is corresponding to the first Ethernet device may acquire the first Ethernet data packet from the medium signal (electrical signal or optical signal) sent by the first Ethernet device, and parse out the foregoing first data (a MAC data frame or an IP data packet) from the first Ethernet data packet. In this embodiment of the present invention, the process and the method of acquiring an Ethernet data packet from a medium signal and parsing out data from the Ethernet data packet may be similar to those in the prior art. For example, if a medium signal sent by the first Ethernet device is an optical signal, first, optical-to-electrical conversion processing needs to be performed to convert the optical signal into an electrical signal, and first data is acquired by using some functions at a physical layer specified in an Ethernet standard, such as block synchronization, 64/66B decoding, and descrambling. Herein, descriptions of the process and the method are omitted to avoid repetition.

Preprocessing module W may perform format conversion processing on the first data, so as to generate an optical data frame that complies with an optical switching or optical receiving requirement (which is specifically a requirement that a data loss caused by performing restoration and adjustment on a burst signal can be avoided).

Specifically, first, in order to ensure balance between 0s and 1s in a bit stream, preprocessing module W needs to perform scrambling on the first data. A signal that is received by a receive end (an optical switching device or a receive end device) and carries the optical data frame is a burst signal; therefore, if a conventional scrambling manner is used, the receive end cannot perform accurate descrambling, thereby causing a data transmission error. In view of this, in this embodiment of the present invention, manners of separate scrambling and independent descrambling are used. Herein, the "separate scrambling" means that a scrambler (or a device or a module that performs scrambling processing) is in a preset initial state (a first initial state) before the scrambling, and is restored to the preset first initial state after the scrambling processing, so as to wait for next scrambling processing. Likewise, the "separate descrambling" means that a descrambler (or a device or a module that performs descrambling processing) is in a preset initial state (a second initial state) before the descrambling, and is restored to the preset second initial state after the descrambling processing, so as to wait for next descrambling processing.

In addition, a method for enabling a scrambler to be in an initial state before scrambling processing may be, for example, enabling the scrambler when a MAC frame starts, and a method for enabling the scrambler to be restored to the initial state after the scrambling processing may be, for example, disabling the scrambler after the MAC frame ends. Likewise, a descrambler may be enabled when a MAC frame starts, and the descrambler may be disabled after the MAC frame ends.

FIG. 3 shows a schematic diagram of scrambling processing according to an embodiment of the present invention. As shown in FIG. 3, a process of the scrambling processing is performing a bitwise exclusive-OR operation on first data and a pseudo-random sequence. The pseudo-random sequence is generated by an M-sequence generating apparatus. FIG. 3 shows a PN7 generator used as the M-sequence generating apparatus. Shift registers (shift register 1 to shift register 7 in FIG. 3) in a scrambler are in a preset initial state. That is, in this embodiment of the present invention, an M-sequence is a periodic sequence; by keeping an initial state of a shift register unchanged (being in a first initial state), a location at which a corresponding periodic sequence starts is kept unchanged, and after scrambling processing is completed, the scrambler needs to be reset to the initial state to wait for a next data frame.

Herein, it should be noted that in order to implement accurate data transmission of data, a first initial state needs to be corresponding to a second initial state. For example, initial states of shift registers of a scrambler and a descrambler are the same, so that locations at which corresponding periodic sequences start are the same.

It should be understood that the embodiment of the foregoing illustrated manner of a correspondence between the first initial state and the second initial state is merely exemplary, and the present invention is not limited thereto. Another solution that can implement accurate data transmission falls within the protection scope of the present invention.

According to the data transmission method in this embodiment of the present invention, after separate scrambling is performed on first data, when corresponding separate descrambling is being performed, descrambling can be accurately performed on an optical data frame that is used as a burst signal and generated after format conversion processing.

After second data is generated by performing scrambling processing on the foregoing first data as described in the foregoing, an optical data frame may be generated according to the second data. FIG. 4 shows a structure (or a format) of an optical data frame according to an embodiment of the present invention. As shown in FIG. 4, the optical data frame may include preamble field a (a field of a first preamble) located at a frame header, data start field b located after preamble field a in a transmission order, data field c located after data start field b in the transmission order, and data end field d located after data field c in the transmission order.

Preamble field a is used to carry preamble a' (a first preamble). In this embodiment of the present invention, preamble a' is used in restoration and adjustment performed by an organization (such as a burst receiver or a burst signal receiver) that is in post-processing module Z (which is corresponding to the second Ethernet device) and is used to receive an optical signal used as a burst signal and acquire data from the optical signal, where the restoration and adjustment may be, for example, enabling of a laser, that is, laser on, restoration of a transimpedance amplifier TIA, restoration of a limiting amplifier LA, or recovery of a burst-mode clock.

That is, optionally, the restoration and adjustment on a burst signal include at least one of the following adjustments: enabling of a laser, restoration of a transimpedance amplifier, restoration of a limiting amplifier, and recovery of a burst-mode clock.

It should be understood that the foregoing illustrated restoration and adjustment are merely exemplary, and the present invention is not limited thereto. Other adjustment that needs to be performed before a receiver can acquire data from a burst optical signal without a data loss falls within the protection scope of the present invention.

Before completing the foregoing restoration and adjustment, a burst receiver cannot accurately receive a burst signal, that is, cannot correctly identify, from a received burst signal, whether a sent bit is 1 or 0; therefore, in the prior art, after optical switching processing is performed on a medium signal in the prior art by using an optical switch, the medium signal is converted into a burst signal, and after the burst signal arrives at a receive end device, the receive end device needs to perform restoration and adjustment. However, when the restoration and adjustment are completed, a part of the burst signal has been transmitted (or lost), so that data carried in the lost part of the signal is also lost. In addition, in the prior art, when the optical switch performs switching processing on the medium signal used as a burst signal, the optical switch needs to perform parsing on the medium signal, so as to determine a destination address of data carried in the signal, and perform optical switching processing according to the destination address. Therefore, after the medium signal arrives at an optical switching device, the optical switching device (which is specifically a burst receiver in the optical switching device) needs to perform restoration and adjustment. However, when the restoration and adjustment are completed, a part of the medium signal has been transmitted (or lost), so that data carried in the lost part of the signal is also lost, and the optical switching device may not perform switching processing because the optical switching device cannot acquire an accurate destination address.

Correspondingly, in this embodiment of the present invention, preamble field a that carries the foregoing preamble a' is set at the frame header of the optical data frame, and after receiving the optical data frame, the burst receiver performs the foregoing restoration and adjustment. By setting a length of preamble a', each transmitted (or lost) part is preamble a' when the burst receiver performs the restoration and adjustment. Therefore, after the burst receiver can accurately acquire data, data start field b, data field c, and data end field d arrive, so that a loss of MAC data that needs to be transmitted between two Ethernet devices can be avoided.

In this embodiment of the present invention, the length of preamble a' may be greater than a preset value (a first preset value), and a size of the first preset value may determine a parameter of a burst receiver, so as to determine a longest restoration and adjustment time, calculate, according to a signal transmission rate, a length corresponding to the restoration and adjustment time, and use the length as the first preset value.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Specifically, in this embodiment of the present invention, preprocessing module W may determine the foregoing restoration and adjustment time of post-processing module Z (which is specifically a burst receiver in post-processing module Z) in advance, and set the length of preamble a' (or preamble field a), so that preamble a' arrives at post-processing module Z after post-processing module Z completes the foregoing restoration and adjustment.

Data start field b is used to carry data start character b', and data start character b' is used to identify a start of the data (second data).

Data field c is used to carry the foregoing second data.

Data end field d is used to carry data end character d', and data end character d' is used to identify an end of the data (second data).

It should be understood that the foregoing illustrated structure and configuration method of an optical data frame are merely exemplary, and the present invention is not limited thereto. For example, an interval or an idle field may also be set between preamble field a and data start field b, or in a case in which lengths of preambles a' (or preamble fields a) of optical data frames transmitted in a communications system are consistent (for example, restoration and adjustment times of burst receivers in all devices in the communications system are the same), setting of data start field b may be omitted.

Afterward, preprocessing module W may perform encapsulation processing on an optical data packet that includes the foregoing optical data frame, to generate an optical signal, and send the optical data packet to optical switching module Q of the optical switching device by using the foregoing optical signal. The foregoing process and method may be similar to those in the prior art. Herein, descriptions of the process and the method are omitted to avoid repetition.

Optical switching module Q may perform optical switching processing on the optical signal, so as to send the optical data frame in the optical data packet to post-processing module Z.

FIG. 5 shows a structure of optical switching module Q according to an embodiment of the present invention. As shown in FIG. 5, in this embodiment of the present invention, the optical switching device may include an optical switch and a control module, where the optical switch may have N input ports and N output ports. The N input ports respectively communicate with N preprocessing devices (or transmit end Ethernet devices). The N output ports communicate with N post-processing devices (or receive end Ethernet devices).

The control module may acquire a destination address of the first data and a length of the optical data frame from preprocessing module W, so that an Ethernet device (which is the second Ethernet device herein) or a post-processing module, corresponding to the Ethernet device, (which is post-processing module Z herein) to which the optical data frame needs to be sent can be determined according to the destination address of the first data, and then an output port of the optical data frame or a path between an input port or an output port of the optical data frame can be determined. In addition, an availability time of the path or a holding time of the optical switch can be determined according to the length of the optical data frame.

Specifically, the control module may determine input port N_{A} corresponding to preprocessing module W, determine, according to the destination address of the first data, that the optical data frame needs to be sent to the second Ethernet device, and then determine output port N_{C} corresponding to second Ethernet device C (or post-processing module Z), so that input port N_{A} can be connected to output port N_{C} by controlling the optical switch, so as to form a transmission path, and the holding time of the optical switch can be determined according to the length of the optical data frame, so as to send only the optical data frame.

It should be noted that a specific time (including a time required for resolving problems concerning a throughput, a collision, and the like, and a reaction time of the optical switch) is required by the control module for determining the foregoing transmission path and connection time period. Therefore, processing of delay such as a fiber delay may be performed on optical signal Y in a path from a beam splitter to input port N_{A}.

Therefore, as described in the foregoing, the optical switching device may send the optical data frame to post-processing module Z.

Post-processing module Z may receive the optical data frame, and parse out the second data from the optical data frame (which is specifically the data field). Specifically, after receiving the optical signal (that carries the optical data frame) used as a burst signal, an organization (such as a burst receiver) that is in post-processing module Z and is used to perform the foregoing parsing needs to perform restoration and adjustment. In this case, because of existence of preamble a' (or preamble field a), the foregoing second data arrives at the burst receiver only after the restoration and adjustment are completed, so that it can be ensured that no data loss occurs in the acquired second data.

After the second data is acquired, the foregoing separate descrambling may be performed on the second data by using a descrambler, so as to restore the foregoing first data. Herein, the process of performing separate descrambling by the descrambler is corresponding to the foregoing process of performing separate scrambling by the scrambler. Herein, a description of the process is omitted to avoid repetition.

In addition, post-processing module Z may perform encapsulation processing on the first data to encapsulate the first data as a standard medium signal (that carries a second Ethernet data packet). For example, the foregoing encapsulation process may be completed according to a method and a procedure that are specified in the IEEE802.3 protocol.

Post-processing module Z may send the second Ethernet data packet to the second Ethernet device.

Therefore, a process of transmitting the first data is completed.

According to the data transmission method in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

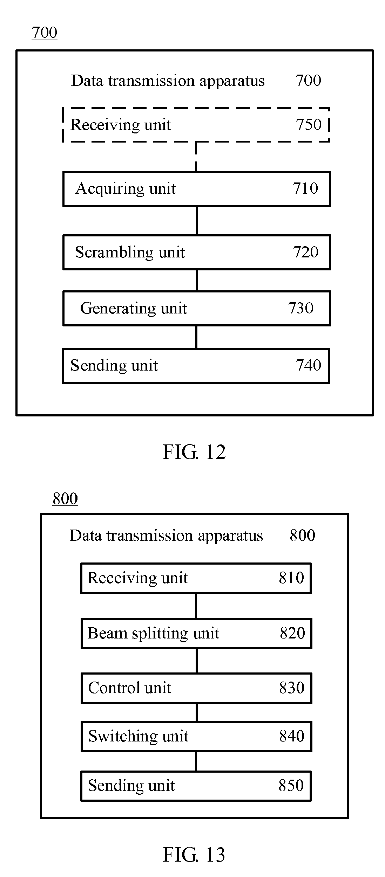

The data transmission methods in the embodiments of the present invention are described in detail in the foregoing with reference to FIG. 1 to FIG. 11, and a data transmission apparatus in an embodiment of the present invention is described in detail in the following with reference to FIG. 12.

FIG. 12 shows a data transmission apparatus 700 according to an embodiment of the present invention. As shown in FIG. 12, the apparatus 700 includes:
an acquiring unit 710, configured to acquire first data, where the first data is data to be sent by a first Ethernet device to a second Ethernet device;
a scrambling unit 720, configured to perform first scrambling processing on the first data by using a scrambler, so as to generate second data, where the scrambler is in a preset first initial state before starting the first scrambling processing and after completing the first scrambling processing;
a generating unit 730, configured to generate, according to the second data, an optical data packet that includes an optical data frame, where the optical data frame includes a field of a first preamble and a data start field, a data field, and a data end field that are located after the field of the first preamble, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and
a sending unit 740, configured to send an optical signal that carries the optical data packet to an optical switching device, so that the optical switching device performs switching processing on the optical signal, so as to send the optical data frame to the second Ethernet device.

Optionally, the data transmission apparatus is the first Ethernet device.

Optionally, the apparatus 700 further includes:
a receiving unit 750, configured to receive a first Ethernet data packet that the first Ethernet device needs to send to the second Ethernet device.

The acquiring unit 710 is specifically configured to acquire the first data from the first Ethernet data packet.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Optionally, the generating unit 730 is further configured to generate, according to the second data and a destination address of the first data, an optical data packet that includes a tagged frame and an optical data frame, where the tagged frame is located before the optical data frame, the tagged frame includes a field of a second preamble and a destination address start field, a destination address field, and an optical data frame length field that are located after the field of the second preamble, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

Optionally, the generating unit 730 is specifically configured to generate, according to the second data, the optical data packet that includes the optical data frame and the tagged frame, where an interval or an idle field exists between the optical data frame and the tagged frame, and a length of the interval or the idle field is greater than or equal to a third preset value.

Optionally, the third preset value is determined according to a third time, and the third time is a time required for determining a switching policy by the optical switching device according to the tagged frame.

The data transmission apparatus 700 according to this embodiment of the present invention may be corresponding to a transmit end device (a first Ethernet device or a first preprocessing device) in a method in an embodiment of the present invention. In addition, all units, that is, modules in the data transmission apparatus 700 and the foregoing other operations and/or functions are separately intended to implement corresponding procedures of the method 100 in FIG. 1. For brevity, details are not described herein again.

According to the data transmission apparatus in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

FIG. 13 shows a data transmission apparatus 800 according to an embodiment of the present invention. As shown in FIG. 13, the apparatus 800 includes:
a receiving unit 810, configured to receive an optical signal that is sent by a transmit end device and carries an optical data packet, where the optical data packet is generated according to second data, the second data is generated after the transmit end device performs first scrambling processing on first data by using a scrambler, the first data is data to be sent by a first Ethernet device to a second Ethernet device, the optical data packet includes an optical data frame, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; where
as an example, the first data includes a Media Access Control layer MAC data frame or an Internet Protocol IP data packet;
a beam splitting unit 820, configured to perform beam splitting processing on the optical signal, so as to acquire a first optical signal and a second optical signal;
a control unit 830, configured to determine a switching policy according to the optical data packet carried in the first optical signal; and
a switching unit 840, configured to perform switching processing on the second optical signal according to the switching policy, so as to send the optical data frame in the second optical signal to the second Ethernet device by using a sending unit 850.

Optionally, the control unit is specifically configured to: after restoration and adjustment are performed on a burst signal according to the first preamble carried in the first optical signal, acquire the second data from the first optical signal according to the data start character and the data end character;
configured to perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state;
configured to determine an output port of the second optical signal according to a destination address of the first data, where the output port is corresponding to the second Ethernet device;
configured to determine an availability time period of a path between an input port and the output port of the second optical signal according to a length of the first data, where the input port is corresponding to the transmit end device; and
configured to determine the switching policy according to the output port and the availability time period.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by an optical switching device.

Optionally, the optical data packet further includes a tagged frame, the tagged frame is located before the optical data frame and includes a field of a second preamble and a destination address start field, a destination address field, and an optical data frame length field that are located after the field of the second preamble, the field of the second preamble is used to carry the second preamble, a length of the second preamble is greater than or equal to a second preset value, the destination address field is used to carry a destination address of the first data, the destination address start field is used to carry a destination address start character, the destination address start character is used to identify a start of the destination address, the optical data frame length field is used to carry an optical data frame length indicator, and the optical data frame length indicator is used to indicate a length of the optical data frame; and
the control unit 830 is specifically configured to: after restoration and adjustment are performed on a burst signal according to the second preamble carried in the first optical signal, acquire the destination address of the first data and the data frame length indicator from the first optical signal according to the destination address start character;
configured to determine an output port of the second optical signal according to the destination address of the first data, where the output port is corresponding to the second Ethernet device;
configured to determine an availability time period of a path between an input port and the output port of the second optical signal according to the data frame length indicator, where the input port is corresponding to the transmit end device; and
configured to determine the switching policy according to the output port and the availability time period.

Optionally, an interval or an idle field exists between the optical data frame and the tagged frame, and a length of the interval or the idle field is greater than or equal to a third preset value.

Optionally, the third preset value is determined according to a third time, and the third time is a time required for determining the switching policy by the optical switching device according to the tagged frame.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

The data transmission apparatus 800 according to this embodiment of the present invention may be corresponding to an optical switching device in a method in an embodiment of the present invention. In addition, all units, that is, modules in the data transmission apparatus 800 and the foregoing other operations and/or functions are separately intended to implement corresponding procedures of the method 400 in FIG. 9. For brevity, details are not described herein again.

According to the data transmission apparatus in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

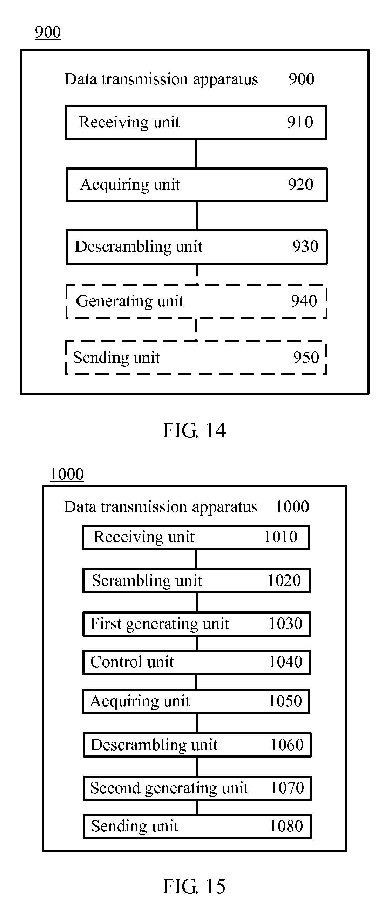

FIG. 14 shows a data transmission apparatus 900 according to an embodiment of the present invention. As shown in FIG. 14, the apparatus 900 includes:
a receiving unit 910, configured to receive an optical data frame sent by an optical switching device, where the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
an acquiring unit 920, configured to: after restoration and adjustment are performed on a burst signal according to the first preamble, acquire the second data according to the data start character and the data end character; and
a descrambling unit 930, configured to: perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

Optionally, the first data includes a Media Access Control layer MAC data frame or an Internet Protocol IP data packet.

The data transmission apparatus is the second Ethernet device.

Optionally, the apparatus 900 further includes:
a generating unit 940, configured to generate a second Ethernet data packet according to the first data; and
a sending unit 950, configured to send the second Ethernet data packet to the second Ethernet device.

Optionally, the first preset value is determined according to a first time, and the first time is a time required for performing restoration and adjustment on a burst signal by the second Ethernet device or a first post-processing device corresponding to the second Ethernet device; or
the first preset value is determined according to the first time and a second time, and the second time is a time required for performing restoration and adjustment on a burst signal by the optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

The data transmission apparatus 900 according to this embodiment of the present invention may be corresponding to a receive end device (a first post-processing device or a second Ethernet device) in a method in an embodiment of the present invention. In addition, all units, that is, modules in the data transmission apparatus 900 and the foregoing other operations and/or functions are separately intended to implement corresponding procedures of the method 500 in FIG. 10. For brevity, details are not described herein again.

According to the data transmission apparatus in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

FIG. 15 shows a data transmission apparatus 1000 according to an embodiment of the present invention. As shown in FIG. 15, the apparatus 1000 includes:
a receiving unit 1010, configured to: receive a first Ethernet data packet to be sent by a first Ethernet device to a second Ethernet device, and acquire first data from the first Ethernet data packet, where the first data includes a Media Access Control layer MAC data frame or an Internet Protocol IP data packet;
a scrambling unit 1020, configured to perform first scrambling processing on the first data by using a scrambler, so as to generate second data, where the scrambler is in a preset first initial state before starting the first scrambling processing and after completing the first scrambling processing;
a first generating unit 1030, configured to generate an optical data frame according to the second data, where the optical data frame includes a field of a first preamble and a data start field, a data field, and a data end field that are located after the field of the first preamble, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
a control unit 1040, configured to determine an output port of the optical data frame according to a destination address of the first data, where the output port is corresponding to the second Ethernet device;
configured to determine an availability time period of a path between an input port and the output port of the optical data frame according to a length of the optical data frame, where the input port is corresponding to the first Ethernet device;
configured to determine a switching policy according to the output port and the availability time period; and
configured to perform switching processing on the optical data frame according to the switching policy;
an acquiring unit 1050, configured to: after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing;
a descrambling unit 1060, configured to perform first descrambling processing on the second data by using a descrambler, so as to acquire the first data, where the descrambler is in a preset second initial state before starting the first descrambling processing and after completing the first descrambling processing, and the second initial state is corresponding to the first initial state;
a second generating unit 1070, configured to generate a second Ethernet data packet according to the first data; and
a sending unit 1080, configured to send the second Ethernet data packet to the second Ethernet device.

Optionally, the first preset value is determined according to a time required for performing restoration and adjustment on a burst signal by an optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

The data transmission apparatus 1000 according to this embodiment of the present invention may be corresponding to an optical switching device in a method in an embodiment of the present invention. In addition, all units, that is, modules in the data transmission apparatus 1000 and the foregoing other operations and/or functions are separately intended to implement corresponding procedures of the method 600 in FIG. 11. For brevity, details are not described herein again.

According to the data transmission apparatus in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

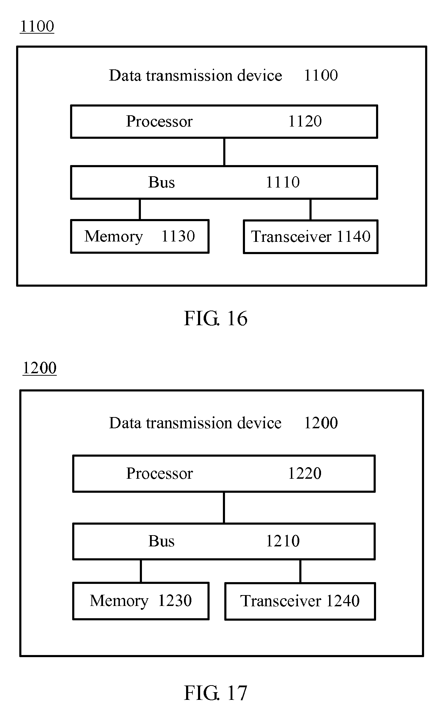

FIG. 16 shows a data transmission device 1100 according to an embodiment of the present invention. As shown in FIG. 16, the device 1100 includes:
a bus 1110;
a processor 1120 connected to the bus 1110;
a memory 1130 connected to the bus 1110; and
a transceiver 1140 connected to the bus 1110.

The processor 1120 invokes, by using the bus 1110, a program stored in the memory 1130, so as to: acquire first data, where the first data is data to be sent by a first Ethernet device to a second Ethernet device, and the first data includes a Media Access Control layer MAC data frame or an Internet Protocol IP data packet;
perform first scrambling processing on the first data by using a scrambler, so as to generate second data;
generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and
control the transceiver 1140 to send an optical signal that carries the optical data packet to an optical switching device, so that the optical switching device performs switching processing on the optical signal, so as to send the optical data frame to the second Ethernet device.

Optionally, the data transmission apparatus is the first Ethernet device.

Optionally, the processor 1120 is further configured to: control the transceiver 1140 to receive a first Ethernet data packet that the first Ethernet device needs to send to the second Ethernet device; and
configured to acquire the first data from the first Ethernet data packet.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

Optionally, the processor 1120 is further configured to generate, according to the second data and a destination address of the first data, an optical data packet that includes a tagged frame and an optical data frame, where the tagged frame is located before the optical data frame, the tagged frame includes a field of a second preamble and a destination address start field, a destination address field, and an optical data frame length field that are located after the field of the second preamble, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

Optionally, the processor 1120 is specifically configured to generate, according to the second data, the optical data packet that includes the optical data frame and the tagged frame, where an interval or an idle field exists between the optical data frame and the tagged frame, and a length of the interval or the idle field is greater than or equal to a third preset value.

Optionally, the third preset value is determined according to a third time, and the third time is a time required for determining a switching policy by the optical switching device according to the tagged frame.

In this embodiment of the present invention, the processor may further be referred to as a CPU. The memory may include a read-only memory and a random access memory, and provides an instruction and data for the processor. A part of the memory may further include a nonvolatile random access memory (NVRAM). In specific application, the data transmission device may be built in or the data transmission device itself may be a standard Ethernet communications device such as a personal computer, and modules of the data transmission device are coupled together by using a bus system, where in addition to a data bus, the bus system includes a power bus, a control bus, and a status signal bus.

The processor can implement or execute steps and logical block diagrams disclosed in method embodiments of the present invention. A general-purpose processor may be a microprocessor, or a processor may be any conventional processor, decoder, or the like. Steps of methods disclosed with reference to embodiments of the present invention may be directly executed and completed by a hardware processor, or executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory, and a decoding unit or a processing unit reads information from the memory and completes the steps of the foregoing methods in combination with hardware of the decoding unit or the processing unit.

It should be understood that in this embodiment of the present invention, the processor may be a central processing unit (Central Processing Unit, "CPU" for short), or the processor may be another general-purpose processor, a digital signal processor (DSP), an application-specific integrated circuit (ASIC), a field-programmable gate array (FPGA) or another programmable logical device, a discrete gate or a transistor logic device, a discrete hardware component, or the like. A general-purpose processor may be a microprocessor, or the processor may be any conventional processor or the like.

In an implementation process, the steps of the foregoing methods may be completed by using an integrated logic circuit of hardware in the processor or an instruction in a form of software. Steps of methods disclosed with reference to embodiments of the present invention may be directly executed and completed by a hardware processor, or executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor reads information from the memory and completes the steps of the foregoing methods in combination with hardware of the processor. To avoid repetition, details are not described herein again.

The data transmission device 1110 according to this embodiment of the present invention may be corresponding to a transmit end device (a first Ethernet device or a first preprocessing device) in a method in an embodiment of the present invention. In addition, all units, that is, modules in the data transmission device 1110 and the foregoing other operations and/or functions are separately intended to implement corresponding procedures of the method 100 in FIG. 1. For brevity, details are not described herein again.

According to the data transmission device in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

FIG. 17 shows a data transmission device 1200 according to an embodiment of the present invention. As shown in FIG. 17, the device 1200 includes:
a bus 1210;
a processor 1220 connected to the bus 1210;
a memory 1230 connected to the bus 1210; and
a transceiver 1240 connected to the bus 1210.

The processor 1220 invokes, by using the bus 1210, a program stored in the memory 1230, so as to: control the transceiver 1240 to receive an optical signal that is sent by a transmit end device and carries an optical data packet, where the optical data packet is generated according to second data, the second data is generated after the transmit end device performs first scrambling processing on first data by using a scrambler, the first data is data to be sent by a first Ethernet device to a second Ethernet device, the first data includes a Media Access Control layer MAC data frame or an Internet Protocol IP data packet, the optical data packet includes an optical data frame, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
perform beam splitting processing on the optical signal, so as to acquire a first optical signal and a second optical signal;
determine a switching policy according to the optical data packet carried in the first optical signal; and
perform switching processing on the second optical signal according to the switching policy, so as to control the transceiver 1240 to send the optical data frame in the second optical signal to the second Ethernet device.

Optionally, a control unit is specifically configured to: after restoration and adjustment are performed on a burst signal according to the first preamble carried in the first optical signal, acquire the second data from the first optical signal according to the data start character and the data end character;
configured to perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state;
configured to determine an output port of the second optical signal according to a destination address of the first data, where the output port is corresponding to the second Ethernet device;
configured to determine an availability time period of a path between an input port and the output port of the second optical signal according to a length of the first data, where the input port is corresponding to the transmit end device; and
configured to determine the switching policy according to the output port and the availability time period.

Optionally, the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by an optical switching device.

Optionally, the optical data packet further includes a tagged frame, the tagged frame is located before the optical data frame and includes a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate a destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame; and
the processor 1220 is specifically configured to: after restoration and adjustment are performed on a burst signal according to the second preamble carried in the first optical signal, acquire the destination address of the first data and the data frame length indicator from the first optical signal according to the destination address start character;
configured to determine an output port of the second optical signal according to the destination address of the first data, where the output port is corresponding to the second Ethernet device;
configured to determine an availability time period of a path between an input port and the output port of the second optical signal according to the data frame length indicator, where the input port is corresponding to the transmit end device; and
configured to determine the switching policy according to the output port and the availability time period.

Optionally, an interval or an idle field exists between the optical data frame and the tagged frame, and a length of the interval or the idle field is greater than or equal to a third preset value.

Optionally, the third preset value is determined according to a third time, and the third time is a time required for determining the switching policy by the optical switching device according to the tagged frame.

Optionally, the first preset value is determined according to a first time, and the first time is a time required for performing restoration and adjustment on a burst signal by the second Ethernet device or a first post-processing device corresponding to the second Ethernet device.

The second preset value is determined according to a second time, and the second time is a time required for performing restoration and adjustment on a burst signal by the optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

In this embodiment of the present invention, the processor may further be referred to as a CPU. The memory may include a read-only memory and a random access memory, and provides an instruction and data for the processor. A part of the memory may further include a nonvolatile random access memory (NVRAM). In specific application, the data transmission device may be built in or the data transmission device itself may be an optical switching device, and modules of the data transmission device are coupled together by using a bus system, where in addition to a data bus, the bus system includes a power bus, a control bus, and a status signal bus.

The processor can implement or execute steps and logical block diagrams disclosed in method embodiments of the present invention. A general-purpose processor may be a microprocessor, or the processor may be any conventional processor, decoder, or the like. Steps of methods disclosed with reference to embodiments of the present invention may be directly executed and completed by a hardware processor, or executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory, and a decoding unit or a processing unit reads information from the memory and completes the steps of the foregoing methods in combination with hardware of the decoding unit or the processing unit.

It should be understood that in this embodiment of the present invention, the processor may be a central processing unit (Central Processing Unit, "CPU" for short), or the processor may be another general-purpose processor, a digital signal processor (DSP), an application-specific integrated circuit (ASIC), a field-programmable gate array (FPGA) or another programmable logical device, a discrete gate or a transistor logic device, a discrete hardware component, or the like. A general-purpose processor may be a microprocessor, or the processor may be any conventional processor or the like.

In an implementation process, the steps of the foregoing methods may be completed by using an integrated logic circuit of hardware in the processor or an instruction in a form of software. Steps of methods disclosed with reference to embodiments of the present invention may be directly executed and completed by a hardware processor, or executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor reads information from the memory and completes the steps of the foregoing methods in combination with hardware of the processor. To avoid repetition, details are not described herein again.

The data transmission device 1200 according to this embodiment of the present invention may be corresponding to an optical switching device in a method in an embodiment of the present invention. In addition, all units, that is, modules in the data transmission device 1200 and the foregoing other operations and/or functions are separately intended to implement corresponding procedures of the method 400 in FIG. 9. For brevity, details are not described herein again.

According to the data transmission device in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

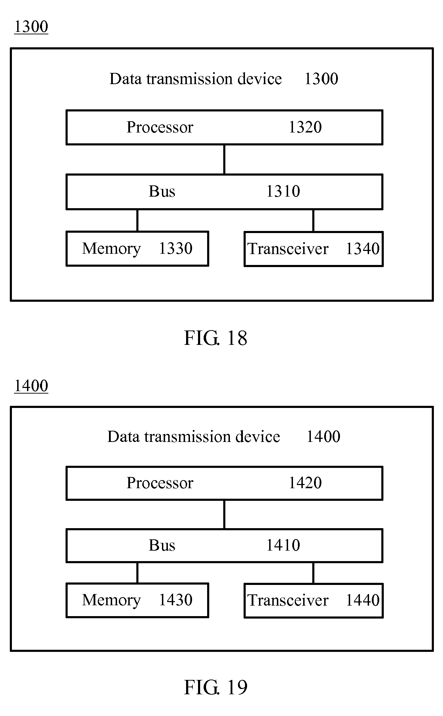

FIG. 18 shows a data transmission device 1300 according to an embodiment of the present invention. As shown in FIG. 18, the device 1300 includes:
a bus 1310;
a processor 1320 connected to the bus 1310;
a memory 1330 connected to the bus 1310; and
a transceiver 1340 connected to the bus 1310.

The processor 1320 invokes, by using the bus 1310, a program stored in the memory 1330, so as to: control the transceiver 1340 to receive an optical data frame sent by an optical switching device, where the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the first data includes a Media Access Control layer MAC data frame or an Internet Protocol IP data packet, the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
after restoration and adjustment are performed on a burst signal according to the first preamble, acquire the second data according to the data start character and the data end character; and
perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

Optionally, the data transmission device is the second Ethernet device.

Optionally, the processor 1320 is further configured to: generate a second Ethernet data packet according to the first data; and
configured to control the transceiver 1340 to send the second Ethernet data packet to the second Ethernet device.

Optionally, the first preset value is determined according to a first time, and the first time is a time required for performing restoration and adjustment on a burst signal by the second Ethernet device or a first post-processing device corresponding to the second Ethernet device; or
the first preset value is determined according to the first time and a second time, and the second time is a time required for performing restoration and adjustment on a burst signal by the optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

In this embodiment of the present invention, the processor may further be referred to as a CPU. The memory may include a read-only memory and a random access memory, and provides an instruction and data for the processor. A part of the memory may further include a nonvolatile random access memory (NVRAM). In specific application, the data transmission device may be built in or the data transmission device itself may be a standard Ethernet communications device such as a personal computer, and modules of the data transmission device are coupled together by using a bus system, where in addition to a data bus, the bus system includes a power bus, a control bus, and a status signal bus.

The processor can implement or execute steps and logical block diagrams disclosed in method embodiments of the present invention. A general-purpose processor may be a microprocessor, or the processor may be any conventional processor, decoder, or the like. Steps of methods disclosed with reference to embodiments of the present invention may be directly executed and completed by a hardware processor, or executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory, and a decoding unit or a processing unit reads information from the memory and completes the steps of the foregoing methods in combination with hardware of the decoding unit or the processing unit.

It should be understood that in this embodiment of the present invention, the processor may be a central processing unit (Central Processing Unit, "CPU" for short), or the processor may be another general-purpose processor, a digital signal processor (DSP), an application-specific integrated circuit (ASIC), a field-programmable gate array (FPGA) or another programmable logical device, a discrete gate or a transistor logic device, a discrete hardware component, or the like. A general-purpose processor may be a microprocessor, or the processor may be any conventional processor or the like.

In an implementation process, the steps of the foregoing methods may be completed by using an integrated logic circuit of hardware in the processor or an instruction in a form of software. Steps of methods disclosed with reference to embodiments of the present invention may be directly executed and completed by a hardware processor, or executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor reads information from the memory and completes the steps of the foregoing methods in combination with hardware of the processor. To avoid repetition, details are not described herein again.

The data transmission device 1300 according to this embodiment of the present invention may be corresponding to a receive end device (a first post-processing device or a second Ethernet device) in a method in an embodiment of the present invention. In addition, all units, that is, modules in the data transmission device 1300 and the foregoing other operations and/or functions are separately intended to implement corresponding procedures of the method 500 in FIG. 10. For brevity, details are not described herein again.

According to the data transmission device in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

FIG. 19 shows a data transmission device 1400 according to an embodiment of the present invention. As shown in FIG. 19, the device 1400 includes:
a bus 1410;
a processor 1420 connected to the bus 1410;
a memory 1430 connected to the bus 1410; and
a transceiver 1440 connected to the bus 1410.

The processor 1420 invokes, by using the bus 1410, a program stored in the memory 1430, so as to: control the transceiver 1440, to receive a first Ethernet data packet to be sent by a first Ethernet device to a second Ethernet device, and acquire first data from the first Ethernet data packet, where the first data includes a Media Access Control layer MAC data frame or an Internet Protocol IP data packet;
perform first scrambling processing on the first data by using a scrambler, so as to generate second data, where the scrambler is in a preset first initial state before starting the first scrambling processing and after completing the first scrambling processing;
generate an optical data frame according to the second data, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
determine an output port of the optical data frame according to a destination address of the first data, where the output port is corresponding to the second Ethernet device;
determine an availability time period of a path between an input port and the output port of the optical data frame according to a length of the optical data frame, where the input port is corresponding to the first Ethernet device;
determine a switching policy according to the output port and the availability time period;
perform switching processing on the optical data frame according to the switching policy;
after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing;
perform first descrambling processing on the second data by using a descrambler, so as to acquire the first data, where the descrambler is in a preset second initial state before starting the first descrambling processing and after completing the first descrambling processing, and the second initial state is corresponding to the first initial state;
generate a second Ethernet data packet according to the first data; and
control the transceiver 1440 to send the second Ethernet data packet to the second Ethernet device.

Optionally, the first preset value is determined according to a time required for performing restoration and adjustment on a burst signal by an optical switching device.

Optionally, the restoration and adjustment on a burst signal include at least one of the following adjustments:
enabling of a laser, restoration of a transimpedance amplifier, restoration of a limiting amplifier, and recovery of a burst-mode clock.

In this embodiment of the present invention, the processor may further be referred to as a CPU. The memory may include a read-only memory and a random access memory, and provides an instruction and data for the processor. A part of the memory may further include a nonvolatile random access memory (NVRAM). In specific application, the data transmission device may be built in or the data transmission device itself may be an optical switching device, and modules of the data transmission device are coupled together by using a bus system, where in addition to a data bus, the bus system includes a power bus, a control bus, and a status signal bus.

The processor can implement or execute steps and logical block diagrams disclosed in method embodiments of the present invention. A general-purpose processor may be a microprocessor, or the processor may be any conventional processor, decoder, or the like. Steps of methods disclosed with reference to embodiments of the present invention may be directly executed and completed by a hardware processor, or executed and completed by using a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory, and a decoding unit or a processing unit reads information from the memory and completes the steps of the foregoing methods in combination with hardware of the decoding unit or the processing unit.

It should be understood that in this embodiment of the present invention, the processor may be a central processing unit (Central Processing Unit, "CPU" for short), or the processor may be another general-purpose processor, a digital signal processor (DSP), an application-specific integrated circuit (ASIC), a field-programmable gate array (FPGA), another programmable logical device, a discrete gate or a transistor logic device, a discrete hardware component, or the like. A general-purpose processor may be a microprocessor, or the processor may be any conventional processor or the like.

In an implementation process, the steps of the foregoing methods may be completed by using an integrated logic circuit of hardware in the processor or an instruction in a form of software. Steps of methods disclosed with reference to embodiments of the present invention may be directly executed and completed by a hardware processor, or executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor reads information from the memory and completes the steps of the foregoing methods in combination with hardware of the processor. To avoid repetition, details are not described herein again.

The data transmission apparatus 1000 according to this embodiment of the present invention may be corresponding to an optical switching device in a method in an embodiment of the present invention. In addition, all units, that is, modules in the data transmission apparatus 1400 and the foregoing other operations and/or functions are separately intended to implement corresponding procedures of the method 600 in FIG. 11. For brevity, details are not described herein again.

According to the data transmission device in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

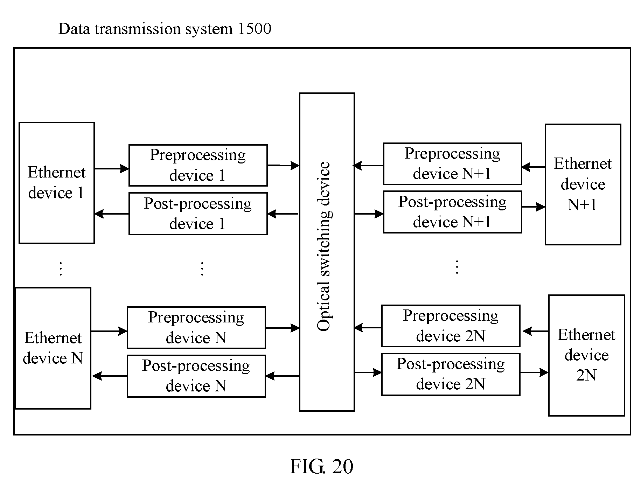

The data transmission methods in the embodiments of the present invention are described in detail in the foregoing with reference to FIG. 1 to FIG. 11, and a data transmission system in an embodiment of the present invention is described in detail in the following with reference to FIG. 20.

FIG. 20 shows a data transmission system 1500 according to an embodiment of the present invention. As shown in FIG. 20, the system 1500 includes:
at least two Ethernet devices;
at least one first preprocessing device corresponding to a first Ethernet device, where the preprocessing device is configured to: acquire first data, where the first data is data to be sent by the first Ethernet device to a second Ethernet device, and the first data includes a Media Access Control layer MAC data frame or an Internet Protocol IP data packet; perform first scrambling processing on the first data by using a scrambler, so as to generate second data; generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and send an optical signal that carries the optical data packet to an optical switching device;
the optical switching device, configured to: receive the optical signal sent by the first preprocessing device; perform beam splitting processing on the optical signal, so as to acquire a first optical signal and a second optical signal; determine a switching policy according to the optical data packet carried in the first optical signal; and perform switching processing on the second optical signal according to the switching policy, so as to send the optical data frame in the second optical signal to the second Ethernet device; and
at least one first post-processing device corresponding to the second Ethernet device, where the first post-processing device is configured to: receive the optical data frame sent by the optical switching device; after restoration and adjustment are performed on a burst signal according to the first preamble, acquire the second data according to the data start character and the data end character; perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generate a second Ethernet data packet according to the first data; and send the second Ethernet data packet to the second Ethernet device.

It should be noted that in this embodiment of the present invention, at least one preprocessing device may be configured for each Ethernet device in the system, and the preprocessing device is used (for the foregoing format conversion) when data is sent in Ethernet. In addition, at least one post-processing device may be configured for each Ethernet device in the system, and the post-processing device is used (for the foregoing format conversion) when data is received in Ethernet. In addition, a preprocessing device and a post-processing device of a same Ethernet device may be independently disposed, or may be integrated into an independent device, and no special limitation is set thereto in the present invention.

According to the data transmission system in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

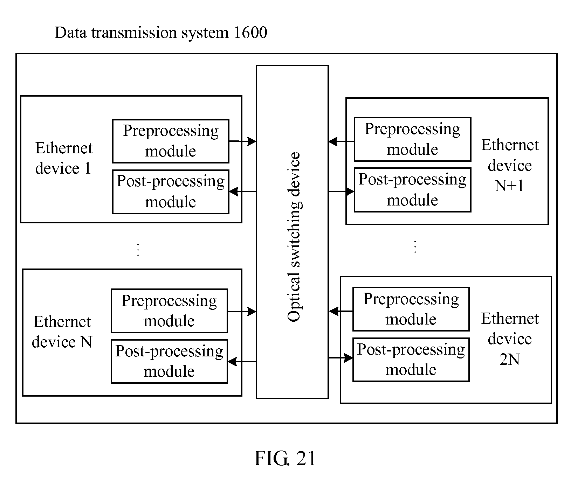

FIG. 21 shows a data transmission system 1600 according to an embodiment of the present invention. As shown in FIG. 21, the system 1600 includes:
at least two Ethernet devices and an optical switching device; where
a first Ethernet device is configured to: determine first data that is to be sent to a second Ethernet device, where the first data includes a Media Access Control layer MAC data frame or an Internet Protocol IP data packet; perform first scrambling processing on the first data by using a scrambler, so as to generate second data; generate, according to the second data, an optical data packet that includes an optical data frame, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and send an optical signal that carries the optical data packet to the optical switching device;
the optical switching device is configured to: receive the optical signal sent by the first Ethernet device; perform beam splitting processing on the optical signal, so as to acquire a first optical signal and a second optical signal; determine a switching policy according to the optical data packet carried in the first optical signal; and perform switching processing on the second optical signal according to the switching policy, so as to send the optical data frame in the second optical signal to the second Ethernet device; and
the second Ethernet device is configured to: receive the optical data frame sent by the optical switching device; after restoration and adjustment are performed on a burst signal according to the first preamble, acquire the second data according to the data start character and the data end character; and perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

It should be noted that in this embodiment of the present invention, for each Ethernet device, at least one preprocessing module (used for the foregoing format conversion) may be configured and used by the Ethernet device to send data, and at least one post-processing module (used for the foregoing format restoration) may also be configured and used by the Ethernet device to receive data.

According to the data transmission system in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

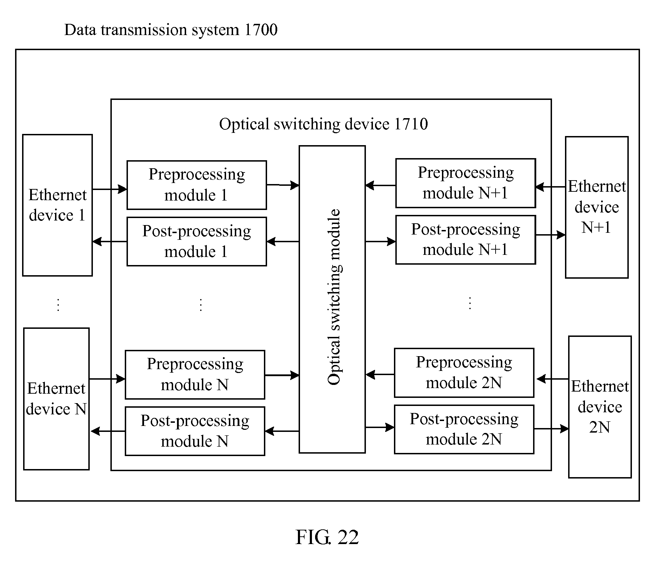

FIG. 22 shows a data transmission system 1700 according to an embodiment of the present invention. As shown in FIG. 22, the system 1700 includes:
at least two Ethernet devices and an optical switching device; where
the optical switching device 1710 is configured to: receive a first Ethernet data packet to be sent by a first Ethernet device to a second Ethernet device; acquire first data from the first Ethernet data packet, where the first data includes a Media Access Control layer MAC data frame or an Internet Protocol IP data packet; perform first scrambling processing on the first data by using a scrambler, so as to generate second data; generate an optical data frame according to the second data, where the optical data frame includes a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; determine an output port of the optical data frame according to a destination address of the first data, where the output port is corresponding to the second Ethernet device; determine an availability time period of a path between an input port and the output port of the optical data frame according to a length of the optical data frame, where the input port is corresponding to the first Ethernet device; determine a switching policy according to the output port and the availability time period; perform switching processing on the optical data frame according to the switching policy; after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing; perform first descrambling processing on the second data by using a descrambler, so as to acquire the first data, where the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generate a second Ethernet data packet according to the first data; and send the second Ethernet data packet to the second Ethernet device.

It should be noted that in this embodiment of the present invention, in the optical switching device, at least one input port and preprocessing module (used for the foregoing format conversion) are configured for each Ethernet device in the system and used by the Ethernet device to send data. In addition, in the optical switching device, at least one output port and post-processing module (used for the foregoing format restoration) are configured for each Ethernet device in the system and used by the Ethernet device to receive data.

According to the data transmission system in this embodiment of the present invention, before optical switching processing is performed, separate scrambling processing is performed on first data that needs to be transmitted, so as to generate second data, and a preamble is added in front of the second data. By using the preamble, an optical switching device and a receive end device can complete restoration and adjustment on a burst signal before the second data arrives. Therefore, it can be avoided that an Ethernet device that can recognize only continuous signals encounters a receiving error when the Ethernet device receives the second data that is used as a burst signal and obtained after switching processing performed by the optical switching device, and it is ensured that a receive end accurately acquires the second data, so that first MAC data that needs to be transmitted can be reliably restored after independent descrambling processing is performed on the second data.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A data transmission method, wherein the method comprises:
acquiring, by a transmit end device, first data, wherein the first data is data to be sent by a first Ethernet device to a second Ethernet device;
performing first scrambling processing on the first data by using a scrambler, so as to generate second data;
generating, according to the second data, an optical data packet that comprises an optical data frame, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and
sending an optical signal that carries the optical data packet to an optical switching device, so that the optical switching device performs switching processing on the optical signal, so as to send the optical data frame to the second Ethernet device.

2. The method according to claim 1, wherein the transmit end device is the first Ethernet device.

3. The method according to claim 1, wherein the transmit end device is a first preprocessing device corresponding to the first Ethernet device; and
the acquiring, by a transmit end device, first data comprises:
receiving, by the first preprocessing device, a first Ethernet data packet to be sent by the first Ethernet device to the second Ethernet device, and acquiring the first data from the first Ethernet data packet.

4. The method according to any one of claims 1 to 3, wherein the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

5. The method according to any one of claims 1 to 3, wherein the first data comprises a destination address; and
the generating, according to the second data, an optical data packet that comprises an optical data frame comprises:
generating, according to the second data and the destination address of the first data, an optical data packet that comprises a tagged frame and an optical data frame, wherein the tagged frame is located before the optical data frame, the tagged frame comprises a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

6. The method according to claim 5, wherein the first preset value is determined according to a first time, and the first time is a time required for performing restoration and adjustment on a burst signal by the second Ethernet device or a first post-processing device corresponding to the second Ethernet device; and
the second preset value is determined according to a second time, and the second time is a time required for performing restoration and adjustment on a burst signal by the optical switching device.

7. The method according to claim 4 or 6, wherein the restoration and adjustment on a burst signal comprise at least one of the following adjustments:
enabling of a laser, restoration of a transimpedance amplifier, restoration of a limiting amplifier, and recovery of a burst-mode clock.

8. The method according to claim 5 or 6, wherein the generating, according to the second data and the destination address of the first data, an optical data packet that comprises a tagged frame and an optical data frame comprises:
generating, according to the second data and the destination address of the first data, the optical data packet that comprises the tagged frame and the optical data frame, wherein an interval or an idle field exists between the optical data frame and the tagged frame, and a length of the interval or the idle field is greater than or equal to a third preset value.

9. The method according to claim 8, wherein the third preset value is determined according to a third time, and the third time is a time required for determining a switching policy by the optical switching device according to the tagged frame.

10. A data transmission method, wherein the method comprises:
receiving, by an optical switching device, an optical signal that is sent by a transmit end device and carries an optical data packet, wherein the optical data packet is generated according to second data, the second data is generated after the transmit end device performs first scrambling processing on first data by using a scrambler, the first data is data to be sent by a first Ethernet device to a second Ethernet device, the first data comprises a Media Access Control layer MAC data frame or an Internet Protocol IP data packet, the optical data packet comprises an optical data frame, the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
performing beam splitting processing on the optical signal, so as to acquire a first optical signal and a second optical signal;
determining a switching policy according to the optical data packet carried in the first optical signal; and
performing switching processing on the second optical signal according to the switching policy, so as to send the optical data frame in the second optical signal to the second Ethernet device.

11. The method according to claim 10, wherein the determining a switching policy according to the optical data packet carried in the first optical signal comprises:
after restoration and adjustment are performed on a burst signal according to the first preamble carried in the first optical signal, acquiring the second data from the first optical signal according to the data start character and the data end character;
performing first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state;
determining an output port of the second optical signal according to a destination address of the first data, wherein the output port is corresponding to the second Ethernet device;
determining an availability time period of a path between an input port and the output port of the second optical signal according to a length of the first data, wherein the input port is corresponding to the transmit end device; and
determining the switching policy according to the output port and the availability time period.

12. The method according to claim 11, wherein the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

13. The method according to claim 10, wherein the optical data packet further comprises a tagged frame, the tagged frame is located before the optical data frame and comprises a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate a destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame; and
the determining a switching policy according to the optical data packet carried in the first optical signal comprises:
after restoration and adjustment are performed on a burst signal according to the second preamble carried in the first optical signal, acquiring the destination address indicator and the optical data frame length indicator from the first optical signal according to the destination address start character;
determining an output port of the second optical signal according to the destination address indicator, wherein the output port is corresponding to the second Ethernet device;
determining an availability time period of a path between an input port and the output port of the second optical signal according to the data frame length indicator, wherein the input port is corresponding to the transmit end device; and
determining the switching policy according to the output port and the availability time period.

14. The method according to claim 13, wherein an interval or an idle field exists between the optical data frame and the tagged frame, and a length of the interval or the idle field is greater than or equal to a third preset value.

15. The method according to claim 14, wherein the third preset value is determined according to a third time, and the third time is a time required for determining the switching policy by the optical switching device according to the tagged frame.

16. The method according to any one of claims 13 to 15, wherein the first preset value is determined according to a first time, and the first time is a time required for performing restoration and adjustment on a burst signal by the second Ethernet device or a first post-processing device corresponding to the second Ethernet device; and
the second preset value is determined according to a second time, and the second time is a time required for performing restoration and adjustment on a burst signal by the optical switching device.

17. The method according to any one of claims 11 to 16, wherein the restoration and adjustment on a burst signal comprise at least one of the following adjustments:
enabling of a laser, restoration of a transimpedance amplifier, restoration of a limiting amplifier, and recovery of a burst-mode clock.

18. A data transmission method, wherein the method comprises:
receiving, by a receive end device, an optical data frame sent by an optical switching device, wherein the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
after restoration and adjustment are performed on a burst signal according to the first preamble, acquiring the second data according to the data start character and the data end character; and
performing first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

19. The method according to claim 18, wherein the receive end device is the second Ethernet device.

20. The method according to claim 18, wherein the receive end device is a first post-processing device corresponding to the second Ethernet device; and
the method further comprises:
generating a second Ethernet data packet according to the first data; and
sending the second Ethernet data packet to the second Ethernet device.

21. The method according to any one of claims 18 to 20, wherein the first preset value is determined according to a first time, and the first time is a time required for performing restoration and adjustment on a burst signal by the second Ethernet device or the first post-processing device corresponding to the second Ethernet device; or
the first preset value is determined according to the first time and a second time, and the second time is a time required for performing restoration and adjustment on a burst signal by the optical switching device.

22. The method according to any one of claims 18 to 21, wherein the restoration and adjustment on a burst signal comprise at least one of the following adjustments:
enabling of a laser, restoration of a transimpedance amplifier, restoration of a limiting amplifier, and recovery of a burst-mode clock.

23. A data transmission method, wherein the method comprises:
receiving, by an optical switching device, a first Ethernet data packet to be sent by a first Ethernet device to a second Ethernet device, and acquiring first data from the first Ethernet data packet;
performing first scrambling processing on the first data by using a scrambler, so as to generate second data;
generating an optical data frame according to the second data, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
determining an output port of the optical data frame according to a destination address of the first data, wherein the output port is corresponding to the second Ethernet device;
determining an availability time period of a path between an input port and the output port of the optical data frame according to a length of the optical data frame, wherein the input port is corresponding to the first Ethernet device;
determining a switching policy according to the output port and the availability time period;
performing switching processing on the optical data frame according to the switching policy;
after restoration and adjustment are performed on a burst signal according to the first preamble of the optical data frame obtained after the switching processing, acquiring, according to the data start character and the data end character of the optical data frame obtained after the switching processing, the second data from the optical data frame obtained after the switching processing;
performing first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state;
generating a second Ethernet data packet according to the first data; and
sending the second Ethernet data packet to the second Ethernet device.

24. The method according to claim 23, wherein the first preset value is determined according to a time required for performing restoration and adjustment on a burst signal by the optical switching device.

25. The method according to claim 23 or 24, wherein the restoration and adjustment on a burst signal comprise at least one of the following adjustments:
enabling of a laser, restoration of a transimpedance amplifier, restoration of a limiting amplifier, and recovery of a burst-mode clock.

26. A data transmission apparatus, wherein the apparatus comprises:
an acquiring unit, configured to acquire first data, wherein the first data is data to be sent by a first Ethernet device to a second Ethernet device, and the first data comprises a Media Access Control layer MAC data frame or an Internet Protocol IP data packet;
a scrambling unit, configured to perform first scrambling processing on the first data by using a scrambler, so as to generate second data;
a generating unit, configured to generate, according to the second data, an optical data packet that comprises an optical data frame, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and
a sending unit, configured to send an optical signal that carries the optical data packet to an optical switching device, so that the optical switching device performs switching processing on the optical signal, so as to send the optical data frame to the second Ethernet device.

27. The apparatus according to claim 26, wherein the data transmission apparatus is the first Ethernet device.

28. The apparatus according to claim 26, wherein the apparatus further comprises:
a receiving unit, configured to receive a first Ethernet data packet that the first Ethernet device needs to send to the second Ethernet device; wherein
the acquiring unit is specifically configured to acquire the first data from the first Ethernet data packet.

29. The apparatus according to any one of claims 26 to 28, wherein the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by the optical switching device.

30. The apparatus according to any one of claims 26 to 28, wherein the first data comprises a destination address, and the generating unit is further configured to generate, according to the second data and the destination address of the first data, an optical data packet that comprises a tagged frame and an optical data frame, wherein the tagged frame is located before the optical data frame, the tagged frame comprises a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate the destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame.

31. The apparatus according to claim 30, wherein the first preset value is determined according to a first time, and the first time is a time required for performing restoration and adjustment on a burst signal by the second Ethernet device or a first post-processing device corresponding to the second Ethernet device; and
the second preset value is determined according to a second time, and the second time is a time required for performing restoration and adjustment on a burst signal by the optical switching device.

32. The apparatus according to claim 29 or 31, wherein the restoration and adjustment on a burst signal comprise at least one of the following adjustments:
enabling of a laser, restoration of a transimpedance amplifier, restoration of a limiting amplifier, and recovery of a burst-mode clock.

33. The apparatus according to claim 30 or 31, wherein the generating unit is specifically configured to generate, according to the second data, the optical data packet that comprises the optical data frame and the tagged frame, wherein an interval or an idle field exists between the optical data frame and the tagged frame, and a length of the interval or the idle field is greater than or equal to a third preset value.

34. The apparatus according to claim 33, wherein the third preset value is determined according to a third time, and the third time is a time required for determining a switching policy by the optical switching device according to the tagged frame.

35. A data transmission apparatus, wherein the apparatus comprises:
a receiving unit, configured to receive an optical signal that is sent by a transmit end device and carries an optical data packet, wherein the optical data packet is generated according to second data, the second data is generated after the transmit end device performs first scrambling processing on first data by using a scrambler, the first data is data to be sent by a first Ethernet device to a second Ethernet device, the first data comprises a Media Access Control layer MAC data frame or an Internet Protocol IP data packet, the optical data packet comprises an optical data frame, the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
a beam splitting unit, configured to perform beam splitting processing on the optical signal, so as to acquire a first optical signal and a second optical signal;
a control unit, configured to determine a switching policy according to the optical data packet carried in the first optical signal; and
a switching unit, configured to perform switching processing on the second optical signal according to the switching policy, so as to send the optical data frame in the second optical signal to the second Ethernet device by using a sending unit.

36. The apparatus according to claim 35, wherein the control unit is specifically configured to: after restoration and adjustment are performed on a burst signal according to the first preamble carried in the first optical signal, acquire the second data from the first optical signal according to the data start character and the data end character;
configured to perform first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state;
configured to determine an output port of the second optical signal according to a destination address of the first data, wherein the output port is corresponding to the second Ethernet device;
configured to determine an availability time period of a path between an input port and the output port of the second optical signal according to a length of the first data, wherein the input port is corresponding to the transmit end device; and
configured to determine the switching policy according to the output port and the availability time period.

37. The apparatus according to claim 36, wherein the first preset value is determined according to a first time and a second time, the first time is a time required for performing restoration and adjustment on a burst signal by the second Ethernet device or a first post-processing device corresponding to the second Ethernet device, and the second time is a time required for performing restoration and adjustment on a burst signal by an optical switching device.

38. The apparatus according to claim 35, wherein the optical data packet further comprises a tagged frame, the tagged frame is located before the optical data frame and comprises a field of a second preamble, a destination address start field, a destination address field, and an optical data frame length field, the field of the second preamble is used to carry the second preamble, a length of the second preamble is greater than or equal to a second preset value, the destination address field is used to carry a destination address indicator, the destination address indicator is used to indicate a destination address of the first data, the destination address start field is used to carry a destination address start character, the destination address start character is used to identify a start of the destination address indicator, the optical data frame length field is used to carry an optical data frame length indicator, and the optical data frame length indicator is used to indicate a length of the optical data frame; and
the control unit is specifically configured to: after restoration and adjustment are performed on a burst signal according to the second preamble carried in the first optical signal, acquire the destination address indicator and the data frame length indicator from the first optical signal according to the destination address start character;
configured to determine an output port of the second optical signal according to the destination address indicator, wherein the output port is corresponding to the second Ethernet device;
configured to determine an availability time period of a path between an input port and the output port of the second optical signal according to the data frame length indicator, wherein the input port is corresponding to the transmit end device; and
configured to determine the switching policy according to the output port and the availability time period.

39. The apparatus according to claim 38, wherein an interval or an idle field exists between the optical data frame and the tagged frame, and a length of the interval or the idle field is greater than or equal to a third preset value.

40. The apparatus according to claim 39, wherein the third preset value is determined according to a third time, and the third time is a time required for determining the switching policy by the optical switching device according to the tagged frame.

41. The apparatus according to any one of claims 38 to 40, wherein the first preset value is determined according to a first time, and the first time is a time required for performing restoration and adjustment on a burst signal by the second Ethernet device or a first post-processing device corresponding to the second Ethernet device; and
the second preset value is determined according to a second time, and the second time is a time required for performing restoration and adjustment on a burst signal by the optical switching device.

42. The apparatus according to any one of claims 35 to 41, wherein the restoration and adjustment on a burst signal comprise at least one of the following adjustments:
enabling of a laser, restoration of a transimpedance amplifier, restoration of a limiting amplifier, and recovery of a burst-mode clock.

43. A data transmission apparatus, wherein the apparatus comprises:
a receiving unit, configured to receive an optical data frame sent by an optical switching device, wherein the optical data frame belongs to an optical data packet acquired by the optical switching device from a transmit end device, the optical data packet is generated by the transmit end device according to second data, the second data is generated after the transmit end device performs first scrambling processing on first data by using a scrambler, the first data is data to be sent by a first Ethernet device to a second Ethernet device, the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
an acquiring unit, configured to: after restoration and adjustment are performed on a burst signal according to the first preamble, acquire the second data according to the data start character and the data end character; and
a descrambling unit, configured to perform first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

44. The apparatus according to claim 43, wherein the data transmission apparatus is the second Ethernet device.

45. The apparatus according to claim 43, wherein the apparatus further comprises:
a generating unit, configured to generate a second Ethernet data packet according to the first data; and
a sending unit, configured to send the second Ethernet data packet to the second Ethernet device.

46. The apparatus according to any one of claims 43 to 45, wherein the first preset value is determined according to a first time, and the first time is a time required for performing restoration and adjustment on a burst signal by the second Ethernet device or a first post-processing device corresponding to the second Ethernet device; or
the first preset value is determined according to the first time and a second time, and the second time is a time required for performing restoration and adjustment on a burst signal by the optical switching device.

47. The apparatus according to any one of claims 43 to 46, wherein the restoration and adjustment on a burst signal comprise at least one of the following adjustments:
enabling of a laser, restoration of a transimpedance amplifier, restoration of a limiting amplifier, and recovery of a burst-mode clock.

48. A data transmission apparatus, wherein the apparatus comprises:
a receiving unit, configured to: receive a first Ethernet data packet to be sent by a first Ethernet device to a second Ethernet device, and acquire first data from the first Ethernet data packet;
a scrambling unit, configured to perform first scrambling processing on the first data by using a scrambler, so as to generate second data;
a first generating unit, configured to generate an optical data frame according to the second data, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data;
a control unit, configured to determine an output port of the optical data frame according to a destination address of the first data, wherein the output port is corresponding to the second Ethernet device;
configured to determine an availability time period of a path between an input port and the output port of the optical data frame according to a length of the optical data frame, wherein the input port is corresponding to the first Ethernet device;
configured to determine a switching policy according to the output port and the availability time period; and
configured to perform switching processing on the optical data frame according to the switching policy;
an acquiring unit, configured to: after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing;
a descrambling unit, configured to perform first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state;
a second generating unit, configured to generate a second Ethernet data packet according to the first data; and
a sending unit, configured to send the second Ethernet data packet to the second Ethernet device.

49. The apparatus according to claim 48, wherein the first preset value is determined according to a time required for performing restoration and adjustment on a burst signal by the optical switching device.

50. The apparatus according to claim 48 or 49, wherein the restoration and adjustment on a burst signal comprise at least one of the following adjustments:
enabling of a laser, restoration of a transimpedance amplifier, restoration of a limiting amplifier, and recovery of a burst-mode clock.

51. A data transmission system, wherein the system comprises:
at least two Ethernet devices;
at least one first preprocessing device corresponding to a first Ethernet device, wherein the first preprocessing device is configured to: acquire first data, wherein the first data is data to be sent by the first Ethernet device to a second Ethernet device; perform first scrambling processing on the first data by using a scrambler, so as to generate second data; generate, according to the second data, an optical data packet that comprises an optical data frame, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and send an optical signal that carries the optical data packet to an optical switching device;
the optical switching device, configured to: receive the optical signal sent by the first preprocessing device; perform beam splitting processing on the optical signal, so as to acquire a first optical signal and a second optical signal; determine a switching policy according to the optical data packet carried in the first optical signal; and perform switching processing on the second optical signal according to the switching policy, so as to send the optical data frame in the second optical signal to the second Ethernet device; and
at least one first post-processing device corresponding to the second Ethernet device, wherein the first post-processing device is configured to: receive the optical data frame sent by the optical switching device; after restoration and adjustment are performed on a burst signal according to the first preamble, acquire the second data according to the data start character and the data end character; perform first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generate a second Ethernet data packet according to the first data; and send the second Ethernet data packet to the second Ethernet device.

52. A data transmission system, wherein the system comprises at least two Ethernet devices and an optical switching device, wherein:
a first Ethernet device is configured to: determine first data that is to be sent to a second Ethernet device; perform first scrambling processing on the first data by using a scrambler, so as to generate second data; generate, according to the second data, an optical data packet that comprises an optical data frame, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; and send an optical signal that carries the optical data packet to the optical switching device;
the optical switching device is configured to: receive the optical signal sent by the first Ethernet device; perform beam splitting processing on the optical signal, so as to acquire a first optical signal and a second optical signal; determine a switching policy according to the optical data packet carried in the first optical signal; and perform switching processing on the second optical signal according to the switching policy, so as to send the optical data frame in the second optical signal to the second Ethernet device; and
the second Ethernet device is configured to: receive the optical data frame sent by the optical switching device; after restoration and adjustment are performed on a burst signal according to the first preamble, acquire the second data according to the data start character and the data end character; and perform first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state.

53. A data transmission system, wherein the system comprises at least two Ethernet devices and an optical switching device, wherein:
the optical switching device is configured to: receive a first Ethernet data packet to be sent by a first Ethernet device to a second Ethernet device; acquire first data from the first Ethernet data packet; perform first scrambling processing on the first data by using a scrambler, so as to generate second data; generate an optical data frame according to the second data, wherein the optical data frame comprises a field of a first preamble, a data start field, a data field, and a data end field, the field of the first preamble is used to carry the first preamble, a length of the first preamble is greater than or equal to a first preset value, the data field is used to carry the second data, the data start field is used to carry a data start character, the data start character is used to identify a start of the second data, the data end field is used to carry a data end character, and the data end character is used to identify an end of the second data; determine an output port of the optical data frame according to a destination address of the first data, wherein the output port is corresponding to the second Ethernet device; determine an availability time period of a path between an input port and the output port of the optical data frame according to a length of the optical data frame, wherein the input port is corresponding to the first Ethernet device; determine a switching policy according to the output port and the availability time period; perform switching processing on the optical data frame according to the switching policy; after restoration and adjustment are performed on a burst signal according to the first preamble of the optical data frame obtained after the switching processing, acquire, according to the data start character and the data end character of the optical data frame obtained after the switching processing, the second data from the optical data frame obtained after the switching processing; perform first descrambling processing on the second data by using a descrambler, so as to acquire the first data, wherein the scrambler is in a preset first initial state before starting the first scrambling processing and after completing the first scrambling processing, the descrambler is in a preset second initial state before starting the first descrambling processing and after completing the first descrambling processing, and the second initial state is corresponding to the first initial state; generate a second Ethernet data packet according to the first data; and send the second Ethernet data packet to the second Ethernet device.
